# EUROPEAN PATENT APPLICATION

(11) **EP 4 517 981 A1**
(43) Date of publication of application: **05.03.2025**
(21) Application number: 23795618.0
(22) Date of filing: 28.04.2023
(51) Int. Cl.: H01M 50/251, H01M 10/613, H01M 10/627, H01M 10/6561

(54) **ENERGY STORAGE CABINET**

(30) Priority: 29.04.2022 CN 202210475139
(71) Applicant: BYD Company Limited, Shenzhen, Guangdong 518118 (CN)
(72) Inventor: ZHOU, Lei, Shenzhen, Guangdong 518118 (CN); ZHOU, Ya, Shenzhen, Guangdong 518118 (CN); HUANG, Zhixue, Shenzhen, Guangdong 518118 (CN); DAI, Xiangjun, Shenzhen, Guangdong 518118 (CN)
(74) Representative: Taor, Simon Edward William
(86) International application number: PCT/CN2023/091546
(87) International publication number: WO 2023/208186

(57) **Abstract**

An energy storage cabinet (200). The energy storage cabinet (200) comprises: a cabinet body (60), a first space (40) and a second space (41) being formed in the cabinet body (60); a plurality of energy storage modules (201), which are arranged in the first space (40) and are stacked in a first direction of the energy storage cabinet (200), the first space (40) and the second space (41) being arranged side by side in a second direction perpendicular to the first direction; and a control unit (1000), which is arranged in the second space (41) and is electrically connected to the energy storage modules (201).

## Description

### CROSS-REFERENCE TO RELATED APPLICATIONS

The present disclosure claims priority to Chinese Patent Application No. 202210475139.6 filed on April 29, 2022, which is incorporated herein by reference in its entirety.

### FIELD

The present disclosure relates to the field of energy storage cabinet, and particularly to an energy storage cabinet.

### BACKGROUND

In related technology, a space is defined in the existing energy storage cabinet for installing energy storage modules and control unit. However, interference can easily occur between the energy storage modules and the control unit, and the assembly of components in the energy storage cabinet is not compact, leading to a larger volume of the energy storage cabinet.

### SUMMARY

The present disclosure is intended to resolve one of technical problems in the related art at least to some extent. Therefore, an object of the present disclosure is to provide an energy storage cabinet. The energy storage cabinet can separate the control unit and the energy storage modules, avoiding interference between the control unit and the energy storage modules. In addition, it also enables the control unit and multiple energy storage modules to be assembled compactly, which is conducive to reducing the volume of the energy storage cabinet.

The energy storage cabinet according to the present disclosure, including: a cabinet, which includes a cabinet body and an opening and closing door, the cabinet body defines an installation cavity with one end open, inside the installation cavity, a first space and a second space are formed, the opening and closing door is used for opening or closing the installation cavity; multiple energy storage modules are arranged within the first space and stacked in a first direction of the energy storage cabinet, the first space and the second space are arranged side by side in a second direction perpendicular to the first direction; a control unit, which is arranged within the second space and is electrically connected to the energy storage modules.

The energy storage cabinet according to the present disclosure, by separately arranging the control unit and the energy storage modules in different spaces, the control unit and the energy storage modules can be separated, preventing interference between them. Additionally, it enables a compact assembly of the control unit and multiple energy storage modules, contributing to reducing the volume of the energy storage cabinet.

In some embodiments of the present disclosure, the energy storage cabinet is equipped with a control switch located within the cabinet and communicatively connected to the control unit. When the opening and closing door is opened, the control switch is triggered to cause the control unit to shut down the energy storage cabinet.

In some embodiments of the present disclosure, the energy storage cabinet further including: a smoke detection device, which is installed inside the cabinet and communicates with the control unit. When the smoke detection device detects smoke, the control unit is used for shutting down the energy storage cabinet.

In some embodiments of the present disclosure, the energy storage cabinet further including: an emergency stop switch, which communicates with the control unit. When the emergency stop switch is triggered, the control unit is used for shutting down the energy storage cabinet.

In some embodiments of the present disclosure, the energy storage cabinet further including: an audible and visual alarm device, which is installed on the exterior of the cabinet and communicates with the control unit. The control unit is used for controlling the audible and visual alarm device to issue alarm information.

In some embodiments of the present disclosure, the inner surface of the cabinet is affixed with thermal insulation cotton.

In some embodiments of the present disclosure, the energy storage cabinet further including: caster wheels, which are installed at the lower end of the cabinet.

In some embodiments of the present disclosure, the second space is suitable for guiding air into the first space.

In some embodiments of the present disclosure, the first space and the second space are connected.

In some embodiments of the present disclosure, the energy storage cabinet is provided with a first connecting hole, which connects the first space and the second space.

In some embodiments of the present disclosure, there are a plurality of first connecting holes arranged along the first direction, and each energy storage module corresponds to at least one first connecting hole.

In some embodiments of the present disclosure, a third space is formed within the first space, and the third space communicates with the second space through the first connecting holes. Additionally, the third space has a second connecting hole that is connected to the first space, and the air in the second space is suitable for flowing into the first space through the third space.

In some embodiments of the present disclosure, there are a plurality of second connecting holes arranged along the first direction, and each second connecting hole corresponds to one of the first connecting holes.

In some embodiments of the present disclosure, a plurality of sub-spaces are formed within the third space. a plurality of sub-spaces, a plurality of first connecting holes, and a plurality of second connecting holes correspond one-to-one. Each sub-space is connected to its corresponding first connecting hole and second connecting hole.

In some embodiments of the present disclosure, the number of the second connecting holes is one and this one second connecting hole is located near the middle of the third space along the first direction.

In some embodiments of the present disclosure, a first channel is formed within the installation cavity. The first channel and the first space are arranged along the first direction, and the first channel is connected to the first space and/or the third space.

In some embodiments of the present disclosure, the energy storage cabinet further including: an air conditioner installed within the cabinet. The air conditioner has an air outlet and an air inlet, the air outlet is connected to the second space and/or the first channel, and the air inlet is connected to the first space.

In some embodiments of the present disclosure, the cabinet body forms a first opening connected to the first space, and the first opening is positioned opposite to the air inlet. The cabinet body also forms a second opening connected to the second space, and the second opening is positioned opposite to the air outlet. The first and second openings are separated by a spacer.

In some embodiments of the present disclosure, the energy storage cabinet further including: a positive power line and a negative power line. One end of the positive power line is connected to the control unit, and the other end is suitable for plugging into the connection terminal of the energy storage module;
one end of the negative power line is connected to the control unit, and the other end is suitable for plugging into the connection terminal of the energy storage module.

**In** some embodiments of the present disclosure, the energy storage module including: an energy storage unit, which includes multiple battery cells arranged sequentially along the thickness direction of the battery cells. At least two adjacent battery cells form a first air duct extending in a third direction that is orthogonal to both the first and second directions. The first air duct is connected to the first space.

**In** some embodiments of the present disclosure, the energy storage module further including:
a first side plate and a second side plate, the energy storage unit is provided between the first side plate and the second side plate;
a support beam, the support beam extends along the thickness direction of the battery cells and connects the first side plate and the second side plate so as to enable the first side plate and the second side plate to clamp the energy storage unit. The support beam is arranged on at least one side of the energy storage unit in the width direction of the battery cells.

**In** some embodiments of the present disclosure, the energy storage module further including: a top cover and a bottom cover, both of which are connected to the first and second side plates. The energy storage unit is located between the top cover and the bottom cover. A second air duct is formed between the top cover and the energy storage unit and/or between the bottom cover and the energy storage unit through the separation effect of the support beam. The second air duct is connected to the first space.

In some embodiments of the present disclosure, the support beam is in contact with the surface of the energy storage unit close to the top cover and the top cover, and/or the support beam is in contact with the surface of the energy storage unit close to the bottom cover and the bottom cover, so as to divide the second air duct into a plurality of sub-air ducts, and the support beam has an air passage connecting two adjacent sub-air ducts.

In some embodiments of the present disclosure, the energy storage module is provided with an air supply hole, which connects the first space and the second air duct.

In some embodiments of the present disclosure, the energy storage module further including: a heat sink, which defines the first air duct, multiple battery cells form multiple battery cell groups, each battery cell group includes at least one battery cell, and the heat sink is disposed between two adjacent battery cell groups.

In some embodiments of the present disclosure, the energy storage module further including: a driving fan, which is located at one end of the energy storage unit and spaced apart from the energy storage unit in the length direction of the battery cell, and the driving fan is used for driving air to flow along the first air duct in the first air duct.

In some embodiments of the present disclosure, the energy storage module further including: a temperature detection component, which is used for detecting the temperature of the energy storage module, both the driving fan and the temperature detection component are suitable for connecting to a battery management system of the energy storage module. The battery management system is used for controlling the operating mode of the driving fan by receiving the temperature information detected by the temperature detection component.

In some embodiments of the present disclosure, the energy storage module further including: a heat dissipation end plate, on which the driving fan is mounted. The heat dissipation end plate is fixedly connected to the first side plate and/or the second side plate.

**In** some embodiments of the present disclosure, the heat dissipation end plate is provided with a positive connection terminal and a negative connection terminal. The positive connection terminal is connected to the total positive output pole of the energy storage unit, and the negative connection terminal is connected to the total negative output pole of the energy storage unit. In the second direction, the positive connection terminal and the negative connection terminal are arranged close to the same side of the heat dissipation end plate.

**In** some embodiments of the present disclosure, the heat dissipating end plate defines a mounting groove, and the positive connection terminal and the negative connection terminal are both located in the mounting groove;
the heat dissipating end plate further defines a fool-proof slot, which communicates with the mounting groove, the fool-proof slot is used for wiring;
the heat dissipating end plate further defines a wiring slot, which communicates with the mounting groove, and the fool-proof slot and the wiring slot are located on two sides of the mounting groove respectively.

**In** some embodiments of the present disclosure, the energy storage module further including: a ventilation panel, which is located on the side of the driving fan away from the energy storage unit, and the ventilation panel is provided with air outlet holes.

**In** some embodiments of the present disclosure, the ventilation panel includes a panel frame and a ventilation grille fixed to the panel frame. The ventilation grille includes multiple air guide grilles arranged at intervals, two ends of each air guide grille are fixed to the panel frame, and the air outlet holes are formed between two adjacent air guide grilles.

In some embodiments of the present disclosure, the perforation ratio α of the ventilation grille satisfies the following formula: α ≥ (µV/v)/S1, where µ is 0.9, V is the exhaust air volume per unit time when the driving fan runs at full power, v is the maximum air speed of the driving fan, and S1 is the effective air outlet area of the driving fan.

In some embodiments of the present disclosure, the energy storage module further including: an end plate, which is disposed at the other end of the energy storage unit and spaced apart from the energy storage unit, the end plate is connected to the top cover and/or the bottom cover;
the end plate is provided with a first air inlet hole communicating with the first air duct.

In some embodiments of the present disclosure, the length dimension of the battery cell is E, satisfying the relationship: 400mm≤E≤1500mm;
the width dimension of the battery cell is F, satisfying the relationship: 70mm≤F≤150mm;
the thickness dimension of the battery cell is G, satisfying the relationship: 10mm≤G≤25mm.

In some embodiments of the present disclosure, the energy storage cabinet further including: an electrical connection assembly, which is used for electrically connecting two the energy storage modules, and the electrical connection assembly is plugged into the energy storage modules.

In some embodiments of the present disclosure, the heat dissipation end plate is provided with a first mounting portion, and the ventilation panel shields the driving fan. The ventilation panel is provided with a second mounting portion that corresponds and connects to the first mounting portion.

In some embodiments of the present disclosure, the energy storage module further including:
an information collector, which includes an integrated output terminal, a signal input terminal, and a power supply input terminal. The integrated output terminal is connected to both the signal input terminal and the power supply input terminal. The driving fan is connected to the integrated output terminal, and the information collector supplies power and provides control signals to the driving fan through the integrated output terminal;
a high-voltage power distribution box, which includes a signal lead-out terminal and a power supply lead-out terminal. The signal lead-out terminal is connected to the signal input terminal, and the high-voltage power distribution box provides control signals to the signal input terminal through the signal lead-out terminal. The power supply lead-out terminal is connected to the power supply input terminal, and the high-voltage power distribution box supplies power to the power supply input terminal through the power supply lead-out terminal.

In some embodiments of the present disclosure, the information collector of each energy storage module is aligned in a first direction, and the power supply input terminals of multiple energy storage modules are connected to the power supply lead-out terminals via a first external power supply line.

In some embodiments of the present disclosure, the first external power supply line includes multiple power supply branches, the number of which corresponds to the number of energy storage modules. Each power supply branch includes a branch main-line and a branch subline connected in parallel with the branch main-line, the branch main-lines of multiple power supply branches are connected in sequence, the branch sub-lines of multiple power supply branches are respectively connected to corresponding power supply input terminals.

The additional aspects and advantages of the present disclosure are partially provided in the following descriptions, some of which will become apparent from the following descriptions or may be learned from practices of the present disclosure.

### BRIEF DESCRIPTION OF THE DRAWINGS

FIG. 1 is an exploded view of an energy storage module according to an embodiment of the present disclosure;
FIG. 2 is a schematic diagram of the internal structure of an energy storage module according to an embodiment of the present disclosure;
FIG. 3 is a schematic diagram of an energy storage module according to an embodiment of the present disclosure;
FIG. 4 is a schematic diagram of an energy storage module without a ventilation panel according to an embodiment of the present disclosure;
FIG. 5 is a schematic assembly diagram of the battery cells and side plates of the energy storage module according to an embodiment of the present disclosure;
FIG. 6 is a schematic diagram of the relative positions of the driving fan and the heat sink of the energy storage module according to an embodiment of the present disclosure;
FIG. 7 is a schematic assembly diagram of the battery cells and the heat sink of the energy storage module according to an embodiment of the present disclosure;
FIG. 8 is an enlarged view of M in FIG. 7;
FIG. 9 is a side view of the heat sink of the energy storage module according to an embodiment of the present disclosure;
FIG. 10 is a front view of the heat sink of the energy storage module according to an embodiment of the present disclosure;
FIG. 11 is a schematic diagram of a battery cell of an energy storage module according to an embodiment of the present disclosure;
FIG. 12 is a schematic assembly diagram of the heat dissipating end plate and the driving fan according to an embodiment of the present disclosure;
FIG. 13 is a schematic diagram from another angle after assembly of the heat dissipating end plate and the driving fan according to an embodiment of the present disclosure;
FIG. 14 is a schematic diagram of the second side plate and the fixing bracket according to an embodiment of the present disclosure;
FIG. 15 is a schematic assembly diagram of the second side plate and the fixing plate according to an embodiment of the present disclosure;
FIG. 16 is a schematic diagram of a top cover according to an embodiment of the present disclosure;
FIG. 17 is a front view of a support beam according to an embodiment of the present disclosure;
FIG. 18 is a top view of a support beam according to an embodiment of the present disclosure;
FIG. 19 is a schematic assembly diagram of the battery cells and connecting piece according to an embodiment of the present disclosure;
FIG. 20 is a schematic assembly diagram of the connecting piece and the busbar mounting rack according to an embodiment of the present disclosure;
FIG. 21 is partial enlarged view of the assembly of the connecting piece and the busbar mounting rack according to an embodiment of the present disclosure;
FIG. 22 is schematic assembly diagram of the heat dissipating end plate, driving fan and information collector according to an embodiment of the present disclosure;
FIG. 23 is a schematic assembly diagram of the electrical connection assembly and connection terminals according to an embodiment of the present disclosure;
FIG. 24 is another angle schematic diagram of the assembly of the electrical connection assembly and connection terminals according to an embodiment of the present disclosure;
FIG. 25 is a cross-sectional view at A-A in FIG. 2.
FIG. 26 is an exploded view of the conductive bar and connection terminals according to an embodiment of the present disclosure;
FIG. 27 is a schematic assembly diagram of the conductive bar and connection terminals according to an embodiment of the present disclosure;
FIG. 28 is an exploded view of the conductive bar and the insulating cover according to an embodiment of the present disclosure;
FIG. 29 is a schematic assembly diagram of the conductive bar and the insulating cover according to an embodiment of the present disclosure;
FIG. 30 is an exploded view of the electrical connection assembly and the connection terminals on the energy storage module according to an embodiment of the present disclosure;
FIG. 31 is a schematic assembly diagram of electrical connection assembly and the connection terminals on the energy storage module according to an embodiment of the present disclosure;
FIG. 32 is a schematic diagram of a ventilation panel according to an embodiment of the present disclosure.
FIG. 33 is a schematic diagram of the energy storage cabinet according to an embodiment of the present disclosure;
FIG. 34 is a cross-sectional view of the energy storage cabinet according to an embodiment of the present disclosure;
FIG. 35 is a schematic diagram of the internal structure of the energy storage cabinet according to an embodiment of the present disclosure;
FIG. 36 is a schematic diagram of the energy storage cabinet without the energy storage module according to an embodiment of the present disclosure;
FIG. 37 is an exploded view of FIG. 3;
FIG. 38 is a partially enlarged view of the ventilation panel in FIG. 32;
FIG. 39 is a front view of the ventilation panel according to an embodiment of the present disclosure;
FIG. 40 is a bottom view of the ventilation panel according to an embodiment of the present disclosure;
FIG. 41 is a partially enlarged view of FIG. 40;
FIG. 42 is a bottom view of the ventilation panel according to another embodiment of the present disclosure;
FIG. 43 is an enlarged view of a partial structure of FIG. 42;
FIG. 44 is a front view of the ventilation panel according to another embodiment of the present disclosure;
FIG. 45 is a front view of the ventilation panel according to another embodiment of the present disclosure;
FIG. 46 is a front view of the ventilation panel according to another embodiment of the present disclosure;
FIG. 47 is an enlarged view of the ventilation panel at the second mounting portion according to the embodiment of the present disclosure;
FIG. 48 is an enlarged view of the heat dissipation end plate at the first mounting portion according to the embodiment of the present disclosure;
FIG. 49 is a schematic diagram of the energy storage cabinet according to an embodiment of the present disclosure;
FIG. 50 is a schematic diagram of the driving fan and the information collector according to an embodiment of the present disclosure;
FIG. 51 is a schematic diagram of the connection of information collectors between two adjacent energy storage modules according to an embodiment of the present disclosure;
FIG. 52 is a schematic diagram of the connection of information collectors between two adjacent energy storage modules according to another embodiment of the present disclosure;
FIG. 53 is a schematic assembly diagram of the energy storage module, control unit, positive power line and negative power line according to an embodiment of the present disclosure;
FIG. 54 is a schematic diagram of the energy storage cabinet filled with energy storage modules according to an embodiment of the present disclosure.

### DETAILED DESCRIPTION

The embodiments of the present disclosure are described below in detail. Examples of the embodiments are shown in the accompanying drawings, and same or similar reference signs in all the accompanying drawings indicate same or similar components or components having same or similar functions. The embodiments described below with reference to the accompanying drawings are exemplary, are intended to explain the present disclosure and cannot be construed as a limitation on the present disclosure.

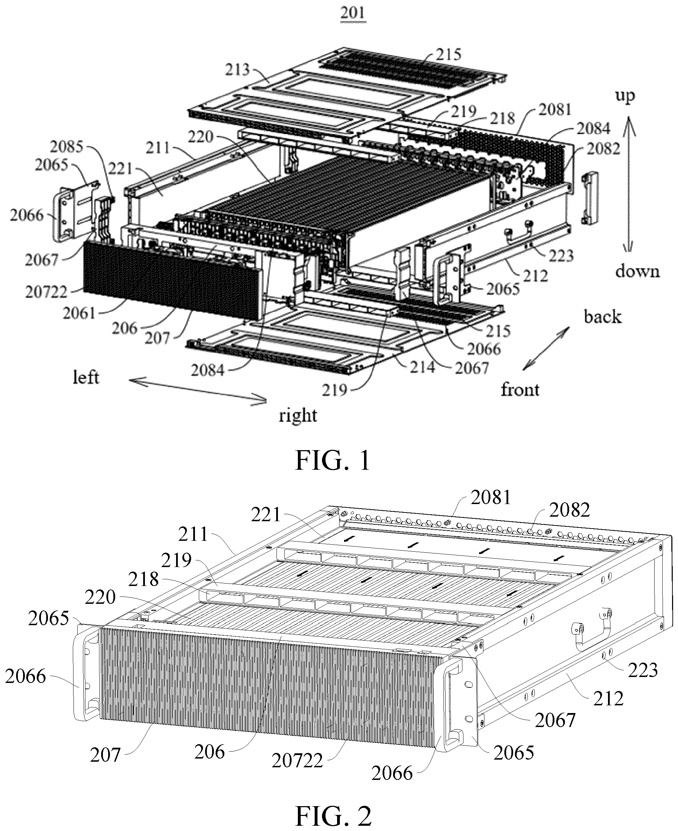

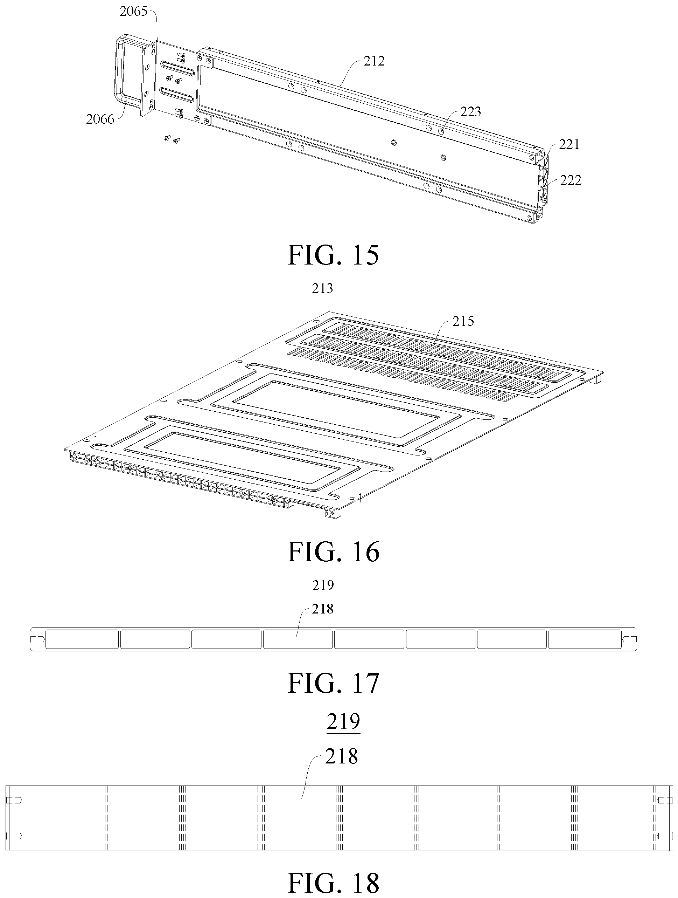

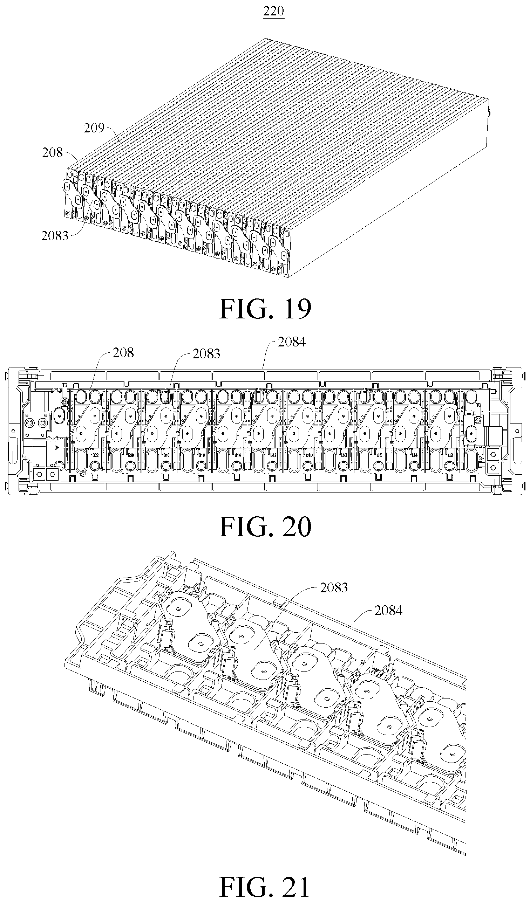

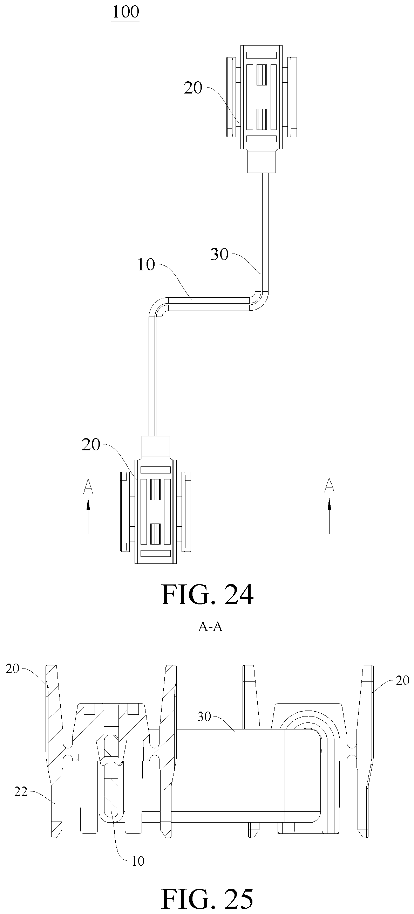

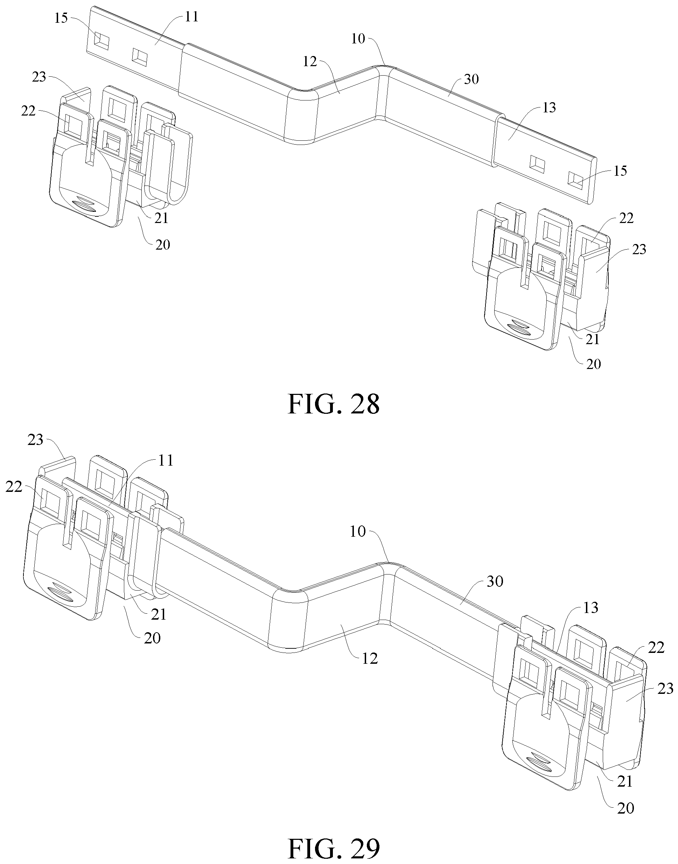

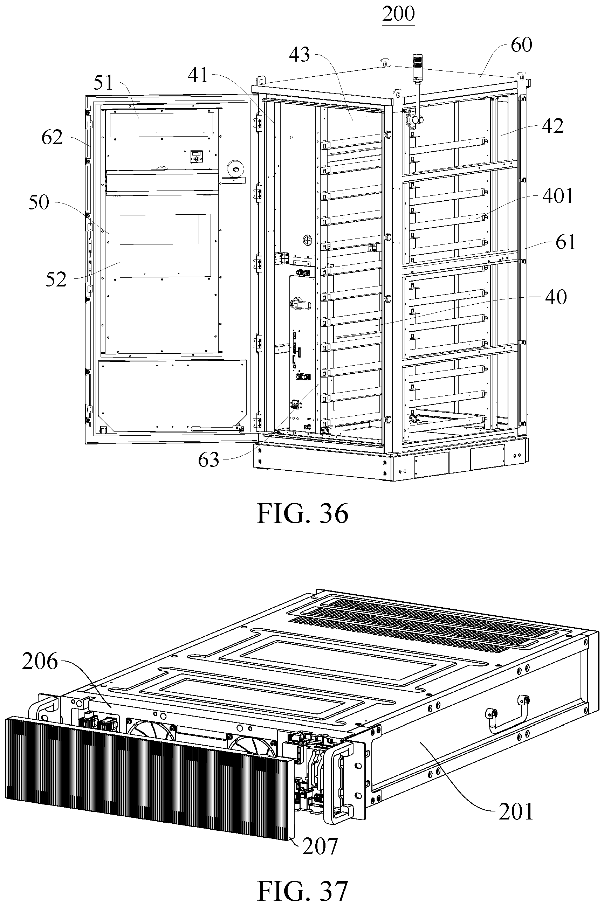

The following is a description of the energy storage cabinet 200 according to the embodiment of the present disclosure with reference to FIG.1 to FIG.54. The energy storage cabinet 200 can supply power to other electrical equipment. The energy storage module 201 can be installed inside the energy storage cabinet to supply power to other electrical equipment.

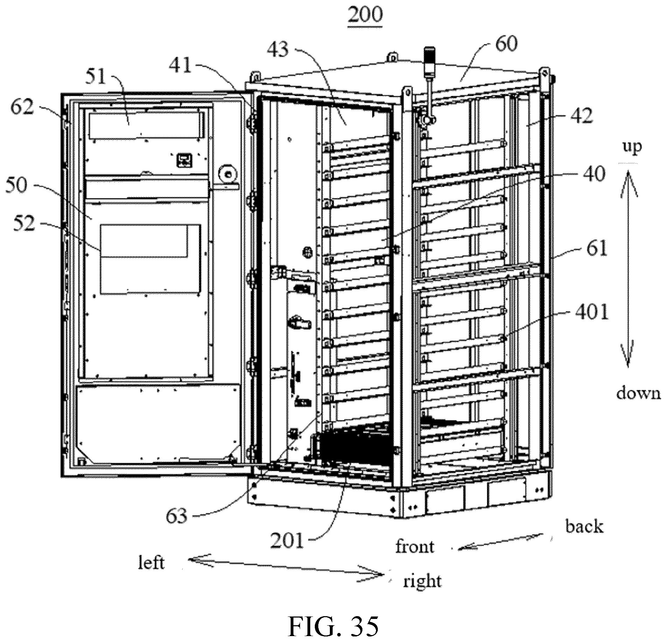

As shown in FIG.1 to FIG.52, the energy storage cabinet 200 according to the embodiment of the present disclosure, including: a control unit 1000, a cabinet 60 and a plurality of energy storage modules 201. The multiple energy storage modules 201 are installed inside the cabinet 60 and are stacked in a first direction of the energy storage cabinet 200, when the energy storage cabinet 200 is placed in the direction shown in FIG. 35, the first direction of the energy storage cabinet 200 refers to the vertical direction of the energy storage cabinet 200, that is, multiple energy storage modules 201 are stacked vertically in the energy storage cabinet 200. A first space 40 and a second space 41 are formed in the cabinet 60, the first space 40 and the second space 41 are arranged side by side in a second direction perpendicular to the first direction, it can also be understood that the first space 40 and the second space 41 are arranged side by side in the second direction of the energy storage cabinet 200, and the first space 40 and the second space 41 can be arranged adjacent to each other, that is, the first space 40 and the second space 41 are arranged adjacently. When the energy storage cabinet 200 is placed in the direction shown in FIG. 35, the second direction of the energy storage cabinet 200 may refer to the left-right direction of the energy storage cabinet 200. The first space 40 is used for installing the energy storage modules 201, and the multiple energy storage modules 201 are installed in the first space 40, that is, the energy storage module 201 is located in the first space 40. The control unit 1000 is installed in the second space 41, and the control unit 1000 is electrically connected to the energy storage module 201. The control unit 1000 can control the energy storage module 201 to deliver electrical energy to external devices.

By arranging the control unit 1000 and the energy storage module 201 respectively in different spaces, that is, the control unit 1000 is arranged in the second space 41 and the energy storage module 201 is arranged in the first space 40, the control unit 1000 and the energy storage module 201 can be separated, avoiding interference between them. Additionally, this arrangement allows for a compact assembly of the control unit 1000 and multiple energy storage modules 201, contributing to a reduction in the overall volume of the energy storage cabinet 200.

In some embodiments of the present disclosure, the first space 40 and the second space 40 are connected, and the second space 41 is suitable for guiding air into the first space 40. By arranging the first space 40 and the second space 41 side-by-side in the second direction of the energy storage cabinet 200, the air is guided into the first space 40 along the second space 41 by the second space 41, allowing the air to flow into the first space 40 from the side. After the air enters the first space 40, the air flowing into the first space 40 is evenly distributed to each energy storage module 201, ensuring that each energy storage module 201 receives the same or nearly the same amount of the air intake. This improves the consistency of the heat dissipation efficiency among the multiple energy storage modules 201, ensuring uniform heat dissipation of multiple energy storage modules 201 and enhancing the heat dissipation efficiency of the energy storage modules 201. This further guarantees the heat dissipation effect of each energy storage module 201, equalizes the temperatures of multiple energy storage modules 201, and more effectively prevents the occurrence of thermal runaway in the energy storage modules 201, thus enhancing the operational safety of the energy storage cabinet 200.

In some embodiments of the present disclosure, as shown in FIG. 35, multiple module mounting racks 401 are provided within the first space 40 and multiple module mounting racks 401 are spaced apart sequentially in the first direction. Multiple energy storage modules 201 are respectively installed on multiple module mounting racks 401, where each module mounting rack 401 corresponds to one energy storage module 201. One energy storage module 201 is installed on each module mounting rack 401, and the module mounting rack 401 reliably supports the energy storage module 201, ensuring that energy storage module 201 is securely installed within the first space 40.

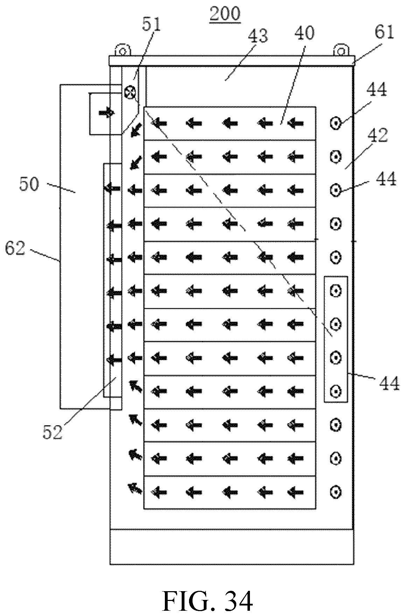

In some embodiments of the present disclosure, as shown in FIG. 34 and FIG. 35, a third space 42 is formed within the cabinet 60, the third space 42 communicates with both the first space 40 and the second space 41. Furthermore, the third space 42, the first space 40 and the second space 41 are all arranged to extend in a first direction of the energy storage cabinet 200. The air in the second space 41 is suitable for flowing into the first space 40 through the third space 42. After entering the second space 41, the air is guided into the third space 42 along the second space 41, and flows into the third space 42 from the side of the third space 42. After the air flows into the third space 42, it enables the air flowing into the third space 42 to be evenly distributed to each energy storage module 201, ensuring that each energy storage module 201 receives the same or nearly the same amount of the air intake, achieving a balanced air intake effect. This further improves the consistency of heat dissipation efficiency among the multiple energy storage modules 201, ensuring more uniform heat dissipation across these energy storage modules 201. This further guarantees the heat dissipation effect of each energy storage module 201, further equalizes the temperatures of multiple energy storage modules 201, and more effectively prevents the occurrence of thermal runaway in the energy storage modules 201, thus further enhancing the operational safety of the energy storage cabinet 200.

In some embodiments of the present disclosure, as shown in FIG. 34 and FIG. 35, in a second direction of the energy storage cabinet 200, the first space 40 and the third space 42 are located on the same side of the second space 41, and the third space 42 is adjacent to both the second space 41 and the first space 40. When the energy storage cabinet 200 is placed in the direction shown in FIG. 35, the first space 40 and the third space 42 can be arranged on the left or right side of the second space 41. The present disclosure uses the arrangement where the first space 40 and the third space 42 are arranged on the right side of the second space 41 as an example. Furthermore, in the third direction of the energy storage cabinet 200, when the energy storage cabinet 200 is placed in the direction shown in FIG. 35, the third direction refers to the front-back direction of the energy storage cabinet200, the third space 42 is positioned behind the first space 40, specifically, the left side of the third space 42 communicates with the second space 41, while the front end of the third space 42 communicates with the first space 40. After air flows into the second space 41, it flows towards the rear end of the second space 41. Upon reaching the third space 42, the air enters the third space 42 from its left side. The air in the third space 42 then flows from the front end of the third space 42 into the first space 40 to cool the energy storage modules 201, achieving a heat dissipation effect on the energy storage modules 201.

In some embodiments of the present disclosure, the energy storage cabinet 200 is equipped with a first connecting hole 44, which connects the first space 40 and the second space 41. The first connecting hole 44 may be one or multiple. After air enters the second space 41, the air in the second space 41 flows through the first connecting hole 44 into the first space 40 to exchange heat with the energy storage modules 201, preventing the occurrence of thermal runaway in the energy storage modules 201, thus further enhancing the operational safety of the energy storage cabinet 200.

In some embodiments of the present disclosure, the first connecting holes 44 are multiple in number and arranged along the first direction, and furthermore, they are spaced apart sequentially along this direction. Each energy storage module 201 corresponds to at least one first connecting hole 44. The air within the second space 41 flows into the first space 40 through these a plurality of first connecting holes 44, enabling a more even distribution of the air flowing into the first space 40 to each energy storage module 201. This ensures that each energy storage module 201 receives the same or approximately the same amount of air intake, achieving a balanced air intake effect. Consequently, it further enhances the consistency of heat dissipation efficiency among multiple energy storage modules 201, ensuring more uniform heat dissipation of multiple energy storage modules 201. This further guarantees the heat dissipation effect of each energy storage module 201, promotes temperature balance among the modules, and more effectively prevents the occurrence of thermal runaway in the energy storage module 201, thus further enhancing the operational safety of the energy storage cabinet 200.

In some embodiments of the present disclosure, as shown in FIG. 34 and FIG. 35, inside the cabinet 60, a third space 42 is formed within the first space 40. The third space 42 is connected to the second space 41 through a first connecting hole 44, the first connecting hole 44 may be singular or multiple. For example, there are a plurality of first connecting holes 44, all of the plurality of first connecting holes 44 connect the third space 42 and the second space 41. In other words, the third space 42 and the second space 41 are connected through these a plurality of first connecting holes 44, and a plurality of first connecting holes 44 are arranged along a first direction. Additionally, the third space 42 has a second connecting hole that communicates with the first space 40. The air in the second space 41 is suitable for flowing into the first space 40 through the third space 42, and the second connecting hole may be singular or multiple. Furthermore, a plurality of first connecting holes 44 are arranged sequentially and spaced apart along the first direction, and at least one first connecting hole 44 is correspondingly provided at the height corresponding to each energy storage module 201 in the first direction of the energy storage cabinet 200, for example, there are a plurality of second connecting holes, after air enters the second space 41, the air in the second space 41 flows through a plurality of first connecting holes 44 into the third space 42, the air flows into the third space 42 from the side of the second space 41. After the air flows into the third space 42 through a plurality of first connecting holes 44, the air in the third space 42 flows into the first space 40 through the second connecting hole, enabling a more even distribution of the air flowing into the first space 40 to each energy storage module 201. This ensures that each energy storage module 201 receives the same or approximately the same amount of air intake, achieving a balanced air intake effect. Consequently, it further enhances the consistency of heat dissipation efficiency among multiple energy storage modules 201, ensuring more uniform heat dissipation of multiple energy storage modules 201. This further guarantees the heat dissipation effect of each energy storage module 201, promotes temperature balance among the modules, and more effectively prevents the occurrence of thermal runaway in the energy storage modules 201, thus further enhancing the operational safety of the energy storage cabinet 200.

Furthermore, there are a plurality of second connecting holes, the plurality of second connecting holes are arranged along the first direction. Further, these a plurality of second connecting holes are spaced sequentially along the first direction, and each of the plurality of first connecting holes 44 corresponds to one of the plurality of second connecting holes. After the air flows simultaneously through the plurality of first connecting holes 44 into the third space 42, the air in the third space 42 flows through the plurality of second connecting holes into the first space 40. This enables the air flowing into the third space 42 to be more evenly distributed to each energy storage module 201, ensuring that each energy storage module 201 receives the same or nearly the same amount of air intake. This better achieves a balanced air intake effect, thereby further improving the consistency of heat dissipation efficiency among multiple energy storage modules 201, ensuring more uniform heat dissipation of multiple energy storage modules 201.

Furthermore, a plurality of sub-spaces are formed within the third space 42, furthermore, the third space 42 has multiple partition plates, multiple partition plates are sequentially spaced apart in the first direction to divide the third space 42 into a plurality of sub-spaces. a plurality of sub-spaces, a plurality of first connecting holes 44 and a plurality of second connecting holes are arranged in a one-to-one correspondence. The sub-spaces communicate with its corresponding first connecting hole 44 and second connecting hole. After the air flows simultaneously into the third space 42 through a plurality of first connecting holes 44, the air entering through each first connecting hole 44 flows into its corresponding subspace. The air in each subspace then flows through the corresponding second connecting hole to the corresponding energy storage module 201. This enables the air flowing into the third space 42 to be more evenly distributed to each energy storage module 201, ensuring that each energy storage module 201 receives the same or nearly the same amount of air intake. This better achieves a balanced air intake effect, thereby further improving the consistency of heat dissipation efficiency among multiple energy storage modules 201, ensuring more uniform heat dissipation of multiple energy storage module 201.

In some embodiments of the present disclosure, the second connecting hole is configured as a single hole, which is positioned near the middle of the third space 42 in the first direction. After the air flows into the third space 42, the air in the third space 42 flows through the second connecting hole into the first space 40, and then the air diffuses along the first direction. This enables the air flowing into the third space 42 to be more evenly distributed to each energy storage module 201, ensuring that each energy storage module 201 receives the same or nearly the same amount of air intake. This better achieves a balanced air intake effect, thereby further improving the consistency of heat dissipation efficiency among multiple energy storage modules 201, ensuring more uniform heat dissipation of multiple energy storage modules 201.

In some embodiments of the present disclosure, a third space 42 is formed within the cabinet 60, which connects the first space 40 and the second space 41, air flows from the second space 41 into the third space 42, the air in the third space 42 flows into the first space 40 to cool the energy storage modules 201, achieving rapid cooling of the energy storage modules 201.

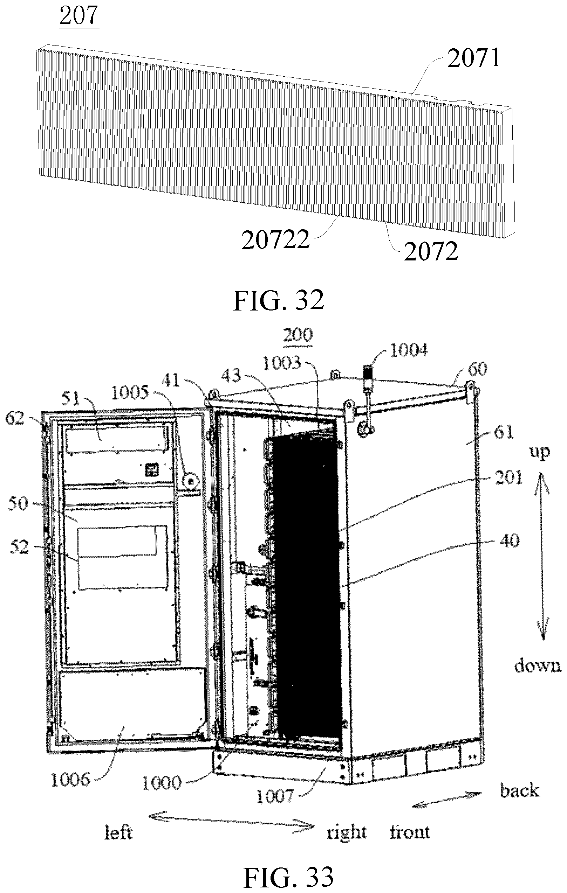

In some embodiments of the present disclosure, as shown in FIG. 33 to FIG. 35, the energy storage cabinet 200 may further include: an air conditioner 50, furthermore, the air conditioner 50 can be set on the cabinet 60, and the air conditioner 50 is equipped with an air outlet 51 and an air inlet 52, the air outlet 51 is connect to the second space 41 and/or the first channel 43 within the cabinet 60, while the air inlet 52 is connect to the first space 40. When the air conditioner 50 is operating, cold air blows from the air outlet 51 of the air conditioner 50 into the second space 41. The cold air then flows through the plurality of first connecting holes 44 into the third space 42, and subsequently flows from the third space 42 into the first space 40 to exchange heat with the energy storage modules 201 and cool them. Finally, the air that has exchanged heat with the energy storage modules 201 flows into the air conditioner 50 through its air inlet 52, realizing a continuous circulation of the air that continuously carries away the heat from the energy storage modules 201, thereby enhancing the heat dissipation efficiency of the multiple energy storage modules 201.

In some embodiments of the present disclosure, a third space 42 is formed within the first space 40. The third space 42 is connected to the second space 41 through the first connecting hole 44, and the third space 42 has a second connecting hole that communicates with the first space 40. The air within the second space 41 is adapted to flow into the first space 40 through the third space 42. After the air flows into the second space 41, it flows into the third space 42 through the first connecting holes 44. After the air flows into the third space 42 through the first connecting hole 44, the air within the third space 42 flows into the first space 40 through the second connecting hole.

In some embodiments of the present disclosure, the air conditioner 50 is positioned outside the cabinet 60. Such an arrangement prevents the air conditioner 50 from occupying the internal space of the cabinet 60, thereby leaving sufficient assembly space for other components within the cabinet 60.

In some embodiments of the present disclosure, the dimension of the second space 41 along the first direction is larger than that of the air inlet 52 along the same direction. This arrangement facilitates the alignment of the second space 41 with the air inlet 52, making it easier for the air in the second space 41 to flow into the air inlet 52.

In some embodiments of the present disclosure, as shown in FIG. 33 to FIG. 35, a first channel 43 is also formed within the cabinet 60. The first channel 43 and the first space 40 are arranged along the first direction, and the first channel 43 is connected to the first space 40 and/or the third space 42. This means that the first channel 43 can be connected to the first space 40, or to the third space 42, or to both the first space 40 and the third space 42. The present disclosure uses the arrangement where the first channel 43 is connected to the third space 42 as an example. Furthermore, the cabinet 60 has a base and a top plate spaced apart along the first direction. The first channel 43 is located between the top plate and the first space 40. When the energy storage cabinet 200 is placed in the direction shown in FIG. 33, the first channel 43 is positioned above the first space 40, and the first channel 43 is connected to both the air outlet 51 of the air conditioner 50 and the third space 42. Furthermore, the front end of the first channel 43 is connected to the air outlet 51 of the air conditioner 50, while the rear end of the first channel 43 is connected to the third space 42. When the air conditioner 50 is operating, cold air blows out from the air outlet 51 of the air conditioner 50, a portion of this cold air flows into the second space 41, while another portion flows into the first channel 43. After the air enters the first channel 43, the air in the first channel 43 flows along the first channel 43 into the upper end of the third space 42. From there, the cold air flows downwards towards the lower end of the third space 42, participating in the heat dissipation cycle and providing additional cooling to the energy storage modules 201. This enhances the heat dissipation efficiency of the energy storage modules 201, enabling faster removal of the heat from the energy storage modules 201.

In some embodiments of the present disclosure, as shown in FIG. 33 and FIG. 35, the cabinet body 61 forms a first opening that communicates with the first space 40, and the first opening opposite the air inlet 52. The cabinet body 61 also forms a second opening that communicates with the second space 41, and the second opening opposite the air outlet 51. The end of the first space 40 near the air inlet 52 is open to form the first opening, and the end of the second space 41 near the air outlet 51 is open to form the second opening. When the energy storage cabinet 200 is placed in the direction shown in FIG. 35, the front end of the first space 40 is open to form the first opening, and the front end of the second space 41 is open to form the second opening. Furthermore, the cabinet 60 includes: a cabinet body 61 and an opening/ closing door 62. The cabinet body 61 includes a base and a top plate, defining an installation cavity that is open at one end. Specifically, the cabinet body 61 defines an installation cavity that is open at the front end, within which the first space 40, second space 41, third space 42, and first channel 43 are formed. The opening and closing door 62 is used for opening or closing the installation cavity. The air conditioner 50 is mounted on the cabinet 60, and more specifically, the air conditioner 50 is mounted on the opening and closing door 62. Additionally, a partition 63 is provided within the installation cavity to divide it into the first space 40, second space 41, third space 42, and first channel 43. Since the air conditioner 50 is mounted on the opening and closing door 62, both the air outlet 51 and air inlet 52 of the air conditioner 50 are located on the opening and closing door 62. With the end of the first space 40 near the air inlet 52 being open, the end of the second space 41 near the air outlet 51 being open, and the end of the first channel 43 near the air inlet 52 also being open, it facilitates the flow of cold air into the second space 41 and the first channel 43, as well as the flow of cold air from the first space 40 into the air inlet 52 of the air conditioner 50.

Furthermore, the first opening and the second opening are separated by a spacer (not shown in the FIG.), during the process of air blowing into the second space 41, the air within the first space 40 simultaneously flows towards the air inlet 52 of the air conditioner 50. By separating the open ends of the first space 40 and the second space 41 with the spacer, it prevents the inlet and outlet airflows from interfering with each other. This allows the cold air to flow smoothly into the second space 41, and also enables the air that has exchanged heat in the first space 40 to flow smoothly into the air conditioner 50. Additionally, it avoids contributing to the noise generated by the energy storage cabinet 200.

In some embodiments of the present disclosure, the partition 63 is provided with a first connecting hole 44. Since the partition 63 divides the installation cavity into the first space 40, the second space 41, the third space 42 and the first channel 43, positioning the first connecting hole 44 in the partition 63 facilitates the connection between the second space 41 and the third space 42 through the first connecting hole 44.

In some embodiments of the present disclosure, the third space 42 and the first space 40 are arranged in the third direction of the energy storage cabinet 200, the third direction is orthogonal to both the first direction and the second direction. When the energy storage cabinet 200 is placed in the direction shown in FIG. 35, the third direction of the energy storage cabinet 200 refers to the front-back direction in FIG. 35. This arrangement enables a more compact internal structure within the energy storage cabinet 200.

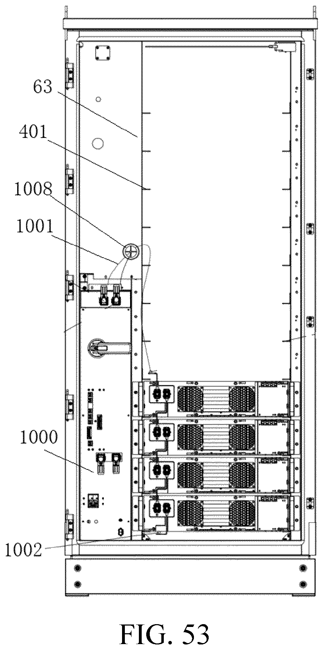

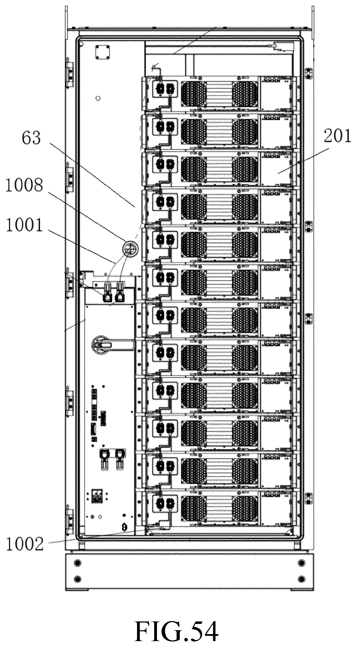

In some embodiments of the present disclosure, as shown in FIG. 53 and FIG. 54, the energy storage cabinet 600 may further include: a positive power line 1001 and a negative power line 1002. One end of the positive power line 1001 is connected to the control unit 1000, while the other end of the positive power line 1001 is suitable for plugging into the connection terminal 202 of the energy storage module 201, similarly, one end of the negative power line 1002 is connected to the control unit 1000, the other end of the negative power line 1002 is suitable for plugging into the connection terminal 202 of the energy storage module 201. Specifically, multiple energy storage modules 201 are serially connected in sequence, one end of the positive power line 1001 is electrically connected to the control unit 1000, while the other end of the positive power line 1001 can be electrically connected to the positive connection terminal 2029 of the energy storage module 201 located at the end. Similarly, one end of the negative power line 1002 is electrically connected to the control unit 1000, and the other end of the negative power line 1002 is electrically connected to the negative connection terminal 2030 of another energy storage module 201 located at the end. This configuration enables electrical connection between the control unit 1000 and the energy storage modules 201, achieving the purpose of the control unit 1000 controlling the energy storage modules 201.

In some embodiments of the present disclosure, the control unit 1000 can include a busbar module. One end of the positive power line 1001 is connected to the busbar module, and the other end of the positive power line 1001 is adapted to plug into the connection terminal 202 of the energy storage module 201. Similarly, one end of the negative power line 1002 is connected to the busbar module, and the other end of the negative power line 1002 is adapted to plug into the connection terminal 202 of the energy storage module 201. Specifically, multiple energy storage modules 201 are serially connected in sequence. One end of the positive power line 1001 is electrically connected to the busbar module, and the other end of the positive power line 1001 can be electrically connected to the positive connection terminal 2029 of the energy storage module 201 located at the end. One end of the negative power line 1002 is electrically connected to the busbar module, and the other end of the negative power line 1002 is electrically connected to the negative connection terminal 2030 of another energy storage module 201 located at the end. Such a configuration enables electrical connection between the busbar module and the energy storage module 201, achieving the purpose of the control unit 1000 controlling the operation of the energy storage modules 201.

In some embodiments of the present disclosure, the positive power line 1001 and the negative power line 1002 are wire harnesses, and their positions within the energy storage cabinet 600 are adjustable. The connection ends of the positive power line 1001 and the negative power line 1002 to the energy storage modules 201 can be appropriately adjusted based on the positions of the energy storage modules 201 within the energy storage cabinet 600. For instance, as shown in FIG. 54, when the energy storage cabinet 600 is fully loaded with energy storage modules 201, the positive power line 1001 can be moved to the energy storage module 201 located at one end and electrically connected to the positive connection terminal 2029 of the energy storage module 201, while the negative power line 1002 can be moved to the energy storage module 201 located at the end and electrically connected to the negative connection terminal 2030 of the energy storage module 201. Similarly, as shown in FIG. 53, when the energy storage cabinet 600 is not fully loaded with energy storage modules 201, the positive and negative power lines 1001 and 1002 can still be adjusted to connect to the respective terminals of the end energy storage modules 201. Due to the varying usage scenarios and total power consumption of electrical appliances, users have different requirements for the power capacity of the electricity of energy storage cabinet 200. Moreover, the energy storage cabinet 200 needs to be used with an inverter, the diverse needs of users lead to varied demands for inverters. Different brands and models of inverters have different operating voltage ranges, resulting in the need for flexible voltage expansion. In this application, when different numbers of energy storage modules 201 are installed in the energy storage cabinet 600, the energy storage modules 201 and the control unit 1000 can be electrically connected by adjusting the positions of the positive power line 1001 and the negative power line 1002, thereby enabling flexible configuration of the number of energy storage modules 201 within the energy storage cabinet 600 and obtaining energy storage cabinets 600 with different capacities to meet the diverse needs of users.

Furthermore, one end of the positive power line 1001 and one end of the negative power line 1002 are both located in the second space 41, while the other ends of the positive power line 1001 and the negative power line 1002 are both located in the first space 40. As shown in FIG. 53 and FIG. 54, the partition 63 is provided with a wiring hole 1008, the wiring hole 1008 penetrates the partition 63, and both the positive power line 1001 and the negative power line 1002 pass through the wiring hole 1008, so that one end of the positive power line 1001 and one end of the negative power line 1002 are both located in the second space 41, while the other ends of the positive power line 1001 and the negative power line 1002 are both located in the first space 40. Such an arrangement enables the positive power line 1001 and the negative power line 1002 to be connected between the control unit 1000 and the energy storage module 201.

It should be noted that the positive power line 1001 can be connected to the conductive bar 10, and through plugging the conductive bar 10 into the positive connection terminal 2029 of the energy storage module 201, the positive power line 1001 is electrically connected to the energy storage module 201. Similarly, the negative power line 1002 can also be connected to the conductive bar 10, and through plugging the conductive bar 10 into the negative connection terminal 2030 of the energy storage module 201, the negative connection terminal 2030 is electrically connected to the energy storage module 201.

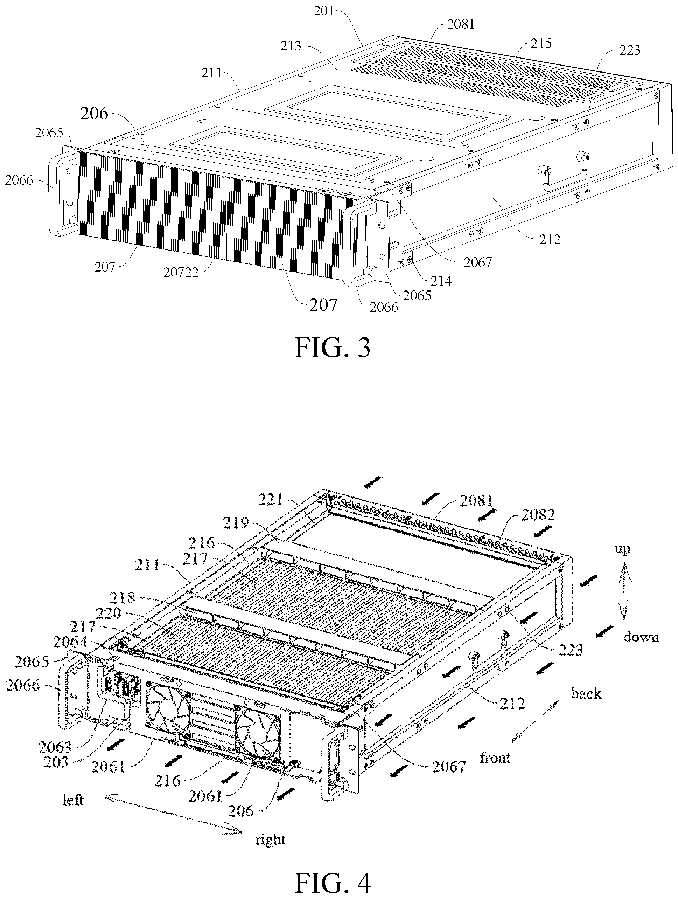

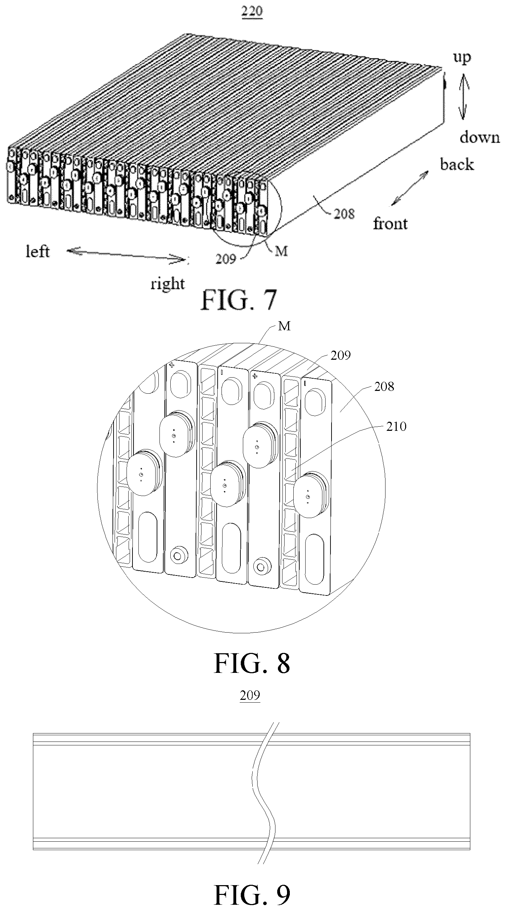

As shown in FIG. 3 to FIG. 5, the energy storage module 201 according to the embodiment of the present disclosure includes: an energy storage unit 220, a support beam 219, a first side plate 211 and a second side plate 212. The energy storage unit 220 includes a plurality of battery cells 208, and the plurality of battery cells 208 are arranged sequentially along the thickness direction of the battery cells 208. At least between two adjacent battery cells 208, a first air duct 210 is formed, which extends along the third direction. The third direction is orthogonal to both the first direction and the second direction. The first air duct 210 is connected to the first space 40. When the energy storage unit 220 is placed in the direction shown in FIG. 7, the thickness direction of the battery cells 208 refers to the left-right direction shown in FIG. 7. The energy storage unit 220 is arranged between the first side plate 211 and the second side plate 212. As shown in FIG. 2 and FIG. 4, the support beam 219 extends along the thickness direction of the battery cells 208 and connects the first side plate 211 and the second side plate 212 to clamp the energy storage unit 220 between them. Furthermore, the support beam 219 is installed between the first side plate 211 and the second side plate 212 to further clamp the energy storage unit 220. The support beam 219 is provided on at least one side of the energy storage unit 220 in the width direction of the battery cells 208. When the energy storage unit 220 is placed in the direction shown in FIG. 2, the width direction of the battery cell 208 is the vertical direction of the energy storage module 201 in FIG. 2. The support beam 219 can be provided on the upper side of the energy storage unit 220, the support beam 219 can also be provided on the lower side of the energy storage unit 220, or the support beam 219 can also be provided on both the upper and lower sides of the energy storage unit 220. For example, support beam 219 is provided on both the upper and lower sides of the energy storage unit 220.

As shown in FIG. 4, when the energy storage module 201 is placed in the direction shown in FIG. 4, the first side plate 211 and the second side plate 212 are respectively arranged on the left and right sides of the energy storage unit 220. The present disclosure uses the arrangement where the first side plate 211 is set on the left side of the energy storage unit 220 and the second side plate 212 is set on the right side of the energy storage unit 220 as an example to illustrate. The support beam 219 connects between the first side plate 211 and the second side plate 212, and since the energy storage unit 220 is placed between the first side plate 211 and the second side plate 212, after the support beam 219 assembles the first and second side plates together, they can securely clamp the energy storage unit 220. This allows the energy storage unit 220 to be fixed within the energy storage module 201. Inside the energy storage module 201, there is no need to set up a bracket to fix the battery cells 208, which increases the space available for arranging more battery cells 208 within the energy storage module, thereby enhancing the energy density of the energy storage module 201.When the energy storage module 201 has the same energy density, the energy storage module 201 of the present disclosure has a smaller volume. Furthermore, by providing support beam 219 on both the lower and upper sides of the energy storage unit 220, the support beam 219 on the lower side of the energy storage unit 220 can support the energy storage unit 220, so that the energy storage unit 220 is firmly clamped between the first side plate 211 and the second side plate 212. At the same time, by clamping the energy storage unit 220 with the support beam 219, the first side plate 211 and the second side plate 212, the structure of the energy storage module 201 can be simplified, the assembly efficiency of the energy storage module 201 can be improved, thus improving the production efficiency of the energy storage module 201.

Therefore, through the cooperation of the energy storage unit 220, the first side plate 211, the second side plate 212 and the support beam 219, the energy storage unit 220 can be clamped, the structure of the energy storage module 201 is simplified, and the assembly efficiency of the energy storage module 201 is improved. In addition, there is no need to set brackets for fixing the battery cells 208 inside the energy storage module 201. More battery cells 208 can be arranged in the energy storage module 201, which improves the energy density of the energy storage module 201. When the energy storage module 201 has the same energy density, the volume of the energy storage module 201 is smaller.

In some embodiments of the present disclosure, as shown in FIG. 1 and FIG. 3, the energy storage module 201 may also include: a top cover 213 and a bottom cover 214. In the width direction of the battery cells 208, the top cover 213 and the bottom cover 214 are respectively located on two sides of the energy storage unit 220. When the energy storage module 201 is placed in the direction shown in FIG. 1, in the vertical direction shown in FIG. 1, the top cover 213 is arranged on the upper side of the energy storage unit 220, and the bottom cover 214 is arranged on the lower side of the energy storage unit 220, a plurality of battery cells 208 are arranged between the first side plate 211 and the second side plate 212, and both the top cover 213 and the bottom cover 214 are connected to the first side plate 211 and the second side plate 212. furthermore, both the top cover 213 and the bottom cover 214 are connected between the first side plate 211 and the second side plate 212, or both the first side plate 211 and the second side plate 212 are connected between the top cover 213 and the bottom cover 214, for example, both the top cover 213 and the bottom cover 214 are connected between the first side plate 211 and the second side plate 212. A second air duct 216 is formed between the surface of the energy storage unit 220 close to the top cover 213 and the top cover 213 and/or between the surface of the energy storage unit 220 close to the bottom cover 214 and the bottom cover 214 through the separation effect of the support beam 219. That is to say, the second air duct 216 can be formed between the surface of the energy storage unit 220 close to the top cover 213 and the top cover 213 through the separation effect of the support beam 219, or the second air duct 216 can be formed between the surface of the energy storage unit 220 close to the bottom cover 214 and the bottom cover 214 through the separation effect of the support beam 219, the second air duct 216 can also be formed between the surface of the energy storage unit 220 close to the top cover 213 and the top cover 213 and between the surface of the energy storage unit 220 close to the bottom cover 214 and the bottom cover 214. For example, the second air ducts 216 are formed between the surface of the energy storage unit 220 close to the top cover 213 and the top cover 213, and between the surface of the energy storage unit 220 close to the bottom cover 214 and the bottom cover 214. In other words, the second air ducts 216 are formed between the top cover 213 and the battery cells 208 and/or between the bottom cover 214 and the battery cells 208, for instance, the second air ducts 216 are formed both between the top cover 213 and the battery cells 208 and between the bottom cover 214 and the battery cells 208. The second air ducts 216 are connected to the first space 40.

Specifically, the support beam 219 is provided between the surface of the energy storage unit 220 close to the top cover 213 and the top cover 213, and between the surface of the energy storage unit 220 close to the bottom cover 214 and the bottom cover 214. The support beam 219 between the energy storage unit 220 and the top cover 213 separate the energy storage unit 220 and the top cover 213 to form a second air duct 216 between the energy storage unit 220 and the top cover 213, and the support beam 219 between the energy storage unit 220 and the bottom cover 214 separate the energy storage unit 220 and the bottom cover 214 to form a second air duct 216 between the energy storage unit 220 and the bottom cover 214. The external air of the energy storage module 201 can flow into the second air duct 216, and the air can exchange heat with the energy storage unit 220 after flowing into the second air duct 216, and then the air will flow out of the energy storage module 201, thereby taking away the heat of the battery cells 208, achieving a cooling effect, and improving the heat dissipation efficiency of the battery cells 208. Furthermore, by setting up the second air duct 216 between the energy storage unit 220 and the top cover 213 and between the energy storage unit 220 and the bottom cover 214, the temperature difference between the two sides of the width of a single battery cell 208 can be controlled within 4 degrees, which enables a more balanced temperature difference across different regions of the battery cell 208.

In some embodiments of the present disclosure, as shown in FIG. 2, FIG. 4 and FIG. 5, the support beam 219 is in contact with the surface of the energy storage unit 220 close to the top cover 213 and the top cover 213 and/or the support beam 219 is in contact with the surface of the energy storage unit 220 close to the bottom cover 214 and the bottom cover 214 to divide the second air duct 216 into multiple sub-air ducts 217, and the support beam 219 has an air passage 218 connecting two adjacent sub-air ducts 217. Further, when the energy storage module 201 is placed in the direction shown in FIG. 1, the support beam 219 located between the energy storage unit 220 and the top cover 213 is in contact with both the upper surface of the energy storage unit 220 and the top cover 213, the support beam 219 located between the energy storage unit 220 and the bottom cover 214 is in contact with both the lower surface of the energy storage unit 220 and the bottom cover 214. The support beam 219 located between the energy storage unit 220 and the top cover 213 can divide the second air duct 216 into multiple sub-air ducts 217, the support beam 219 located between the energy storage unit 220 and the bottom cover 214 can divide the second air duct 216 into multiple sub-air ducts 217.The multiple sub-air ducts 217 located between the energy storage unit 220 and the top cover 213 are arranged in sequence in the length direction of the battery cells 208, and the multiple sub-air ducts 217 located between the energy storage unit 220 and the bottom cover 214 are arranged in sequence in the length direction of the battery cells 208.

After the external air of the energy storage module 201 flows into the sub-air ducts 217, the air can flow into the adjacent sub-air duct 217 through the air passages 218. During the process of the air flow, it can exchange heat with the battery cells 208, taking away the heat of the battery cells 208, and finally the air will flow out of the energy storage module 201. Moreover, by contacting the support beam 219 with the energy storage unit 220, and the support beam 219 located below the energy storage unit 220 can support the energy storage unit 220. Meanwhile, the support beam 219 located below the energy storage unit 220 and the support beam 219 located above the energy storage unit 220 clamp the energy storage unit 220, thereby enabling the energy storage unit 220 to be securely assembled within the energy storage module 201.

Further, as shown in FIG. 2 and FIG. 4, a plurality of support beams 219 may be provided between the energy storage unit 220 and the top cover 213, and the plurality of support beams 219 between the energy storage unit 220 and the top cover 213 are sequentially spaced apart in the length direction of the battery cells 208 (i.e., the front-back direction in FIG. 4). At the same time, a plurality of support beams 219 may also be provided between the energy storage unit 220 and the bottom cover 214, and the plurality of support beams 219 between the energy storage unit 220 and the bottom cover 214 are sequentially spaced apart in the length direction of the battery cells 208. By clamping the energy storage unit 220 simultaneously through the plurality of support beams 219, and by clamping the energy storage unit 220 through the first side plate 211 and the second side plate 212, the energy storage unit 220 can be more firmly assembled in the energy storage module 201, and the first side plate 211 and the second side plate 212 can also firmly clamp the energy storage unit 220.

In some embodiments of the present disclosure, as shown in FIG. 4, the support beam 219 spans all the battery cells 208 along the thickness direction of the battery cells 208. As shown in FIG. 4, the leftmost end of the support beam 219 is connected to the first side plate 211, and the rightmost end of the support beam 219 is connected to the second side plate 212. By spanning all the battery cells 208 along the thickness direction through the support beam 219 and then connecting it to the first side plate 211 and the second side plate 212, it enables the first side plate 211 and the second side plate 212 to securely clamp the energy storage unit 220.

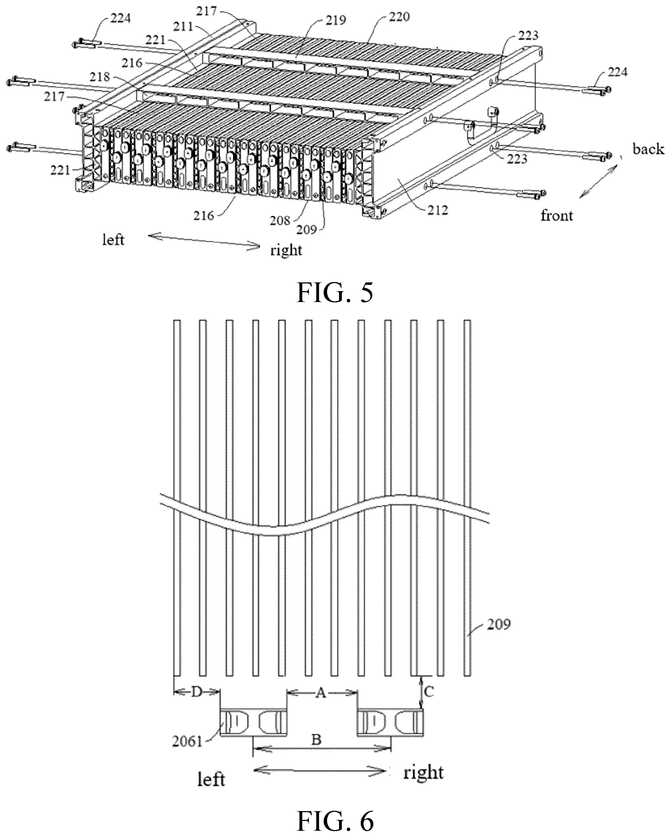

In some embodiments of the present disclosure, as shown in FIG. 5, the inner surface of the first side plate 211 close to the energy storage unit 220 and/or the inner surface of the second side plate 212 close to the energy storage unit 220 may be provided with a limiting boss 221 protruding towards the energy storage unit 220. It can also be understood that the limiting boss 221 can be provided on the inner surface of the first side plate 211 close to the energy storage unit 220, and the limiting boss 221 can also be provided on the inner surface of the second side plate 212 close to the energy storage unit 220. The limiting boss 221 can also be provided on the inner surface of the first side plate 211 close to the energy storage unit 220 and the inner surface of the second side plate 212 close to the energy storage unit 220. After the support beam 219, the first side plate 211 and the second side plate 212 are assembled, the limiting boss 221 can squeeze the energy storage unit 220, so that the energy storage unit 220 is fixed in the energy storage module 201.

Furthermore, the support beam 219 is overlapped on the limiting boss 221. Specifically, as shown in FIG. 5, the two ends of the support beam 219 located between the energy storage unit 220 and the top cover 213 are respectively overlapped on the upper surface of the limiting boss 221 of the first side plate 211 and the upper surface of the limiting boss 221 of the second side plate 212. The limiting boss 221 supports the support beam 219 between the energy storage unit 220 and the top cover 213, so that the support beam 219 can be reliably assembled with the first side plate 211 and the second side plate 212. The two ends of the support beam 219 between the energy storage unit 220 and the bottom cover 214 are respectively overlapped on the lower surface of the limiting boss 221 of the first side plate 211 and the lower surface of the limiting boss 221 of the second side plate 212. The limiting boss 221 supports the support beam 219 between the energy storage unit 220 and the bottom cover 214, thereby preventing the support beam 219 between the energy storage unit 220 and the bottom cover 214 from excessively squeezing the battery cells 208.

In some embodiments of the present disclosure, as shown in FIG. 5, a third air duct 222 is formed in the limiting boss 221, and the third air duct 222 is extended along the length direction of the battery cell 208. Since the limiting boss 221 is in contact with the energy storage unit 220, after the air flows into the third air duct 222, the air can exchange heat with the energy storage unit 220. When the air flows along the third air duct 222, the air can continuously take away the heat of the energy storage unit 220, thereby achieving the effect of cooling the energy storage unit 220.

In some embodiments of the present disclosure, as shown in FIG. 5, the first side plate 211 and the second side plate 212 are both provided with mounting holes 223 for assembling the support beam 219, the axis of the mounting holes 223 extends in the thickness direction of the battery cells 208, the mounting holes 223 on the first side plate 211 penetrates the first side plate 211 in the thickness direction of the first side plate 211, and the mounting holes 223 on the second side plate 212 penetrates the second side plate 212 in the thickness direction of the second side plate 212.Through the first fasteners 224 passing through the mounting hole 223 and engaging with the support beam 219, the first side plate 211 and the second side plate 212 can securely clamp the energy storage unit 220. There are multiple fasteners 224 and mounting holes 223, and the multiple mounting holes 223 and the multiple fasteners 224 are correspondingly arranged one-to-one. The first fasteners 224 can be bolts or screws. The first fasteners 224 pass through the corresponding mounting holes 223 from the outside of the first side plate 211 and the second side plate 212 and then connects with the support beam 219 by threading, thus fixing the first side plate 211 and the second side plate 212 and enabling them to securely clamp the energy storage unit 220.

In some embodiments of the present disclosure, as shown in FIG. 7 and FIG. 8, the energy storage module 201 may also include: a heat sink 209, the heat sink 209 is placed between at least two adjacent battery cells 208 among the plurality of battery cells 208. The heat sink 209 is in contact with the adjacent battery cells 208 and defines a first air duct 210 extending along the length direction of the battery cell 208. When the energy storage module 201 is placed in the direction shown in FIG. 7, the length direction of the battery cells 208 refers to the front-back direction in FIG. 7. This arrangement enables the contact surface between the heat sink 209 and the battery cell 208 to be the large surface of the battery cells 208, which can improve the heat dissipation effect of the heat sink 209 on the battery cells 208. Furthermore, the air (such as cold air) can flow into the first air duct 210 after entering the energy storage module 201. As the cold air flows through the first air duct 210, it exchanges heat with the battery cells 208, taking away the heat generated by the battery cells 208, thereby achieving the effect of cooling the battery cells 208. After the air in the first air duct 210 flows out of the first air duct 210, the air can flow out of the energy storage module 201, thereby discharging the heat from the energy storage module 201.

Furthermore, the first air duct 210 is connected to the first space 40. Cold air flows from the third space 42 into the first space 40, and then into the first air duct 210. As the cold air flows through the first air duct 210, it exchanges heat with the battery cells 208, taking away the heat generated by the battery cells 208, thereby achieving the effect of cooling the battery cells 208. After the air in the first air duct 210 flows out of the first air duct 210, the air can flow into the air conditioner 50 through the air inlet 52 of the air conditioner 50.

In some embodiments of the present disclosure, as shown in FIG. 5, FIG. 7 and FIG. 8, the heat sink 209 may define a plurality of first air ducts 210, and the plurality of first air ducts 210 are sequentially arranged along the width direction of the battery cells 208. When the energy storage module 201 is placed in the direction shown in FIG. 7, the width direction of the battery cell 208 refers to the vertical direction in FIG. 7. This arrangement enables the air to flow smoothly in different first air ducts 210, avoiding the formation of vortices in the heat sink 209, thereby ensuring the air flow velocity and facilitating the air to flow out of the heat sink 209, thereby quickly taking away the heat of the battery cells 208, and also avoiding noise generated by the air in the heat sink 209.

In some embodiments of the present disclosure, as shown in FIG. 7 and FIG. 8, multiple battery cells 208 form multiple battery cell groups, and each group may include at least one battery cell 208. Furthermore, as shown in FIG. 7, every two battery cells 208 form a battery cell group, and the two battery cells 208 located at the end respectively form a battery cell group. A heat sink 209 is provided between two adjacent battery cells group. This arrangement can ensure that each battery cell 208 is in contact with at least one heat sink 209, so that each battery cell 208 has at least one heat sink 209 to dissipate heat for it, and the heat sink 209 can also be attached to the side of the battery cell 208 with a larger area, thereby increasing the heat dissipating area of the battery cell 208 and reducing the temperature difference in various areas of the battery cells 208. At the same time, through the arrangement of multiple battery cells 208 and heat sinks 209, the heat sinks 209 can provide support for the battery cells 208, thereby improving the structural stability and safety of the energy storage module 201.

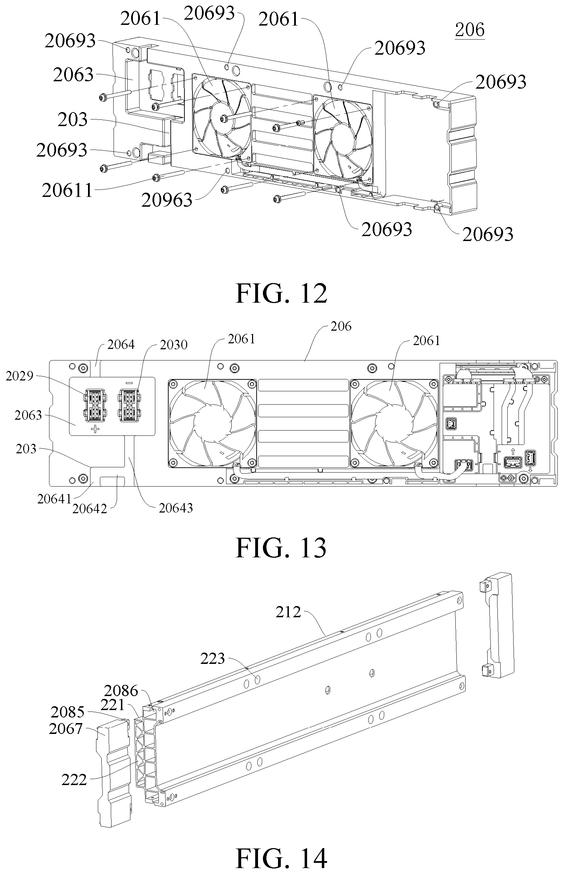

In some embodiments of the present disclosure, as shown in FIG. 4 and FIG. 12, the energy storage module 201 may further include: a driving fan 2061.The driving fan 2061 is located at one end of the energy storage unit 220 in the length direction of the battery cells 208, and the driving fan 2061 is spaced apart from the energy storage unit 220, and the driving fan 2061 is used for driving the air to flow along the first air duct 210 in the first air duct 210. Furthermore, as shown in FIG. 4, when the energy storage module 201 is placed in the direction shown in FIG. 4, the driving fan 2061 is located at the front end of the energy storage unit 220.Different types of fans can be selected for the driving fan 2061 based on specific heat dissipation requirements. When the driving fan 2061 is operating, the blades of the driving fan 2061 rotate, and under the drive of the driving fan 2061, the air in the first air duct 210 flows along the first air duct 210 towards the driving fan 2061, and the heat generated by the battery cells 208 is taken away by the air flow, and the air brought out by the driving fan 2061 is finally discharged to the outside of the energy storage module 201. By setting up the driving fan 2061, the air flow velocity in the first air duct 210 can be increased, and the heat of the battery cells 208 can be taken away more quickly, thereby improving the heat exchange efficiency of the heat sink 209.

Furthermore, the air conditioner 50 can be replaced by other types of blowers, which needs to be connected to the battery management system similarly to the air conditioner, and the blowers should be located inside the cabinet 60 and outside the driving fan 2061.

In some embodiments of the present disclosure, as shown in FIG. 4 and FIG. 6, multiple driving fans 2061 can be set, and multiple driving fans 2061 are sequentially spaced apart along the thickness direction of the battery cells 208. It should be noted that the number of driving fans 2061 is positively correlated with the number of battery cells 208 in the energy storage module 201, that is, the more battery cells 208 are set in the energy storage module 201, the more driving fans 2061 are set, and the fewer battery cells 208 are set in the energy storage module 201, the fewer driving fans 2061 are set. The present disclosure uses the arrangement where the energy storage module 201 is equipped with two driving fans 2061 as an example for illustration. By setting up multiple driving fans 2061, the coverage area of the driving fans 2061 can be increased, thus ensuring the improvement of the air flow rate of the first air duct 210 of each heat sink 209 in the energy storage module 201, thereby further improving the heat dissipation efficiency of the energy storage module 201.

In some embodiments of the present disclosure, as shown in FIG. 6, along the thickness direction of the battery cells 208, the spacing distance between any two adjacent driving fans 2061 is A, satisfying the relationship: 90mm≤A≤100mm.For example, the spacing distance between two adjacent driving fans 2061 is 98mm. By setting the spacing distance A between two adjacent driving fans 2061, in the thickness direction of the battery cells 208, i.e., the left-right direction in FIG. 6, it ensures that the driving fans 2061 can drive the airflow within the first air duct 210 located between the two driving fans 2061, allowing for a more rapid dissipation of heat from the battery cells 208 and thus ensuring the heat exchange efficiency of the heat sink 209.

In some embodiments of the present disclosure, as shown in FIG. 6, along the thickness direction of the battery cells 208, the spacing distance between the center of one of any two adjacent driving fans 2061 and the center of the other driving fan 2061 is B, B satisfies the relationship: 180mm≤B≤200mm.For example, the spacing distance between the center of one of two adjacent driving fans 2061 and the center of the other driving fan 2061 is 190mm. Such an arrangement can further ensure that the driving fan 2061 can drive the airflow within the first air duct 210 located between the two driving fans 2061, thereby taking away the heat of the battery cells 208 more quickly, further ensuring the heat exchange efficiency of the heat sink 209.

In some embodiments of the present disclosure, as shown in FIG. 6, in the length direction of the battery cells 208, the spacing distance between the driving fan 2061 and the battery cells 208 is C, C satisfies the relationship: 40mm≤C≤50mm.For example, the spacing distance between the driving fan 2061 and the battery cells 208 is 45.6mm. Furthermore, in the length direction of the battery cells 208, the spacing distance between the driving fan 2061 and the heat sink 209 is also C. Such an arrangement can further ensure that the driving fan 2061 can drive the airflow in the first air duct 210 located between the two driving fans 2061, and can take away the heat of the battery cells 208 more quickly, thereby further ensuring the heat exchange efficiency of the heat sink 209, so that the spacing dimensions between the driving fan 2061 and the battery cells 208, as well as between the driving fan 2061 and the heat sink 209, are appropriate.

In some embodiments of the present disclosure, as shown in FIG. 6, in the thickness direction of the battery cells 208, the spacing distance between the surface of the outermost heat sink 209 away from the driving fan 2061 and the adjacent driving fan 2061 is D, D satisfies the relationship: 60mm≤D≤70mm.For example, the spacing distance between the surface of the outermost heat sink 209 away from the driving fan 2061 and the adjacent driving fan 2061 is 65.2mm. Such an arrangement can ensure that the air inside each first air duct 210 is driven to flow by the driving fan 2061, which can improve the temperature consistency of various areas of the energy storage module 201, thereby ensuring uniform heat dissipation of the energy storage module 201.

It should be noted that the larger the size of the driving fan 2061, the greater the airflow velocity in the first air duct 210. In the width direction of the battery cells 208, the size of the driving fan 2061 is greater than or equal to the width dimension of the battery cells 208. At this time, the size of the driving fan 2061 in the width direction of the battery cells 208 reaches 100% of the coverage rate of the battery cells 208, and the working area of the driving fan 2061 is circular, so that the maximum airflow can be achieved in the first air duct 210 to ensure the heat dissipation effect of the energy storage module 201. Furthermore, in the width direction of the energy storage module 201, the setting size of the driving fan 2061 accounts for 40%-50% of the width dimension of the energy storage module 201, for example, the setting size of the driving fan 2061 accounts for 44.62% of the width dimension of the energy storage module 201.

In some embodiments of the present disclosure, in the thickness direction of the battery cells 208, the side surface (i.e., the large surface) area of the battery cell 208 is S1, and the contact area between the heat sink 209 and the adjacent battery cell 208 is S2, satisfying the relationship: 0.90≤S2/S1≤1, for example: S2/S1 is 0.97. This arrangement can ensure the contact area between the heat sink 209 and the adjacent battery cell 208, and improve the heat exchange efficiency between the heat sink 209 and the battery cell 208.

In some embodiments of the present disclosure, as shown in FIG. 4 and FIG. 12, the energy storage module 201 may further include: a heat dissipating end plate 206, the driving fan 2061 is installed on the heat dissipating end plate 206, and the heat dissipating end plate 206 is fixedly connected to the first side plate 211 and/or the second side plate 212. It can also be understood that the heat dissipating end plate 206 can be connected to the first side plate 211, or the heat dissipating end plate 206 can be connected to the second side plate 212, or the heat dissipating end plate 206 can be fixedly connected to both the first side plate 211 and the second side plate 212. As shown in FIG. 4, the heat dissipating end plate 206 is installed at the front end of the first side plate 211 and the second side plate 212, and the heat dissipating end plate 206 is connected to both the first side plate 211 and the second side plate 212, and the heat dissipating end plate 206 can be installed on the first side plate 211 and the second side plate 212 by bolts. Furthermore, the heat dissipating end plate 206 is spaced apart from the energy storage unit 220. By installing the driving fan 2061 on the heat dissipating end plate 206, it enables the air within the first air duct 210 to flow towards the front of the energy storage module 201 along the first air duct 210, and also reliably positions the driving fan 2061 within the energy storage module 201.

Furthermore, as shown in FIG. 1 and FIG. 19 to FIG. 21, the energy storage module 201 may further include: a connecting piece 2083 and a busbar mounting rack 2084. In the length direction of the battery cells 208, the two ends of the battery cells 208 are respectively provided with a positive post and a negative post. The connecting piece 2083 is connected between the positive post and the negative post of two adjacent battery cells 208 to realize the electrical connection of the two adjacent battery cells 208. The busbar mounting rack 2084 is arranged between the heat dissipating end plate 206 and the energy storage unit 220. The connecting piece 2083 is installed on the busbar mounting rack 2084. The busbar mounting rack 2084 can be fixedly mounted on the first side plate 211 and the second side plate 212. For example, the busbar mounting rack 2084 can be mounted on the first side plate 211 and the second side plate 212 by bolts, the busbar mounting rack 2084 can also be clamped on the first side plate 211 and the second side plate 212. The specific assembly form is not specifically limited. The heat dissipating end plate 206 is detachably mounted on the busbar mounting rack 2084, so that the heat dissipating end plate 206 is indirectly mounted on the first side plate 211 and the second side plate 212.

In some embodiments of the present disclosure, as shown in FIG. 1 and FIG. 4, the energy storage module 201 may further include: a fixing plate 2065, the fixing plate 2065h is installed on the first side plate 211 and/or the second side plate 212, that is to say, the fixing plate 2065 can be installed on the first side plate 211, the fixing plate 2065 can also be installed on the second side plate 212, and the fixing plate 2065 can also be installed on the first side plate 211 and the second side plate 212 at the same time. Furthermore, the part of the fixing plate 2065 connected to the side plate is configured as a flat plate structure. As shown in FIG. 2 and FIG. 4, the fixing plate 2065 can be provided with a handle 2066. Furthermore, the end of the fixing plate 2065 away from the side plate is provided with a handle 2066, and the part of the fixing plate 2065 connected to the handle 2066 is configured as a flat plate structure. When the energy storage module 201 needs to be taken and placed, the staff can lift the energy storage module 201 by grabbing the handle 2066, thereby facilitating the transportation of the energy storage module 201. In some embodiments of the present disclosure, the heat dissipating end plate 206 can be fixedly connected to the fixing plate 2065, and the heat dissipating end plate 206 can be mounted on the fixing plate 2065 using bolts.

Furthermore, as shown in FIG. 1, the energy storage module 201 may further include: a fixing bracket 2067, the fixing bracket 2067 is installed on the first side plate 211 and/or the second side plate 212, for example, the first side plate 211 and the second side plate 212 are both provided with the fixing bracket 2067, the fixing bracket 2067 is located between the fixing plate 2065 and the heat dissipating end plate 206, the fixing bracket 2067 is located on the inner side of the fixing plate 2065, and the fixing bracket 2067 is used for limiting the position of the heat dissipating end plate 206. As shown in FIG. 1 and FIG. 4, the fixing brackets 2067 are provided at the front end of the first side plate 211 and the front end of the second side plate 212. In the front-back direction of the energy storage module 201, the fixing bracket 2067 is provided between the heat dissipating end plate 206 and the side plate (i.e., the first side plate 211 and the second side plate 212). By setting up the fixing bracket 2067 between the heat dissipating end plate 206 and the side plate, the heat dissipating end plate 206 can be spaced apart from the energy storage unit 220, and an installation space can be provided for the arrangement of components such as the connecting piece 2083, that is, an installation space can be provided for the arrangement of the busbar mounting rack 2084. Moreover, through the limiting cooperation between the fixing bracket 2067 and the heat dissipating end plate 206, the fixing bracket 2067 can limit the movement of the heat dissipating end plate 206 in the width direction of the energy storage module 201, and the heat dissipating end plate 206 and the busbar mounting rack 2084 can be reliably assembled. Furthermore, the fixing bracket 2067 is detachably connected to the fixing plate 2065, for example, the fixing bracket 2067 and the fixing plate 2065 are reliably fixed by bolts or screws. Furthermore, the heat dissipating end plate 206 can also be installed on the fixing bracket 2067 by bolts or screws.

Furthermore, as shown in FIG. 14, the fixing bracket 2067 is provided with a plug-in post 2085, and the first side plate 211 and the second side plate 212 are both provided with a plug-in hole 2086. When the fixing bracket 2067 is assembled with the first side plate211, the plug-in post 2085 is plugged into the plug-in hole 2086 of the first side plate 211, and then the fixing bracket 2067 and the first side plate 211 are fixed with bolts. When the fixing bracket 2067 is assembled with the second side plate 212, the plug-in post 2085 is plugged into the plug-in hole 2086 of the second side plate 212, and then the fixing bracket 2067 and the second side plate 212 are fixed with bolts. This arrangement allows for the fixing bracket 2067 to be firmly installed on the first side plate 211 and the second side plate 212, which is convenient for disassembly and assembly of the fixing bracket 2067.

In some embodiments of the present disclosure, as shown in FIG. 4 and FIG. 13, the heat dissipating end plate 206 is provided with a positive connection terminal 2029 and a negative connection terminal 2030, the positive connection terminal 2029 is connected to the total positive output poles of the energy storage unit 220, and the negative connection terminal 2030 is connected to the total negative output poles of the energy storage unit 220. Furthermore, in the thickness direction of the battery cells 208, the positive connection terminal 2029 and the negative connection terminal 2030 are arranged near the same side of the heat dissipating end plate 206, for example, as shown in FIG. 4, the positive connection terminal 2029 and the negative connection terminal 2030 are arranged near the left side of the heat dissipating end plate 206. After the energy storage modules 201 are stacked in the energy storage cabinet, by arranging the positive connection terminal 2029 and the negative connection terminal 2030 on the same side of the heat dissipation end plate 206, it facilitates the connection between the positive connection terminal 2029 of one energy storage module 201 and the negative connection terminal 2030 of the other energy storage module 201 in two adjacent energy storage modules 201, which can reduce the length of the conductive bar 10. The conductive bar 10 is connected between the positive connection terminal 2029 and the negative connection terminal 2030. Furthermore, the conductive bar 10 is plug-connected to both the positive connection terminal 2029 and the negative connection terminal 2030.

In some embodiments of the present disclosure, as shown in FIG. 4 and FIG. 13, the heat dissipating end plate 206 can define a mounting groove 2063, and the positive connection terminal 2029 and the negative connection terminal 2030 are both arranged in the mounting groove 2063. Furthermore, the mounting groove 2063 is recessed from the outer surface of the heat dissipating end plate 206 towards the inside of the heat dissipating end plate 206. By arranging the positive connection terminal 2029 and the negative connection terminal 2030 in the mounting groove 2063, the positive connection terminal 2029 and the negative connection terminal 2030 can be concealed in the mounting groove 2063, thereby preventing the positive connection terminal 2029 and the negative connection terminal 2030 from protruding beyond the outer surface of the heat dissipating end plate 206 and interfering with other components.

In some embodiments of the present disclosure, as shown in FIG. 4 and FIG. 13, the heat dissipating end plate 206 further defines a fool-proof slot 203, the fool-proof slot 203 is connect with the mounting groove 2063 and fool-proof slot 203 is used for wiring (for example conductive bar 10). Furthermore, the fool-proof slot 203 includes a first slot segment 20641, a second slot segment 20642, and a third slot segment 20643.The first slot segment 20641 and a third slot segment 20643 both extend in the height direction of the energy storage module 201, the second slot segment 20642 extends in the width direction of the energy storage module 201, and one end of the second slot segment 20642 is connected to the first slot segment 20641, and the other end of the second slot segment 20642 is connected to the third slot segment 20643, and the third slot segment 20643 is connected to the mounting groove 2063, and the shape of the conductive bar 10 is compatible with the shape of the fool-proof slot 203. As shown in FIG. 13, the positive connection terminal 2029 may be located on the left side of the negative connection terminal 2030. When a plurality of energy storage modules 201 are stacked in sequence, the conductive bar 10 is connected between two adjacent energy storage modules 201. The lower end of the conductive bar 10 is plug-connected to the positive connection terminal 2029 of the energy storage module 201 located below, and the upper end of the conductive bar 10 is plug-connected to the negative connection terminal 2030 of the energy storage module 201 located above, thereby realizing electrical connection between two adjacent energy storage modules 201. Moreover, by positioning the conductive bar 10 in the fool-proof slot203, the fool-proof slot 203 can guide the conductive bar 10 and prevent the conductive bar 10 from being installed incorrectly (for example, the upper end of the conductive bar 10 and the negative connection terminal 2030 of the energy storage module 201 located above, and the lower end of the conductive bar 10 and the negative connection terminal 2030 of the energy storage module 201 located below). At the same time, concealing the conductive bar 10 in the fool-proof slot 203 can prevent it from interfering with other components, thereby ensuring the reliability of the assembly of the conductive bar 10 with the positive connection terminal 2029 and the negative connection terminal 2030.

Furthermore, the heat dissipating end plate 206 can also define a wiring slot 2064, the wiring slot 2064 is connected to the mounting groove 2063.The fool-proof slot 203 and the wiring slot 2064 are respectively located on two sides of the mounting groove 2063. Furthermore, when the energy storage module 201 is placed in the direction shown in FIG. 4, the wiring slot 2064 is arranged on the upper side of the mounting groove 2063, and the fool-proof slot 203 is arranged on the lower side of the mounting groove 2063. The wiring slot 2064 is arranged corresponding to the positive connection terminal 2029, and the fool-proof slot 203 is arranged corresponding to the negative connection terminal 2030. When multiple energy storage modules 201 are stacked in sequence, the conductive bar 10 is connected between two adjacent energy storage modules 201, the lower end of the conductive bar 10 is plugged into the positive connection terminal 2029 of the energy storage module 201 located below and positioned in the wiring slot 2064 of the energy storage module 201, and the upper end of the conductive bar 10 is plugged into the negative connection terminal 2030 of the energy storage module 201 located above and positioned in the fool-proof slot 203 of the energy storage module 201, thereby connecting two energy storage modules 201 in series. The wiring slot 2064 is used for avoiding the conductive bar 10. The conductive bar 10 is concealed in the wiring slot 2064 to avoid interference between the conductive bar 10 and other components. The fool-proof slot 203 and the wiring slot 2064 can both limit the position of the conductive bar 10.

In some embodiments of the present disclosure, the energy storage module 201 may also include: a temperature detection component, the temperature detection component is used for collecting the temperature of the energy storage unit 220. It should be noted that the temperature detection component can be set as a temperature sensor. The driving fan 2061 and the temperature detection component are both suitable for connecting to the battery management system of the energy storage module 201. The battery management system is used for regulating the rotational speed of the driving fan 2061 by receiving the temperature information collected by the temperature detection component. In other words, the battery management system is used for controlling the operating mode of the driving fan 2061 by receiving temperature information detected by the temperature detection component.

The driving fan 2061 and the temperature detection component can be connected to the battery management system of the energy storage module 201 through communication harness. The temperature detection component can detect the temperature of the energy storage unit 220 in real time. After the temperature detection component transmits the detected temperature information to the battery management system, the battery management system controls the rotational speed of the driving fan 2061 according to the received temperature information. For example, when the temperature of the energy storage unit 220 is high (for example, exceeding 35°C), the battery management system controls the driving fan 2061 to increase the rotational speed, For example full-speed rotation, which can effectively cool the energy storage module 201. When the temperature of the energy storage unit 220 is low (for example, the temperature reaches 30°C), the battery management system controls the driving fan 2061 to reduce the rotational speed, so that the driving fan 2061 rotates at half-speed, which can also effectively cool the energy storage module 201. Such an arrangement can realize the variable speed regulation of the driving fan 2061 of the energy storage module 201 at different temperatures and adjust the driving fan 2061 to an appropriate speed to meet the heat dissipation requirements of the energy storage module 201, which is conducive to saving electricity costs, and has an important effect on improving heat dissipation efficiency and energy utilization. In addition, it maintains the stability of the temperature of the energy storage module 201 during operation and provides effective support for the stable output of the energy storage module 201.

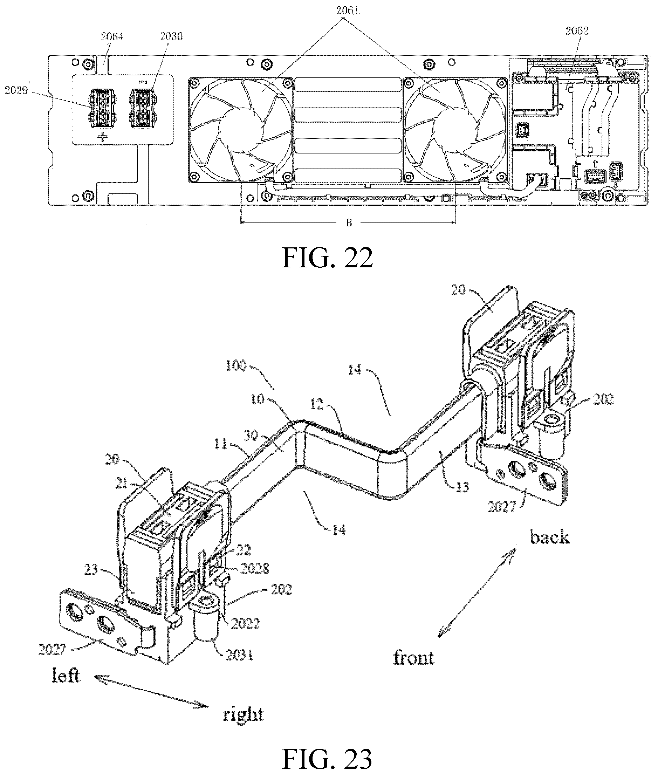

Further, as shown in FIG. 22, the energy storage module 201 can also be equipped with an information collector 2062 (BIC), and the information collector 2062 can be connected between the temperature detection component and the battery management system. The temperature information detected by the temperature detection component is transmitted to the battery management system through the information collector 2062. In addition, the driving fan 2061 is electrically connected to the information collector 2062 through wiring harness. By taking power from the outside through the information collector 2062, the driving fan 2061 is driven to rotate.

In some embodiments of the present disclosure, as shown in FIG. 1, FIG. 2 and FIG. 32, the energy storage module 201 may further include: a ventilation panel 207, the wiring slot 2064 is arranged on the side of the driving fan 2061 away from the energy storage unit 220 and provided with air outlet holes 20722. As shown in FIG. 1, the ventilation panel 207 and the heat dissipating end plate 206 are both arranged on the front side of the energy storage unit 220, the heat dissipating end plate 206 is located between the ventilation panel 207 and the energy storage unit 220, and the ventilation panel 207 is installed on the heat dissipating end plate 206. Furthermore, the ventilation panel 207 can be installed on the heat dissipating end plate 206 by magnetic attraction, and the ventilation panel 207 can also be installed on the heat dissipating end plate 206 by bolts. The specific assembly method of the ventilation panel 207 and the heat dissipating end plate 206 is selected according to actual conditions. When the driving fan 2061 is operating, the blades of the driving fan 2061 rotate. Under the drive of the driving fan 2061, the air in the first air duct 210 flows along the first air duct 210 towards the driving fan 2061, and the heat generated by the battery cells 208 is taken away by the airflow. The air brought out by the driving fan 2061 is finally discharged to the outside of the energy storage module 201 through the air outlet holes 20722 on the ventilation panel 207, realizing the function of dissipating hot air. In addition, the ventilation panel 207 can also shield the driving fan 2061 to prevent the driving fan 2061 from being exposed outside the energy storage module 201.

In some embodiments of the present disclosure, as shown in FIG. 1 and FIG. 2, the energy storage module 201 may further include: an end plate 2081,the end plate 2081 is arranged at the other end of the energy storage unit 220 and spaced apart from the energy storage unit 220, the end plate 2081 is connected to the top cover 213 and/or the bottom cover 214, and the end plate 2081 is provided with first air inlet holes2082 that is in communication with the first air duct 210. The end plate 2081 may be directly or indirectly connected to both the top cover 213 and the bottom cover 214, and the end plate 2081 may be directly assembled with the top cover 213 and the bottom cover 214 by bolts. As shown in FIG. 1, a busbar mounting rack 2084 may be provided between the end plate 2081 and the energy storage unit 220. The busbar mounting rack 2084 is directly or indirectly mounted on the first side plate 211 and the second side plate 212. The busbar mounting rack 2084 is also provided with a connecting piece 2083. The end plate 2081 may be mounted on the top cover 213 and/or the bottom cover 214, thereby realizing an indirect connection between the end plate 2081 and the first side plate 211 and the second side plate 212. In addition, by providing the first air inlet holes 2082 on the end plate 2081 that communicates with the first air duct 210, the air can flow into the energy storage module 201 from the first air inlet holes2082. A portion of the air flowing into the energy storage module 201 flows into the heat sink 209, and another portion of the air may flow into the second air duct 216, so that the battery cells 208 are surrounded by air, thereby improving the heat dissipation efficiency of the battery cells 208.

Furthermore, the energy storage module 201 is provided with an air supply hole 215, the air supply hole 215 connects the first space 40 and the second air duct 216. In the third direction, the air supply hole 215 is located in the middle of the energy storage module 201, it can also be understood that the air supply hole 215 is arranged at the middle position of the energy storage module 201.Specifically, both the top cover 213 and the bottom cover 214 are provided with air supply holes 215 that communicate with the second air duct 216. After the cold air flows into the first space 40, the cold air in the first space 40 can flow into the second air duct 216 through the air supply hole 215, surrounding the battery cells 208 with cold air, thereby further improving the heat dissipation efficiency of the battery cells 208.

In some embodiments of the present disclosure, as shown in FIG. 1 , the top cover 213 and/or the bottom cover 214 are provided with air supply holes 215 that communicate with the second air duct 216, for example: both the top cover 213 and the bottom cover 214 are provided with air supply holes 215 that communicate with the second air duct 216, the cold air can flow into the second air duct 216 through the air supply hole 215, surrounding the battery cells 208 with cold air, thereby further improving the heat dissipation efficiency of the battery cells 208.

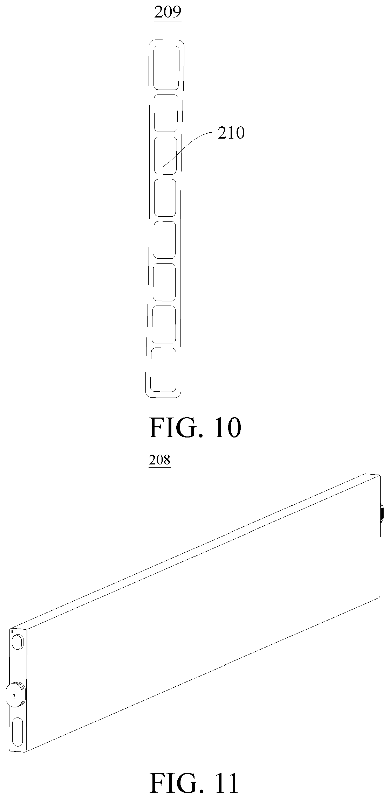

In some embodiments of the present disclosure, as shown in FIG. 11, the battery cell 208 has a flat shape resembling a blade, and the battery cell 208 can be a new type of lithium iron phosphate battery. The length dimension of the battery cell 208 is E, E satisfies the relationship: 400mm≤E≤1500mm, the width dimension of the battery cell 208 is F, F satisfies the relationship: 70mm≤F≤150mm, and the thickness dimension of the battery cell 208 is G, G satisfies the relationship: 10mm≤G≤25mm. Such an arrangement enables the flat-shaped battery cells 208 to be arranged in the energy storage module 201, and by arranging multiple battery cells 208 sequentially along the thickness direction of the battery cells 208, the energy density within the energy storage module 201 can be increased.

According to the energy storage cabinet of the embodiment of the present disclosure, including the energy storage module 201 of the above embodiments, the energy storage module 201 has a simple structure, which improves the assembly efficiency of the energy storage module 201, thereby improving the assembly efficiency of the energy storage cabinet. In addition, there is no need to set brackets for fixing the battery cells 208 inside the energy storage module 201, and more battery cells 208 can be arranged in the energy storage module 201, which improves the energy density of the energy storage module 201 and the energy storage cabinet. When the energy storage module 201 has the same energy density, the energy storage module 201 and the energy storage cabinet are smaller in size.

In some embodiments of the present disclosure, as shown in FIG. 23 to FIG. 31, the energy storage cabinet 200 can include an electrical connection assembly 100, the electrical connection assembly 100 is used for electrically connecting two energy storage modules 201, the electrical connection assembly 100 is plugged into the energy storage modules 201, two energy storage modules 201 are connected through the electrical connection assembly 100, which is suitable for being connected between the two energy storage modules 201 to achieve the electrical connection between the two energy storage modules 201, thus connecting the two energy storage modules 201 in series or in parallel. The present disclosure uses the arrangement where the electrical connection assembly 100 is connected between two energy storage modules 201 to connect the two energy storage modules 201 in series as an example for illustration. The energy storage module 201 is provided with a connection terminal 202, and each energy storage module 201 can be provided with two connection terminals 202, one of the two connection terminals 202 is configured as a positive connection terminal 2029 of the energy storage module 201, and the other of the two connection terminals 202 is configured as a negative connection terminal 2030 of the energy storage module 201.

As shown in FIG. 23 to FIG. 31, the electrical connection assembly 100 includes: a conductive bar 10 and an insulating cover 20. The conductive bar 10 can be set as a copper bar. The conductive bar 10 is suitable for plug-in cooperation with adjacent two energy storage modules 201 to electrically connect the two energy storage modules 201, the insulating cover 20 is covered on the conductive bar 10 and is suitable for connection with the energy storage modules 201. The conductive bar 10 is suitable for plugging and matching with the connection terminal 202 to electrically connect the conductive bar 10 and the connection terminal 202. The insulating cover 20 is covered on the conductive bar 10. The insulating cover 20 can prevent the conductive bar 10 from popping out of the connection terminal 202. The insulating cover 20 is connected to the connection terminal 202, and the insulating cover 20 is suitable for pressing against the conductive bar 10.

When two energy storage modules 201 need to be connected in series, the conductive bar 10 is plugged and connected to the positive connection terminal 2029 of one of the two energy storage modules 201, and the conductive bar 10 is also plugged and connected to the negative connection terminal 2030 of the other of the two energy storage modules 201, thus connecting the two energy storage modules 201 in series. During the plugging process of the conductive bar 10 and the connection terminal 202, there is no need to use tools such as a wrench to plug the conductive bar 10 into the connection terminal 202, which facilitates the docking of the conductive bar 10 and the connection terminal 202, and improving the assembly efficiency of the conductive bar 10 and the connection terminal 202, and reducing the installation cost of the conductive bar 10 and the connection terminal 202. At the same time, the insulating cover 20 is connected to the connection terminal 202 and presses against the conductive bar 10. By pressing against the conductive bar 10 through the insulating cover 20, the conductive bar 10 can be reliably plugged into the connection terminal 202, which can avoid virtual connection between the conductive bar 10 and the connection terminal 202, prevent arcing, improve the operational safety of the electrical connection assembly 100, and also improve the operational safety of the energy storage module 201. In addition, the insulating cover 20 is an insulating component, and the insulating cover 20 is covered on the conductive bar 10, which can prevent the conductive bar 10 from being exposed, avoid electric leakage, and improve high-voltage safety.

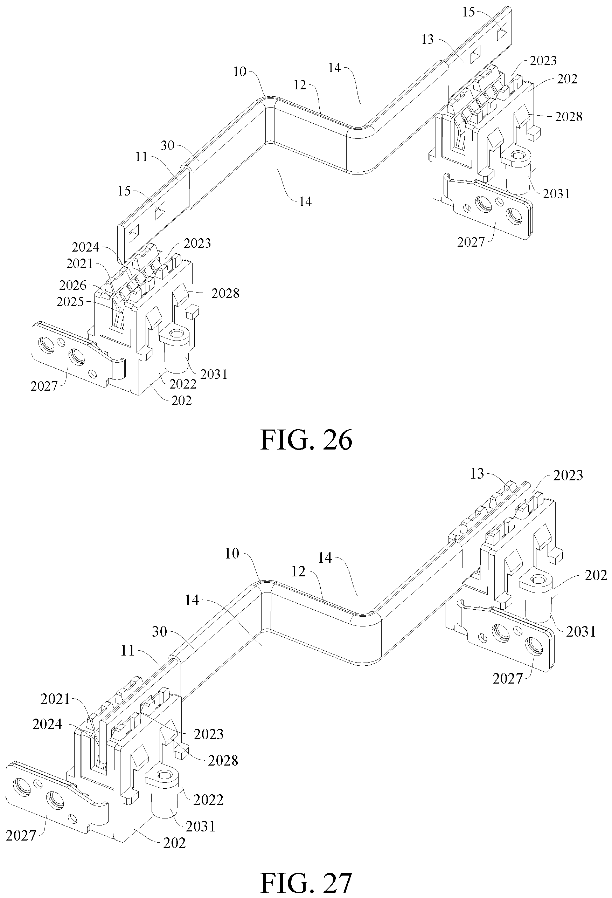

In some embodiments of the present disclosure, as shown in FIG. 26 to FIG. 29 and FIG. 31, the conductive bar 10 may include: a first sub-conductive bar 11, a second sub-conductive bar 12 and a third sub-conductive bar 13. The first sub-conductive bar 11 and the third sub-conductive bar 13 are respectively used for plugging and matching with the corresponding connection terminal 202. The second sub-conductive bar 12 is connected between the first sub-conductive bar 11 and the third sub-conductive bar 13 to separate the first sub-conductive bar 11 and the third sub-conductive bar 13, so that an avoidance space 14 is formed between the first sub-conductive bar 11 and the second sub-conductive bar 12 and between the third sub-conductive bar 13 and the second sub-conductive bar 12, and each avoidance space 14 is used for accommodating one connection terminal 202.

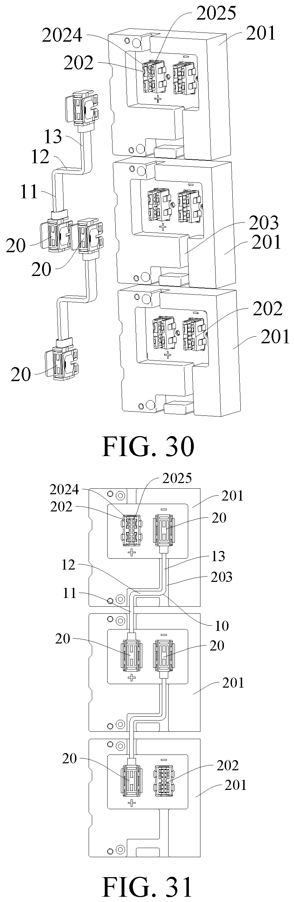

As shown in FIG. 30 and FIG. 31, the energy storage module 201 may be provided with a fool-proof slot 203.The shape of the fool-proof slot 203 is consistent with the shape of the conductive bar 10. When two energy storage modules 201 need to be connected in series, the first sub-conductive bar 11 is plugged into the positive connection terminal 2029 of one of the two energy storage modules 201, and the negative connection terminal 2030 of the energy storage module 201 connected to the first sub-conductive bar 11 is located in the avoidance space 14 between the first sub-conductive bar 11 and the second sub-conductive bar 12, and the third sub-conductive bar 13 is plugged into the negative connection terminal 2030 of the other of the two energy storage modules 201, and the positive connection terminal 2029 of the energy storage module 201 connected to the third sub-conductive bar 13 is located in the avoidance space 14 between the third sub-conductive bar 13 and the second sub-conductive bar 12. The conductive bar 10 is located in the fool-proof slot 203, and the fool-proof slot 203 limits the conductive bar 10 along the length, width and thickness direction of the conductive bar 10. This arrangement can conceal the conductive bar 10 in the fool-proof slot 203, prevent the conductive bar 10 from being scratched, and facilitate the positioning of the conductive bar 10. In addition, by setting the fool-proof slot 203 as a curved structure to cooperate and assemble with the conductive bar 10, it can prevent the conductive bar 10 from being installed incorrectly, and play a fool-proof role.

In some embodiments of the present disclosure, one end of the second sub-conductive bar 12 is connected to the first sub-conductive bar 11, and the other end of the second sub-conductive bar 12 is connected to the third sub-conductive bar 13, and the first sub-conductive bar 11 and the third sub-conductive bar 13 are extended in a direction away from each other. As shown in FIG. 26 to FIG. 29 and FIG. 31, one end of the second sub-conductive bar 12 is connected to one end of the first sub-conductive bar 11, and the other end of the second sub-conductive bar 12 is connected to one end of the third sub-conductive bar 13. Furthermore, the second sub-conductive bar 12 is vertically arranged with the first sub-conductive bar 11 and the third sub-conductive bar 13. Such an arrangement can achieve the technical effect of forming an avoidance space 14 between the first sub-conductive bar 11 and the second sub-conductive bar 12 and between the third sub-conductive bar 13 and the second sub-conductive bar 12, so that the arrangement of the first sub-conductive bar 11, the second sub-conductive bar 12 and the third sub-conductive bar 13 is reasonable. Moreover, the conductive bar 10 can be configured as a "Z"-shaped structure. By configuring the conductive bar 10 as a "Z"-shaped structure, and the positive connection terminal 2029 and the negative connection terminal 2030 are led out from the same side of the energy storage module 201, it facilitates the installation and disassembly of the electrical connection assembly 100, as well as the maintenance of the electrical connection assembly 100.

In some embodiments of the present disclosure, as shown in FIG. 26 to FIG. 28, the conductive bar 10 is provided with a positioning groove 15, and the positioning groove 15 is suitable for positioning and matching with the connection terminal 202. Further, the positioning groove 15 penetrates the conductive bar 10 in the thickness direction of the conductive bar 10. The first sub-conductive bar 11 and the third sub-conductive bar 13 are provided with positioning grooves 15, and the connection terminal 202 can be provided with a limiting protrusion 2026. After the conductive bar 10 is plugged into the connection terminal 202, the limiting protrusion 2026 extends into the positioning groove 15 of the conductive bar 10. Through the cooperation of the limiting protrusion 2026 and the positioning groove 15, the conductive bar 10 can be reliably plugged into the connection terminal 202, which can prevent the connection terminal 202 and the conductive bar 10 from being separated, thereby further avoiding the virtual connection between the conductive bar 10 and the connection terminal 202, and also preventing the conductive bar 10 from shaking relative to the connection terminal 202.

Furthermore, the first sub-conductive bar 11 and the third sub-conductive bar 13 are both provided with a plurality of positioning grooves 15, and the connection terminal 202 can be provided with a plurality of limiting protrusions 2026. Through the cooperation of the plurality of positioning grooves 15 and the plurality of limiting protrusions 2026, the conductive bar 10 can be more reliably plugged into the connection terminal 202, and the connection terminal 202 and the conductive bar 10 can be further prevented from being separated, thereby further avoiding the virtual connection between the conductive bar 10 and the connection terminal 202, and further preventing the conductive bar 10 from shaking relative to the connection terminal 202.

In some embodiments of the present disclosure, as shown in FIG. 23, FIG. 28, and FIG. 29, the insulating cover 20 may include: an insulating cover body 21 and a first clamping portion 22, the insulating cover body 21 is covered on the conductive bar 10 and is suitable for pressing against the conductive bar 10, in the width direction of the insulating cover 20, when the electrical connection assembly 100 is placed in the direction in FIG. 23, the width direction of the insulating cover 20 refers to the left-right direction in the FIG., and the first clamping portion 22 is provided on at least one side of the insulating cover body 21, for example: in the width direction of the insulating cover 20, the first clamping portion 22 is provided on both sides of the insulating cover body 21, and the first clamping portion 22 is suitable for clamping with the connection terminal 202. By installing the first clamping portion 22 on the insulating cover body 21, the insulating cover 20 can be stably installed on the connection terminal 202, so that the insulating cover body 21 can be reliably pressed against the conductive bar 10, thereby further preventing the virtual connection between the conductive bar 10 and the connection terminal 202, and the insulating cover body 21 is covered on the conductive bar 10, which can play an insulating protection role, avoid the electric leakage of the electrical connection assembly 100, and improve the operational safety of the electrical connection assembly 100. At the same time, by clamping the insulating cover 20 and the connection terminal 202 together, it is convenient to disassemble and assemble the insulating cover 20 and the connection terminal 202, which can improve the assembly efficiency of the insulating cover 20 and the connection terminal 202.

In some embodiments of the present disclosure, in the length direction of the insulating cover 20, when the electrical connection assembly 100 is placed in the direction shown in FIG. 23, the length direction of the insulating cover 20 refers to the front-back direction shown in FIG. 23, and a shielding portion 23 is provided at the end of the insulating cover body 21 away from the conductive bar 10, and the shielding portion 23 is used for shielding the conductive bar 10. As shown in FIG. 23, FIG. 27 and FIG. 29, the connection terminal 202 defines a plug-in slot 2023. As shown in FIG. 23 and FIG. 27, when the electrical connection assembly 100 is placed in the direction shown in FIG. 27, the upper end of the plug-in slot 2023 is open, and in the length direction of the insulating cover 20, the front end of the plug-in slot 2023 and the back end of the plug-in slot 2023 are both open. The conductive bar 10 can be pressed into the plug-in slot 2023 of the connection terminal 202 from the open end of the plug-in slot 2023 to achieve plug-in matching between the conductive bar 10 and the connection terminal 202. After the conductive bar 10 is plugged into the plug-in slot 2023, the insulating cover 20 is installed on the connection terminal 202. The shielding portion 23 can shield the open end of the plug-in slot 2023 in the length direction of the insulating cover 20, thereby shielding the conductive bar 10, and further preventing the electric leakage of the electrical connection assembly 100. Furthermore, the insulating cover 20 covers the top of the plug-in slot 2023, and the insulating cover 20 can limit the position of the conductive bar 10, thereby preventing the conductive bar 10 from popping out of the plug-in slot 2023.

In some embodiments of the present disclosure, as shown in FIG. 23, FIG. 26 to FIG. 28, the conductive bar 10 is externally fitted with an insulating sheath 30, and the insulating sheath 30 has an insulating function. Further, the insulating sheath 30 can be made of insulating glue. Further, in the length direction of the conductive bar 10, at least part of the structure of the first sub-conductive bar 11 and the third sub-conductive bar 13 is exposed outside the insulating sheath 30. By fitting the insulating sheath 30 over the conductive bar 10, the electric leakage of the conductive bar 10 can be avoided, and electric shock can be prevented after the user touches the conductive bar 10, thereby further improving the operational safety of the electrical connection assembly 100.

The energy storage module 201 is provided with a connection terminal 202, and a plurality of energy storage modules 201 are provided in the energy storage cabinet. A plurality of energy storage modules 201 are stacked in sequence in the height direction of the energy storage cabinet, and each energy storage module 201 is provided with two connection terminals 202, the two connection terminals 202 are arranged in the width direction of the energy storage module 201, and the two connection terminals 202 are arranged at the same end of the energy storage module 201, and one of the two connection terminals 202 is configured as a positive connection terminal 2029 of the energy storage module 201, and the other of the two connection terminals 202 is configured as a negative connection terminal 2030 of the energy storage module 201. The electrical connection assembly 100 is used for electrically connecting two energy storage modules 201.

When two energy storage modules 201 need to be connected in series, the conductive bar 10 is plugged and connected to the positive connection terminal 2029 of one of the two energy storage modules 201, and the conductive bar 10 is also plugged and connected to the negative connection terminal 2030 of the other of the two energy storage modules 201, so as to connect the two energy storage modules 201 in series. During the plugging process of the conductive bar 10 and the connection terminal 202, there is no need to use tools such as a wrench to plug the conductive bar 10 into the connection terminal 202, facilitating the docking of the conductive bar 10 and the connection terminal 202, and improving the assembly efficiency of the conductive bar 10 and the connection terminal 202, thereby improving the assembly efficiency of the energy storage cabinet, and also reducing the installation cost of the conductive bar 10 and the connection terminal 202. At the same time, the insulating cover 20 is connected to the connection terminal 202, and the insulating cover 20 presses against the conductive bar 10. By pressing against the conductive bar 10 through the insulating cover 20, the conductive bar 10 can be reliably plugged into the connection terminal 202, which can avoid virtual connection between the conductive bar 10 and the connection terminal 202, prevent arcing, improve the operational safety of the electrical connection assembly 100, and also improve the operational safety of the energy storage module 201, thereby improving the operational safety of the energy storage cabinet. In addition, the insulating cover 20 is an insulating component, and the insulating cover 20 is covered on the conductive bar 10, which can prevent the conductive bar 10 from being exposed, avoid electric leakage, and improve high-voltage safety.

In some embodiments of the present disclosure, as shown in FIG. 31, the energy storage module 201 is provided with two connection terminals 202, one of the two connection terminals 202 is connected to the conductive bar 10, and the other connection terminal 202 is away from the conductive bar 10. Each energy storage module 201 is provided with two connection terminals 202, one of the two connection terminals 202 of the energy storage module 201 is connected to the conductive bar 10, and the other connection terminal 202 is located in the avoidance space 14 formed by the conductive bar 10, so as to keep the connection terminal 202 away from the conductive bar 10 and avoid interference between the connection terminal 202 and the conductive bar 10. The two connection terminals 201 are arranged at the same end of the energy storage module 201, and the two connection terminals 201 are arranged close to the same side of the energy storage module 201. It can also be understood that the energy storage module 201 is provided with a positive connection terminal 2029 and a negative connection terminal 2030, and the positive connection terminal 2029 and the negative connection terminal 2030 are arranged close to the same side of the energy storage module 201.

As shown in FIG. 31, when the electrical connection assembly 100 and the connection terminal 202 are placed in the direction in FIG. 31, the positive connection terminal 2029 and the negative connection terminal 2030 are arranged close to the same side of the energy storage module 201, for example, the positive connection terminal 2029 and the negative connection terminal 2030 are arranged close to the left side of the energy storage module 201.

In some embodiments of the present disclosure, as shown in FIG. 26 and FIG. 27, the connection terminal 202 may include: a conductive elastic piece 2021 and an insulating terminal body 2022, the terminal body 2022 defines a plug-in slot 2023, the conductive elastic piece 2021 is disposed in the plug-in slot 2023. After the conductive bar 10 is plugged into the plug-in slot 2023, it makes contact with the conductive elastic piece 2021. Furthermore, when the electrical connection assembly 100 is placed in the direction shown in FIG. 27, the upper end of the plug-in slot 2023 is open, and in the length direction of the insulating cover 20, the front end and the back end of the plug-in slot 2023 are both open, and the conductive bar 10 is pressed into the plug-in slot 2023 of the connection terminal 202 from the open end of the plug-in slot 2023, causing the conductive elastic piece 2021 to make contact with the conductive bar 10, thereby achieving electrical connection between the conductive bar 10 and the conductive elastic piece 2021.

Further, as shown in FIG. 26 and FIG. 27, the conductive elastic piece 2021 may include a first conductive elastic piece 2024 and a second conductive elastic piece 2025, the first conductive elastic piece 2024 and the second conductive elastic piece 2025 are arranged opposite to each other in the width direction of the connection terminal 202, the width direction of the connection terminal 202 is consistent with the width direction of the insulating cover 20, and the conductive bar 10 is suitable for being plugged between the first conductive elastic piece 2024 and the second conductive elastic piece 2025. Furthermore, there are multiple first conductive elastic pieces 2024 and second conductive elastic pieces 2025, the multiple first conductive elastic pieces 2024 and the multiple second conductive elastic pieces 2025 are arranged in sequence along the length direction of the connection terminal 202, and the multiple first conductive elastic pieces 2024 and the multiple second conductive elastic pieces 2025 correspond to each other one by one, and the length direction of the connection terminal 202 is consistent with the length direction of the insulating cover 20. After the conductive bar 10 is pressed into the plug-in slot 2023 of the connection terminal 202 from the open end of the plug-in slot 2023, the conductive bar 10 is sandwiched between the first conductive elastic piece2024 and the second conductive elastic piece2025, ensuring reliable contact between the conductive bar 10 and both the first conductive elastic piece2024 and the second conductive elastic piece2025, thereby further avoiding virtual connection between the conductive bar 10 and the connection terminal 202.

Furthermore, as shown in FIG. 26 and FIG. 27, the conductive bar 10 is provided with a positioning groove 15, and at least one of the first conductive elastic piece2024 and the second conductive elastic piece2025 has a limiting protrusion 2026, the limiting protrusion 2026 is suitable for extending into the positioning groove 15 of the conductive bar 10. The positioning groove 15 can penetrate the conductive bar 10 in the thickness direction of the conductive bar 10, the first sub-conductive bar 11 and the third sub-conductive bar 13 are provided with the positioning groove 15, the first conductive elastic piece2024 and the second conductive elastic piece2025 are both provided with a limiting protrusion 2026, after the conductive bar 10 is plugged into the connection terminal 202, the limiting protrusion 2026 extends into the positioning groove 15 of the conductive bar 10. Through the cooperation of the limiting protrusion 2026 and the positioning groove 15, the conductive bar 10 can be reliably plugged into the connection terminal 202, and the conductive elastic piece2021 and the conductive bar 10 can be prevented from being separated, thereby further preventing virtual connection between the conductive bar 10 and the conductive elastic piece2021, and also preventing the conductive bar 10 from shaking relative to the connection terminal 202. In addition, through the limit protrusion 2026 extending into the positioning groove 15 of the conductive bar 10, it can be determined whether the conductive bar 10 has been properly plugged in.

In some embodiments of the present disclosure, as shown in FIG. 23 and FIG. 26, the connection terminal 202 may further include: a conductive member 2027, the conductive member 2027 may be set as a metal member, the conductive member 2027 is connected to the conductive elastic piece 2021, and the conductive member 2027 is suitable for being electrically connected to the energy storage module 201. Furthermore, one end of the conductive member 2027 extends into the plug-in slot 2023 and is connected to the conductive elastic piece 2021. When the connection terminal 202 is installed on the energy storage module 201, the conductive member 2027 is connected between the conductive elastic piece 2021 and the energy storage module 201, so as to realize the electrical connection between the connection terminal 202 and the energy storage module 201.

In some embodiments of the present disclosure, as shown in FIG. 23 and FIG. 26, the insulating cover 20 is provided with a first clamping portion 22, and the connection terminal 202 is provided with a second clamping portion 2028, and the second clamping portion 2028 is suitable for being clamped with the first clamping portion 22 of the insulating cover 20. In the width direction of the connection terminal 202, the second clamping portion 2028 is provided on both sides of the connection terminal 202, and the second clamping portion 2028 is connected to the first clamping portion 22 one by one. By clamping the second clamping portion 2028 with the first clamping portion 22, it is convenient to install the insulating cover 20 on the connection terminal 202 and also convenient to remove the insulating cover 20 from the connection terminal 202, so as to improve the efficiency of disassembly and assembly of the insulating cover 20 and the connection terminal 202. However, the present disclosure is not limited to this, and the insulating cover 20 and the connection terminal 202 can also be assembled by bolts. The specific assembly method of the insulating cover 20 and the connection terminal 202 can be selected according to actual conditions.

Furthermore, as shown in FIG. 23 and FIG. 26, the first clamping portion 22 is one of the clamping hole and the clamping hook, and the second clamping portion 2028 is the other of the clamping hole and the clamping hook. For example, the first clamping portion 22 is a clamping hole, and the second clamping portion 2028 is a clamping hook. During the assembly process of the insulating cover 20 and the connection terminal 202, the insulating cover 20 is pressed to make the clamping hook snap into the clamping hole, and the assembly of the insulating cover 20 and the connection terminal 202 can be completed. Such an arrangement can simplify the structure of the first clamping portion 22 and the second clamping portion 2028, reduce the difficulty of producing the insulating cover 20 and the connection terminal 202, and improve the production efficiency of the insulating cover 20 and the connection terminal 202.

In some embodiments of the present disclosure, in the length direction of the connection terminal 202, the two ends of the plug-in slot 2023 are open, and the insulating cover body 21 is provided with a shielding portion 23, the shielding portion 23 is used for shielding the open end of the plug-in slot 2023 away from the conductive bar 10. When the connection terminal 202 is placed in the direction shown in FIG. 27, the upper end of the plug-in slot 2023 is open, and in the length direction of the connection terminal 202, both ends of the plug-in slot 2023 are open, and the conductive bar 10 is pressed into the plug-in slot 2023 of the connection terminal 202 from the open end of the plug-in slot 2023, causing the conductive elastic piece 2021 to make contact with the conductive bar 10. After the conductive bar 10 is plugged into the plug-in slot 2023, the insulating cover 20 is installed on the connection terminal 202, and the shielding portion 23 can shield the open end of the plug-in slot 2023, thereby shielding the conductive bar 10, and further preventing electric leakage of the electrical connection assembly 100.

Furthermore, as shown in FIG. 23, the connection terminal 202 is equipped with a mounting post 2031, which is connected to the energy storage module 201 by bolt passing through the mounting posts 2031, thereby securely fixing the connection terminal 202 to the energy storage module 201.

It should be noted that, firstly, multiple energy storage modules 201 are installed in the energy storage cabinet, and the multiple energy storage modules 201 are stacked sequentially in the height direction of the energy storage cabinet. Then the conductive bar 10 is installed in the fool-proof slot 203, ensuring that the lower end of the conductive bar 10 aligns with the connection terminal 202 of the lower energy storage module 201, while the upper end of the conductive bar 10 aligns with the connection terminal 202 of the upper energy storage module 201, and press the conductive bar 10 firmly so that it is securely positioned between the first conductive elastic piece 2024 and the second conductive elastic piece 2025, continuing until the conductive bar 10 can no longer be pressed further into the plug-in slot 2023.

In some embodiments of the present disclosure, the module assembly includes: an energy storage module and a ventilation panel 207, and the energy storage module includes an energy storage unit 220 and a heat dissipation end plate 206, wherein:

The energy storage unit 220 is used for storing and releasing electrical energy. The energy storage unit 220 generates heat during charging and discharging. A heat dissipation end plate 206 is installed on one side of the energy storage unit 220. In other words, the heat dissipation end plate 206 can be the end plate on one side of the exterior of the energy storage unit 220. The heat dissipation end plate 206 provides support and protection for the energy storage unit 220. At the same time, the heat dissipation end plate 206 is equipped with a driving fan 2061, which can enhance the airflow velocity passing through the energy storage unit 220, thereby improving the heat dissipation effect of the energy storage unit 220 and maintaining its operation at an appropriate temperature. For example, the heat dissipation end plate 206 is set on one side of the energy storage unit 220 in the length direction to increase the heat exchange area and heat exchange time between the airflow and the energy storage unit 220, thereby enhancing the heat dissipation effect of the energy storage unit 220.

The ventilation panel 207 is set on the outside of the heat dissipation end plate 206. That is to say, the ventilation panel 207 is set on the side of the heat dissipation end plate 206 away from the energy storage unit 220. The ventilation panel 207 can cover the heat dissipation end plate 206. The ventilation panel 207 includes a panel frame 2071 and a ventilation grille 2072 fixed to the panel frame 2071. The panel frame 2071 is suitable for being fixed to the heat dissipation end plate 206. The ventilation grille 2072 is used for ventilation and protecting the heat dissipation end plate 206. The ventilation grille 2072 is hollowed out to facilitate airflow passing through it, ensuring the heat dissipation effect of the energy storage module 201. At the same time, the ventilation grille 2072 can also prevent foreign objects from entering the driving fan 2061 and the energy storage unit 220, ensuring the safety and reliability of the energy storage module 201, foreign objects may be debris, insects, fingers, etc.. In addition, the ventilation grille 2072 can also visually shield the heat dissipation end plate 206 to reduce the exposure of the driving fan 2061 and other electrical components on the heat dissipation end plate 206 to improve the neatness and aesthetics of the module assembly. Additionally, the ventilation grille 2072 can also be equipped with a company logo to increase the product recognition of the module assembly.

It should be noted that, compared to the service life of the energy storage unit 220, the driving fan 2061 is a consumable part. When the driving fan 2061 needs maintenance or replacement due to failure, removing the ventilation panel 207 will expose the driving fan 2061 located on the heat dissipation end plate 206. The disassembly and assembly direction of the driving fan 2061 on the heat dissipation end plate 206 is located on the side of the heat dissipation end plate 206 that faces away from the energy storage unit 220. In other words, the disassembly and assembly direction of the driving fan 2061 is located on the side of the heat dissipation end plate 206 towards the ventilation panel 207. This allows maintenance or replacement of the driving fan 2061 without having to remove the heat dissipation end plate 206, thereby improving the convenience of module assembly maintenance. As shown in FIG. 12, the driving fan 2061 is installed on the side of the heat dissipation end plate 206 that faces away from the energy storage unit 220 through a plurality of second fasteners 20611, the second fasteners 20611 can be bolts.

According to the module assembly of the embodiment of the present disclosure, a heat dissipation end plate 206 is provided on one side of the energy storage unit 220. The heat dissipation end plate 206 is provided with a driving fan 2061. A ventilation panel 207 is provided on the outside of the heat dissipation end plate 206. The ventilation panel 207 ensures the heat dissipation effect of the module assembly and prevents foreign objects from entering. Moreover, the ventilation panel 207 can also improve the convenience of module assembly maintenance, thereby enhancing its market competitiveness.

In some embodiments of the present disclosure, the perforation ratio α of the ventilation grille 2072 satisfies the following formula:α≥ (µV/v) / S1, where µ is the experimental coefficient, and µ satisfies the relationship 0.9 ≤µ≤ 1.1, V is the exhaust air volume per unit time when the driving fan 2061 runs at full power, v is the maximum air speed of the driving fan 2061, and S1 is the effective air outlet area of the driving fan 2061, thereby ensuring the ventilation effect of the heat dissipation end plate 206 and making the heat dissipation end 206 meet the heat dissipation requirements of the energy storage module 201.

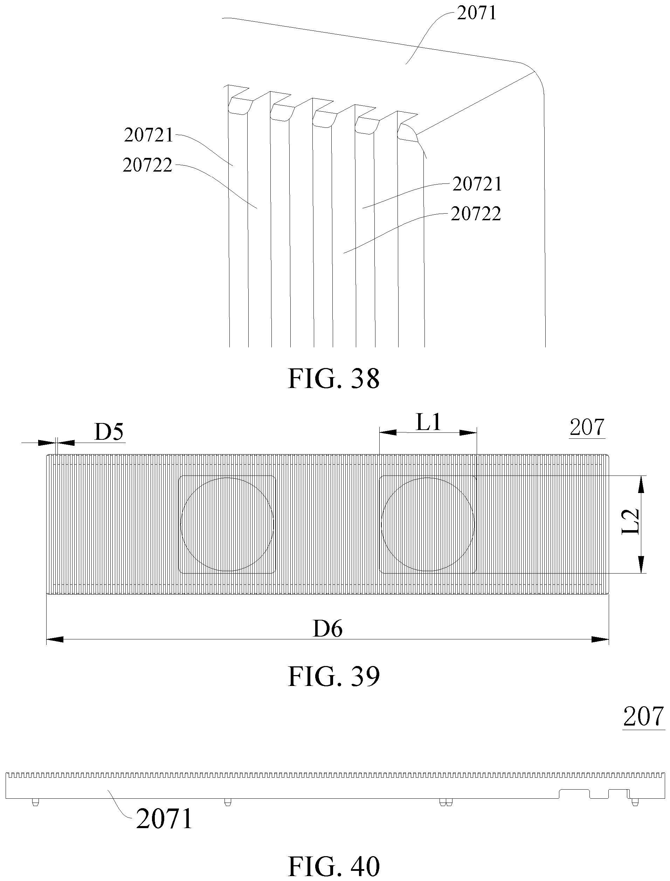

In a specific embodiment of the present disclosure, µ can be values such as 0.9, 1.0, etc., and the exhaust air volume when the driving fan 2061 runs at full power is 149.50CFM, 1CFM=0.000472m³/s, that is, V is 0.070564m³/s , the maximum air speed v of the driving fan 2061 is 17m/s, and the effective air outlet area of the driving fan 2061 is L1*L2 (as shown in FIG. 39), L1=L2=92mm, that is, S1 is 0.008464m², thus, ( µV/v)/S1=49%, that is to say, when the perforation ratio α of the ventilation grille 2072 is greater than or equal to 49%, it can satisfy the heat dissipation requirements of the energy storage module 201. At the same time, in order to ensure the shielding and protective effect of the ventilation grille 2072 on the heat dissipation end plate 206, as well as its aesthetics, the perforation ratio α of the ventilation grille 2072 is preferably example 50%.

Furthermore, the perforation ratio α of the ventilation grille 2072 also satisfies the following formula: α≤70%. It can be understood that when α is greater than 70%, the strength of the ventilation grille 2072 is relatively weak, making it prone to damage, and its ability to prevent foreign objects from entering the driving fan 2061 and the energy storage unit 220 is poor.

In some embodiments of the present disclosure, as shown in FIG. 38, the ventilation grille 2072 includes a plurality of air guide grilles 20721 arranged at intervals. Both ends of each air guide grille 20721 are fixed to the panel frame 2071, and air outlet holes 20722 are formed between adjacent air guide grilles 20721.The air outlet holes 20722 have equal widths, that is to say, the width of the air outlet hole 20722 in the airflow direction is equal and the width of the air outlet hole 20722 is D1. The air guide grilles 20721 have equal widths, that is to say, the width of the air guide grille 20721 in the airflow direction is equal, and the width D2 of the air guide grille 20721 satisfies the following formula: 0.6≤D1/D2≤1.4. Equal-width air outlet holes and equal-width air guide grilles facilitate the production and manufacturing of the ventilation grille 2072. At the same time, when the air outlet holes 20722 and air guide grilles 20721 are of equal width, D1/D2 is approximately equivalent to the perforation ratio α of the ventilation grille 2072. By setting 0.6≤D1/D2≤1.4, the width dimension of the air outlet hole 20722 is appropriate, which can improve the heat dissipation effect of the energy storage module 201, and the ventilation grille 2072 can prevent foreign objects from entering the driving fan 2061 and the energy storage unit 220.

In a specific embodiment of the present disclosure, the ventilation panel 207 is manufactured using an integrated injection molding process, D1/D2=1, D1 is 2mm, D2 is 2 mm, which facilitates the demolding of the ventilation panel 207 and improves the yield rate of the ventilation panel 207.

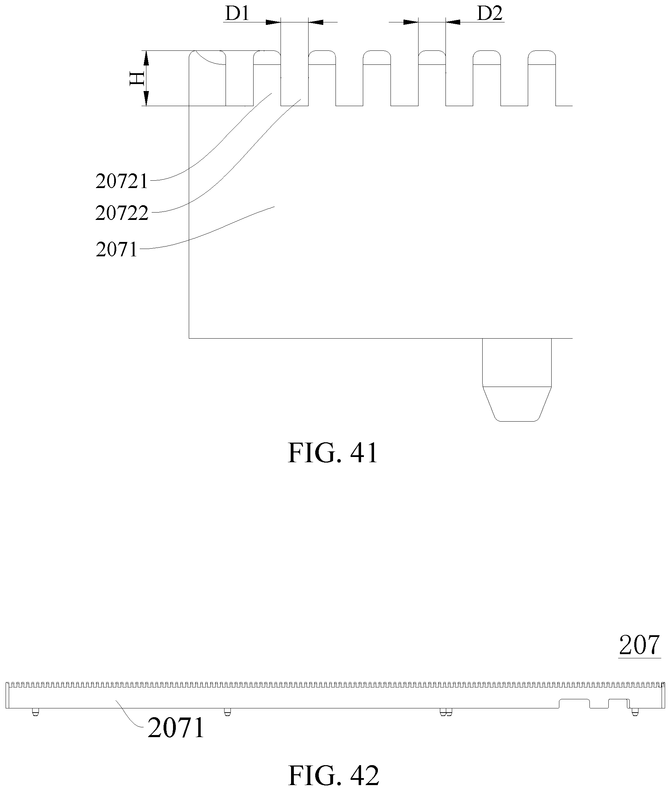

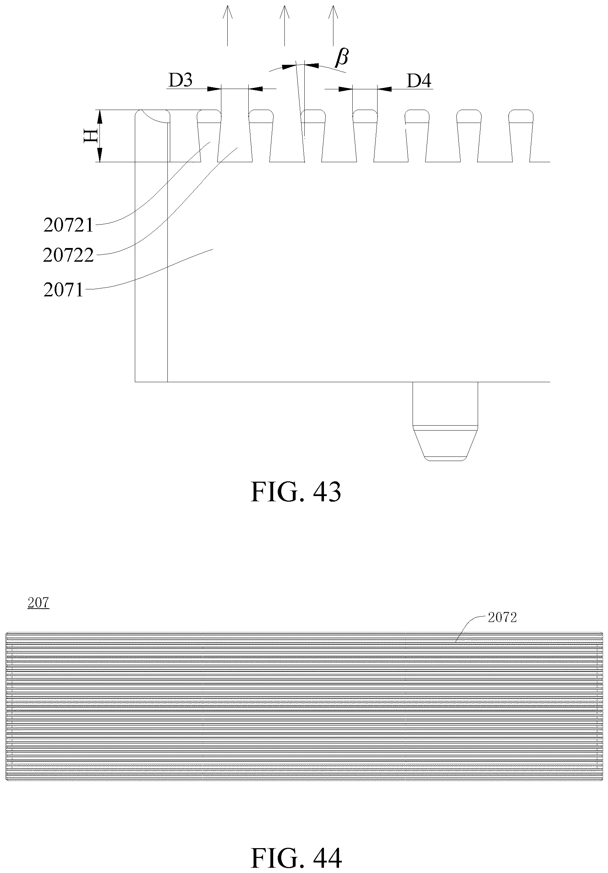

In other embodiments of the present disclosure, as shown in FIG. 42 and FIG. 43, the ventilation grille 2072 includes a plurality of air guide grilles 20721 arranged at intervals. Both ends of each air guide grille 20721 are fixed to the panel frame 2071, and air outlet holes 20722 are formed between adjacent air guide grilles 20721. The width of the air outlet hole 20722 in the airflow direction gradually decreases, and the minimum width of the air outlet hole 20722 is D3. The width of the air guide grille 20721 in the airflow direction gradually increases, and the maximum width D4 of the air guide grille 20721 satisfies the following formula: 0.6≤D3/D4≤1.4. This ensures the ventilation effect of the ventilation grille 2072 and prevents small foreign objects from entering the energy storage module 201 through the air outlet holes 20722.

It can be understood that the air outlet holes 20722 are of variable width, and the air guide grilles 20721 are also of variable width. When the driving fan 2061 is driven to blow air towards the ventilation grille 2072, the innermost width of the air outlet holes 20722 is greater than their outermost width, while the innermost width of the air guide grille 20721 is smaller than its outermost width, D3/D4 is approximately equal to the perforation ratio α of the ventilation grill 2072. If D3/D4 < 0.6, the minimum width of the air outlet holes 20722 is too small, and the ventilation grill 2072 will cause poor heat dissipation of the energy storage module 201, if D3/D4 > 1.4, the minimum width of the air outlet holes 20722 is too large, and the ventilation grill 2072 will have difficulty preventing foreign objects from entering the driving fan 2061 and the energy storage unit 220.

When the driving fan 2061 is driven to blow air towards the energy storage unit 220, the innermost width of the air outlet holes 20722 is smaller than its outermost width, and the innermost width of the air guide grille 20721 is greater than its outermost width, if D3/D4 < 0.6, the maximum width of the air outlet hole 20722 is too small, and the ventilation grill 2072 will cause poor heat dissipation of the energy storage module 201, if D3/D4>1.4, the maximum width of the air outlet hole 20722 is too large, and the ventilation grill 2072 will have difficulty preventing foreign objects from entering the driving fan 2061 and the energy storage unit 220.

In some embodiments of the present disclosure, as shown in FIG. 43, the innermost width of the air outlet hole 20722 is greater than its outermost width, and the innermost width of the air guide grille 20721 is smaller than its outermost width. It can be understood that the innermost width of the air outlet hole 20722 refers to the width of the side of the air outlet hole 20722 close to the panel frame 2071, the outermost width of the air outlet hole 20722 refers to the width of the side of the air outlet hole 20722 away from the panel frame 2071, and the innermost width of the air guide grille 20721 refers to the width of the side of the air guide grille 20721 close to the panel frame 2071, and the outermost width of the air guide grille 20721 refers to the width of the side of the air guide grille 20721 away from the panel frame 2071. That is to say, the width of the side of the air outlet hole 20722 close to the driving fan 2061 is greater than the width of the side away from the driving fan 2061, the width of the side of the air guide grille 20721 close to the driving fan 2061 is smaller than the width of the side away from the driving fan 2061. The air outlet hole 20722 can be designed to form a reverse flare structure in the direction of the airflow, which helps to reduce the resistance to the airflow exiting from the driving fan 2061 caused by the air outlet holes 20722 and the air guide grille 20721. This design enhancement promotes better heat dissipation efficiency for the module assembly.

In some embodiments of the present disclosure, as shown in FIG. 43, the angle β between the air guide side wall of the air guide grille 20721 and the airflow direction satisfies the following formula: 5°≤β≤15°, for example, β can be 5°, or 10°, or 15°. This design reduces the resistance to the airflow exiting from the driving fan 2061 caused by the air outlet holes 20722 and the air guide grille 20721. If β is less than 5°, the reduction in resistance to the airflow exiting from the driving fan 2061 will not be significant. On the other hand, if β is greater than 15°, it will compromise the strength of the air guide grille 20721, making it prone to deformation and vibration under the force of the exiting airflow.

In some embodiments of this present disclosure, the material used for the ventilation panel 207 is PPO (Polyphenylene Oxide), which has good toughness, heat resistance, flame retardancy, wear resistance, oxidation resistance, and weatherability, and other advantages. The life cycle of PPO is at least equivalent to that of the energy storage unit 220 (10-15 years), and can remain underformed when exposed to hot air for a long time.

In some embodiments of the present disclosure, multiple air guide grilles 20721 are arranged at equal intervals along the fourth direction, so that the air guide grilles 20721 and air outlet holes 20722 are evenly distributed on the ventilation grille 2072. The projection length D5 of the air guide grilles 20721 in the fourth direction and the projection length D6 of the panel frame 2071 in the fourth direction satisfy the following formula: 0.002 ≤ D5/D6 ≤ 0.006. This ensures that the ventilation grille 2072 has a sufficient number of air guide grilles 20721, resulting in a relatively dense arrangement of both air guide grilles 20721 and air outlet holes 20722, which improves the air permeability uniformity of the ventilation grille 2072 and prevents small foreign objects from entering the interior of the module assembly through the air outlet holes 20722.

The fourth direction may coincide with the first direction and the second direction. For example, as shown in FIG. 7, the fourth direction may be the length direction of the panel frame 2071, and the projected length D6 of the panel frame 2071 in the fourth direction is the length of the panel frame 2071. The length of the panel frame 2071 can be equal to or similar to the length of the heat dissipation end plate 206. The projected length D5 of the air guide grille 20721 in the fourth direction is the maximum width of the air guide grille 20721. When D6 is 531.4 mm, in order to ensure uniform air permeability of the ventilation grilles 2072 and prevent the passage of foreign objects, the projected length D5 of each air guide grille 20721 in the fourth direction may be 2 mm.

In some embodiments of the present disclosure, as shown in FIG. 9 and FIG. 43, the height H of the air guide grille 20721 extending outwards from the panel frame 2071 satisfies the following ratio relationship, 1≤H/D5<4. This ensures that the air guide grille 20721 has sufficient strength. Additionally, it allows the air guide grille 20721 to guide the airflow as it passes through the air outlet holes 20722 located between two the air guide grilles 20721, preventing the airflow from diverging and creating turbulence, thereby helping to improve the heat dissipation effect of the driving fan 2061. It can be understood that the height H of the air guide grille 20721 extending outwards from the panel frame 2071 is the projected length of the air guide grille 20721 along the straight line of the airflow direction. For example, when D5 is 2 mm, the optional size of H could be 4 mm.

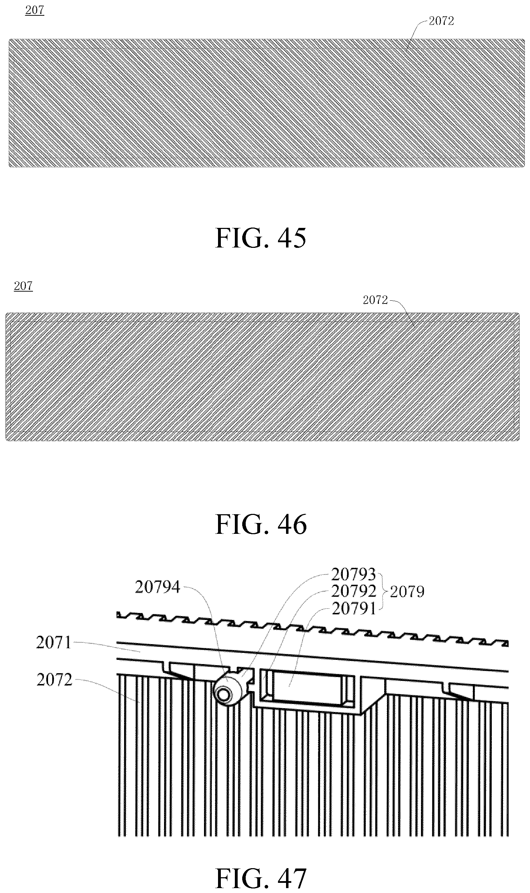

In some embodiments of the present disclosure, the air guide grille 20721 is a straight air guide grille, and the angle δ between the length direction of the straight air guide grille and the length direction of the panel frame 2071 satisfies the following range: 0°≤δ≤180°. A straight air guide grille is convenient for manufacturing and enables the ventilation panel 207 to form a harmonious and aesthetically pleasing overall visual effect. In some specific embodiments, when δ=90°, the ventilation panel 207 is as shown in FIG. 32. When δ=0°, the ventilation panel 207 is as shown in FIG. 44, when δ=45°, the ventilation panel 207 is as shown in FIG. 45, and when δ=135°, the ventilation panel 207 is as shown in FIG. 46.

In other embodiments of the present disclosure, the air guide grille 20721 can also be a curved air guide grille that extends along a bent or curved path.

In some embodiments of the present disclosure, the energy storage unit 220 includes a plurality of battery cells, which are arranged sequentially and spaced apart along the thickness direction of the battery cells, forming heat dissipation air passages extending along the length direction of the battery cells. These air passages have a large heat exchange area with the battery cells, and the heat dissipation end plate 206 is positioned at one end of the battery cells along their length direction, enhancing the heat dissipation effect of the energy storage unit 220.

In some embodiments of the present disclosure, as shown in FIG. 4 and FIG. 12, the heat dissipation end plate 206 is provided with a plurality of driving fans 2061, which are arranged at equal intervals along the length direction of the heat dissipation end plate 206. This ensures uniform heat dissipation of the energy storage unit 220, avoids local overheating of the energy storage unit 220 and prevents the risk of occurrence of thermal runaway of the energy storage unit 220.

In some embodiments of the present disclosure, as shown in FIG. 12, FIG. 47 and FIG. 48, the heat dissipation end plate 206 is provided with a first mounting portion 2069, and the ventilation panel 207 is provided with a second mounting portion 2079 corresponding to the first mounting portion 2069. One of the first mounting portion 2069 and the second mounting portion 2079 is equipped with a magnetic component 20691, and the other is equipped with a magnetic attachment piece 20791. The ventilation panel 207 and the heat dissipation end plate 206 are attached through the magnetic attraction between the magnetic component 20691 and the magnetic attachment piece 20791, the ventilation panel 207 can be easily installed on the heat dissipation end plate 206 without the use of installation tools, or the ventilation panel 207 can be detached from the heat dissipation end plate 206, thereby improving the installation and removal efficiency of the ventilation panel 207. At the same time, when the magnetic component 20691 and the magnetic attachment piece 20791 are attracted, the assembly gap between the ventilation panel 207 and the heat dissipation end plate 206 is small and uniform, and the ventilation panel 207 is not prone to shaking. The magnetic force does not affect the positioning operation of the ventilation panel 207 relative to other components, thereby improving the operational performance of the ventilation panel 207 and preventing improper installation.

In addition, during the installation and removal process of the ventilation panel 207, the damage to the first mounting portion 2069 and the second mounting portion 2079 is relatively small, and the ventilation panel 207 can be repeatedly disassembled and assembled multiple times without affecting the connection reliability between the ventilation panel 207 and the heat dissipation end plate 206. Compared with traditional connection structures such as screw connections and buckles, the ventilation panel 207 and the heat dissipation end plate 206 of the embodiment of the present disclosure have better reliability after repeated disassembly and assembly.

It should be noted that the magnetic component 20691 and the magnetic attachment piece 20791 can attract each other through magnetic force, facilitating the installation and removal of the ventilation panel 207, thereby enhancing the convenience of installation and maintenance of the module assembly, reducing the installation and maintenance costs of module assembly, and ultimately improving user experience. In some embodiments of the present disclosure, the magnetic component 20691 is a magnet with magnetic properties, and the magnetic attachment piece 20791 is iron, cobalt, nickel and their alloys suitable for being attracted by the magnetic component 20691. In other embodiments of the present disclosure, the magnetic component 20691 and the magnetic attachment piece 20791 are magnets with opposite poles facing each other.

In some embodiments of the present disclosure, the first mounting portion 2069 includes a first mounting base 20692, the second mounting portion 2079 includes a second mounting base 20792. One of the magnetic component 20691 and the magnetic attachment piece 20791 is fixed to the first mounting base 20692, and the other one is fixed to the second mounting base 20792, so that the magnetic component 20691 and the magnetic attachment piece 20791 are fixed to the ventilation panel 207 and the heat dissipation end plate 206 respectively.

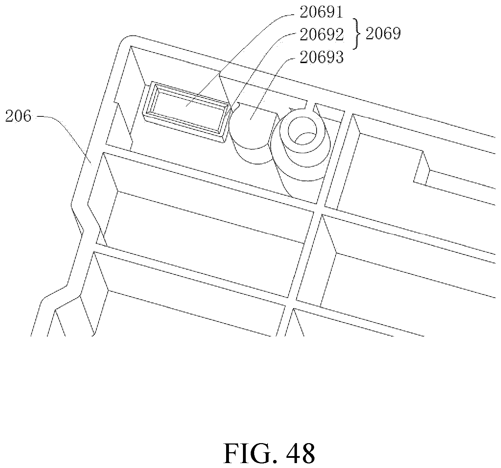

In one embodiment of the present disclosure, as shown in FIG. 47 and FIG. 48, the magnetic component 20691 is fixed to the first mounting base 20692 of the heat dissipation end plate 206, and the magnetic attachment piece 20791 is fixed to the second mounting base 20792 of the ventilation panel 207.

In another embodiment of the present disclosure (not shown in the FIG.), the magnetic attachment piece 20791 is fixed to the first mounting base 20692 of the heat dissipation end plate 206, and the magnetic component 20691 is fixed to the second mounting base 20792 of the ventilation panel 207.

In some embodiments of the present disclosure, both the magnetic component 20691 and the magnetic attachment piece 20791 can be strip-shaped structures. The first mounting base 20692 is constructed as a first mounting groove suitable for fixed engagement with the magnetic component 20691 or the magnetic attachment piece 20791. The magnetic component 20691 or the magnetic attachment piece 20791 can be connected to the first mounting groove by welding connection, buckle connection, bolt connection or adhesive connection, etc., the second mounting base 20792 is constructed as a second mounting groove suitable for fixed engagement with the magnetic component 20691 or the magnetic attachment piece 20791, and the magnetic component 20691 or the magnetic attachment piece 20791 can be connected to the second mounting groove by welding connection, buckle connection, bolt connection or adhesive connection, etc..

In some embodiments of the present disclosure, as shown in FIG. 12, FIG. 47, and FIG. 48, the first mounting base 20692 is located on the side of the heat dissipation end plate 206 towards the energy storage unit 220, and the second mounting base 20792 is located on the side of the ventilation panel 207 towards the heat dissipation end plate 206. After assembly of the heat dissipation end plate 206 and the ventilation panel 207, the first mounting base 20692 and the second mounting base 20792 are concealed.

In some embodiments of the present disclosure, as shown in FIG. 12, FIG. 47, and FIG. 48, the first mounting portion 2069 includes a first positioning component 20693, and the second mounting portion 2079 includes a second positioning component 20793. The first positioning component 20693 is suitable for positioning and mating with the second positioning component 20793, so that the magnetic component 20691 and the magnetic attachment piece 20791 are aligned and attracted to each other, ensuring that the ventilation panel 207 is accurately installed on the heat dissipation end plate 206.

In an embodiment, the positioning engagement between the first positioning component 20693 and the second positioning component 20793 can be a pin-and-hole engagement, or a slide rail and slide groove engagement.

In some embodiments of the present disclosure, one of the first positioning component 20693 and the second positioning component 20793 is a positioning hole, while the other is a positioning pin corresponding to the positioning hole. The positioning hole and pin have a simple structure that is easy to manufacture and highly reliable. When the positioning pin is inserted into the positioning hole, the magnetic component 20691 is aligned directly with the magnetic attachment piece 20791, facilitating the accurate installation of the ventilation panel 207 on the heat dissipation end plate 206, thus reducing the installation difficulty of the ventilation panel 207 and improving its installation efficiency.

In one embodiment of the present disclosure, as shown in FIG. 12, FIG. 47, and FIG. 48, the first positioning component 20693 is a positioning hole, and the second positioning component 20793 is a positioning pin.

In another embodiment of the present disclosure (not shown in the FIG.), the first positioning component 20693 is a positioning pin, and the second positioning component 20793 is a positioning hole.

In some embodiments of the present disclosure, as shown in FIG. 47, the positioning pin is provided with a guiding surface 20794, which is suitable for guiding engagement with the inner wall surface of the positioning hole, thereby facilitating the insertion of the positioning pin into the positioning hole and improving assembly efficiency. The guiding surface 20794 can be a conical guiding surface arranged at the end of the positioning pin towards the positioning hole. When the positioning pin is inserted into the positioning hole, the conical guiding surface enters the positioning hole first, and slides inward along the inner wall surface of the positioning hole, aligning the axis of the positioning pin with the axis of the positioning hole.

In some embodiments of the present disclosure, the cross-sectional shape of the positioning pin includes: at least one of rectangular, circular, T-shaped, and cross-shaped. When the cross-section of the positioning pin is circular, the positioning pin and the positioning hole mated with the positioning pin are convenient for processing and manufacturing. When the cross-section of the positioning pin is rectangular, T-shaped, or cross-shaped, the positioning pin can be prevented from rotating or shaking in the positioning hole, thereby improving the reliability of the connection between the ventilation panel 207 and the heat dissipation end plate 206. It should be noted that the cross-section of the positioning pin is the projection of the positioning pin on a plane perpendicular to its installation direction.

In some embodiments of the present disclosure, the ventilation panel 207 is provided with multiple second mounting portions 2079, such as 4 or 8, which are spaced apart along the circumference of the ventilation panel 207. The heat dissipation end plate 206 is provided with multiple first mounting portions 2069 corresponding one-to-one to the multiple second mounting portions 2079, thereby facilitating the improvement of the reliability of the connection between the ventilation panel 207 and the heat dissipation end plate 206 and preventing the ventilation panel 207 from falling off.

In some embodiments of the present disclosure, as shown in FIG. 47, the ventilation panel 207 includes a panel frame 2071 and a ventilation grill 2072 fixed to the panel frame 2071. The second mounting portions 2079 are arranged on the panel frame 2071 and the panel frame 2071 can be fixed to the heat dissipation end plate 206 through the second mounting portions 2079. The ventilation grill 2072 is hollowed out and can form an air duct, allowing the airflow blown out or sucked in by the driving fan 2061 to pass through the ventilation grill 2072, ensuring the heat dissipation effect of the energy storage module 201. At the same time, the ventilation grille 2072 can also protect the heat dissipation end plate 206, preventing foreign objects from entering the driving fan 2061 and the energy storage unit 220, thus ensuring the safety and reliability of the energy storage module 201.

It should be noted that, compared to the service life of the energy storage unit, the driving fan 2061 is a consumable part. When the driving fan 2061 needs maintenance or replacement due to failure, removing the ventilation panel 207 will expose the driving fan 2061 located on the heat dissipation end plate 206. The disassembly and assembly direction of the driving fan 2061 on the heat dissipation end plate 206 is located on the side of the heat dissipation end plate 206 that faces away from the energy storage unit 220. In other words, the disassembly and assembly direction of the driving fan 2061 is located on the side of the heat dissipation end plate 206 towards the ventilation panel 207. This allows maintenance or replacement of the driving fan 2061 without having to remove the heat dissipation end plate 206, thereby improving the convenience of module assembly maintenance. As shown in FIG. 12, the driving fan 2061 is installed on the side of the heat dissipation end plate 206 that faces away from the energy storage unit 220 through a plurality of second fasteners 20611, which can be bolts. According to another embodiment of the present disclosure, the energy storage cabinet 200 includes the module assembly of the aforementioned embodiment.

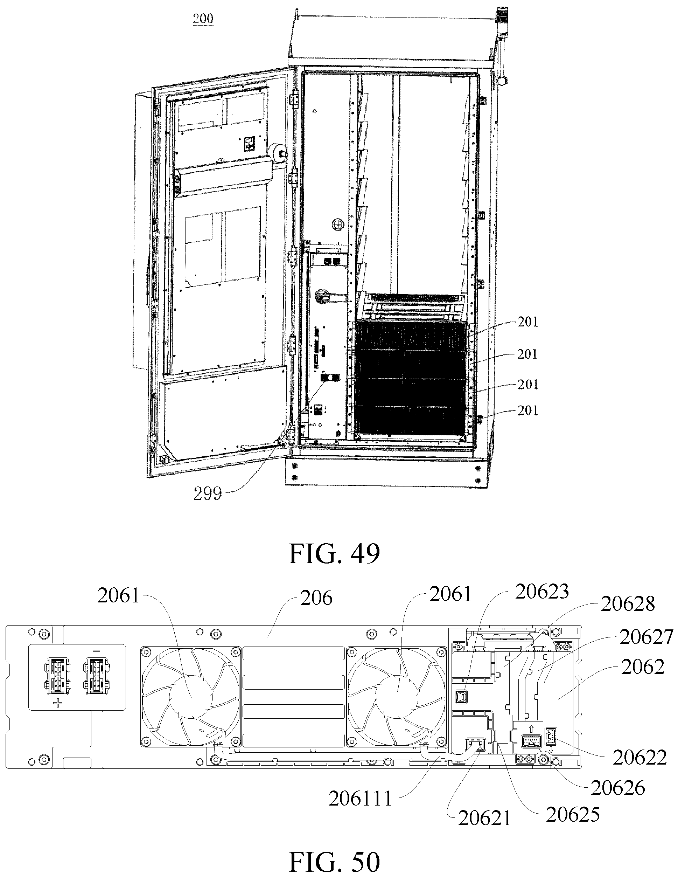

As shown in FIG. 49 and FIG. 30, multiple module assemblies can be arranged within the energy storage cabinet 200, and electrical connections are required between the energy storage modules 201 of these module assemblies. The connection terminals 202 for electrical connection of each energy storage module 201 can be at least partially penetrating through the heat dissipation end plate 206. The connection terminals 202 of adjacent two energy storage modules 201 can be connected by an electrical connection assembly 100. The ventilation panel 207 can shield the connection terminals 202 and at least part of the electrical connection assembly 100, preventing personnel from touching them, reducing the risk of electric shock. At the same time, when the number of energy storage modules 201 in the energy storage cabinet 200 needs to be increased or decreased, the connection terminals 202 on the heat dissipation end plate 206 can be exposed by removing the ventilation panel 207, facilitating the assembly and disassembly of the electrical connection assembly 100 and thus improving the convenience of maintenance of the energy storage cabinet 200. In an embodiment, the heat dissipation end plates 206 of each energy storage module 201 within the energy storage cabinet 200 can be arranged towards the cabinet door of the energy storage cabinet 200 to facilitate the disassembly and assembly of the ventilation panel 207 and the electrical connection assembly 100.

According to the energy storage cabinet 200 of the embodiment of the present disclosure, a heat dissipation end plate 206 is equipped with in its module assembly. The heat dissipation end plate 206 is provided with a driving fan 2061. The ventilation panel 207 is provided on the outside of the heat dissipation end plate 206. The ventilation panel 207 ensures the heat dissipation effect of the module assembly and prevents foreign objects from entering. The ventilation panel 207 can also improve the convenience of maintaining the module assembly, thereby enhancing its market competitiveness.

FIG. 49 to FIG. 52 will provide a detailed depiction of the energy storage cabinet 200 according to the embodiment of the present disclosure.

Referring to FIG. 49 to FIG. 52, the energy storage cabinet 200 includes: an energy storage module 201 and a high-voltage power distribution box:
The energy storage module 201 includes a driving fan 2061 and an information collector (BIC) 2062. The information collector 2062 can sample parameters such as voltage and temperature of the battery cells in the energy storage module 201. The battery cells will generate heat during charging and discharging, and the driving fan 2061 can be used for cooling the battery cells to maintain them at an appropriate operating temperature. The information collector 2062 includes an integrated output terminal 20621, a signal input terminal 20622 and a power supply input terminal 20623. The integrated output terminal 20621 is connected to both the signal input terminal 20622 and the power supply input terminal 20623. The driving fan 2061 is connected to the integrated output terminal 20621, and the information collector 2062 supplies power and provides control signals to the driving fan 2061 through the integrated output terminal 20621.

The high-voltage power distribution box 299 (PDU) includes a signal lead-out terminal and a power supply lead-out terminal. The signal lead-out terminal is connected to the signal input terminal 20622. The high-voltage power distribution box 299 provides control signals to the signal input terminal 20622 through the signal lead-out terminal. The power supply lead-out terminal is connected to the power supply input terminal 20623, and the high-voltage power distribution box 299 supplies power to the power supply input terminal 20623 through the power supply lead-out terminal. The high-voltage power distribution box 299 can generate control signals for controlling the driving fan 2061 based on the temperature of the battery cells. The control signal can be output from the signal lead-out terminal, flow into the information collector 2062 through the signal input terminal 20622, and then transmitted to the driving fan 2061 via the integrated output terminal 20621. This process enables the regulation of the rotational speed of the driving fan 2061, ensuring that it meets the heat dissipation requirements of the battery cell. At the same time, the high-voltage power distribution box 299 also supplies power to the driving fan 2061. The power supply current is output from the power supply lead-out terminal and flows into the information collector 2062 through the power supply input terminal 20623. Subsequently, it is transmitted to the driving fan 2061 via the integrated output terminal 20621, realizing power supply to the driving fan 2061.

It should be noted that the construction of the information collector 2062 can be a printed circuit board (PCB) and electronic components electrically connected on it. The integrated output terminal 20621, the signal input terminal 20622, and the power supply input terminal 20623 can all be sockets on the printed circuit board. The signal input terminal 20622 and the integrated output terminal 20621 are connected through the second internal conductive line in the printed circuit board, and the power supply input terminal 20623 and the integrated output terminal 20621 are connected through the third internal conductive line in the printed circuit board. The integrated output terminal 20621 can transmit both power supply current and control signals to the driving fan 2061. In an embodiment, the second and third internal conductive lines may be copper foil within the printed circuit board.

It can be understood that the information collector 2062 integrates part of the external line that supplies power to the driving fan 2061 and part of the external line that transmits the control information of the driving fan 2061, and outputs the power supply current and control signal through an integrated output terminal 20621, thereby helping to reduce the complexity of external lines between the high-voltage power distribution box 299 and the energy storage module 201, and facilitating the layout and maintenance of the energy storage cabinet 200.

In some embodiments of the present disclosure, the energy storage module 201 further includes battery cells and a heat dissipation end plate 206. The heat dissipation end plate 206 is located on one side of the battery cell. Both the driving fan 2061 and the information collector 2062 are located on the heat dissipation end plate 206. The driving fan 2061 can be connected to the integrated output terminal 20621 through the external integrated line 206111, so that the driving fan 2061 receives the power supply current and control signals. The driving fan 2061 and the information collector 2062 can be arranged adjacent to each other to reduce the length of the external integrated line 206111. In addition, the energy storage module 201 can be equipped with one or more driving fans 2061 based on the heat dissipation requirements of the battery cells, all of which can be installed on the heat dissipation end plate 206. Furthermore, multiple driving fans 2061 on the heat dissipation end plate 206 can be connected to the integrated output terminal 20621 via the same external integrated line 206111, thus further reducing the complexity of the external line in the energy storage cabinet 200.

According to the energy storage cabinet 200 of the embodiment of the present disclosure, both the power supply current and the control signals of the driving fan 2061 pass through the information collector 2062 and are transmitted to the driving fan 2061 through the integrated output terminal 20621 of the information collection. This arrangement is conducive to reducing the complexity of external line in the energy storage cabinet 200 and facilitating its assembly, inspection, and maintenance.

In some embodiments of the present disclosure, as shown in FIG. 49 and FIG. 50, the energy storage cabinet 200 includes a plurality of energy storage modules 201 stacked along a first direction, and the information collectors 2062 of each energy storage module 201 are aligned in the first direction. The power supply input terminals 20623 of each energy storage module 201 are connected to the power supply lead-out terminal via a first external power supply line, which facilitates the layout of the first external power supply lines within the energy storage cabinet 200 and reduces the bending of the first external power supply line.

The first direction can be the height direction of the energy storage cabinet 200. That is to say, multiple energy storage modules 201 within the energy storage cabinet 200 can be stacked along the height direction of the energy storage cabinet 200, and the heat dissipation end plates 206 with the driving fans 2061 and information collectors 2062 of each energy storage module 201 face the same direction and are aligned along the stacking direction. This arrangement benefits the layout of the first external power supply line within the energy storage cabinet 200, reducing the bending of the first external power supply line.

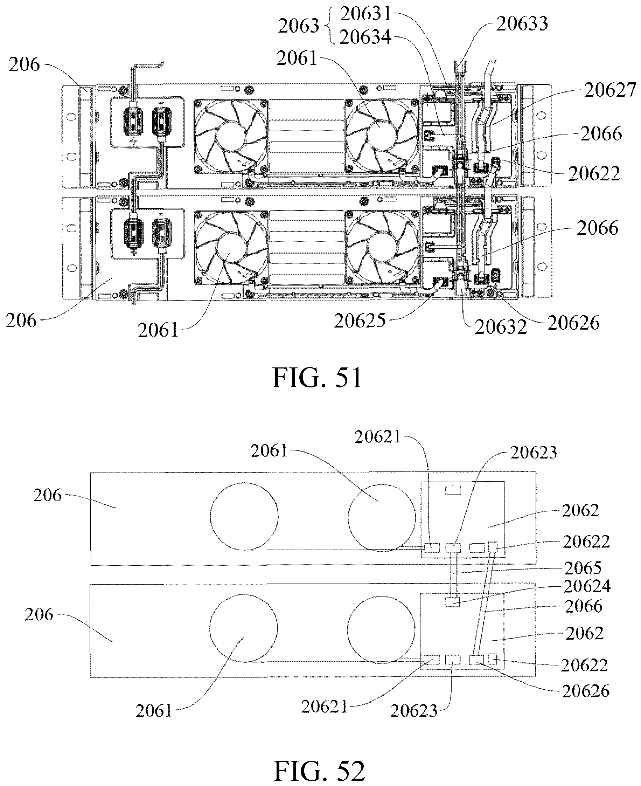

In some embodiments of the present disclosure, as shown in FIG. 51, the first external power supply line includes a plurality of power supply branches 2063, and the number of power supply branches 2063 corresponds to the number of energy storage modules 201. In other words, the number of power supply branches 2063 is the same as the number of energy storage modules 201. Each power supply branch 2063 includes a branch main-line 20631 and a branch sub-line 20634 connected in parallel with the branch main-line 20631. The branch main-lines 20631 of multiple power supply branches 2063 are connected in sequence to form a main power supply circuit. The branch sub-lines 20634 of multiple power supply branches 2063 are respectively connected to corresponding power supply input terminals 20623, thereby achieving the parallel connection of the driving fans 2061 on each energy storage module 201 with the main power supply circuit.

It can be understood that the number of energy storage modules 201 in the energy storage cabinet 200 can be adjusted according to the energy storage demand. The first external power supply line is divided into detachable multiple power supply branches 2063, and the number of power supply branches 2063 can correspond to the number of energy storage modules 201. This arrangement ensures that when there are fewer energy storage modules 201 within the energy storage cabinet 200, the redundancy and waste of the first external power supply line can be avoided, thereby reducing the cost of the energy storage cabinet 200 and the complexity of external line in the energy storage cabinet 200 and facilitating its assembly, inspection, and maintenance.

In some embodiments of the present disclosure, as shown in FIG. 51, a male connector 20632 is provided at one end of the branch main-line 20631, and a female connector 20633 is provided at the other end. Among the adjacent two branch main-lines 20631, the male connector 20632 of one branch main-line 20631 is plugged into the female connector 20633 of the other branch main-line 20631, which facilitates the installation, disassembly, and maintenance of multiple branch main-lines 20631.

In some embodiments of the present disclosure, as shown in FIG. 50 and FIG. 51, the information collector 2062 also includes a clamping seat 20625, and the male connector 20632 and/or the female connector 20633 are suitable for being fixed with the clamping seat 20625. In other words, either the male connector 20632 or the female connector 20633 is suitable for being fixed with the clamping seat 20625, or both the male connector 20632 and the female connector 20633 are suitable for being fixed with the clamping seat 20625, thereby facilitating the control of the routing of the first external power supply line and avoiding heat generation and signal interference caused by the cross of the first external power supply line. At the same time, it can also prevent the male connector 20632 and the female connector 20633 from loosening at the connection point, and improve the reliability of the plug-in connection between the male connector 20632 and the female connector 20633. In an embodiment, the clamping seat 20625 can be fixed to the outer side of the printed circuit board of the information collector 2062.

In some embodiments of the present disclosure, the information collector 2062 further includes a first fuse, which is connected in series in the circuit between the power supply input terminal 20623 and the integrated output terminal 20621, thereby providing overload protection for the driving fan 2061. When the current between the power supply input terminal 20623 and the integrated output terminal 20621 abnormally rises to the first preset current threshold, the electrical connection between the power supply input terminal 20623 and the integrated output terminal 20621 is disconnected, thereby enhancing the service life and reliability of the driving fan 2061.

In some embodiments of the present disclosure, the first fuse is a self-recovery fuse. When a short circuit or overcurrent occurs in the circuit between the power supply input terminal 20623 and the integrated output terminal 20621, a large current flowing through the first fuse causes the first fuse to form a high-resistance state, thereby limiting and protecting the circuit between the power supply input terminal 20623 and the integrated output terminal 20621. After the fault is eliminated, the first fuse returns to a low-resistance state, allowing the circuit between the power supply input terminal 20623 and the integrated output terminal 20621 to conduct, thereby avoiding manual replacement of the first fuse and reducing the maintenance cost of the energy storage cabinet 200.

In other embodiments of the present disclosure, as shown in FIG. 52, the information collector 2062 further includes a power supply output terminal 20624 and a first internal conductive line. The power supply output terminal 20624 is connected to the power supply input terminal 20623 through the first internal conductive line. The integrated output terminal 20621 is connected in parallel with the first internal conductive line. The energy storage cabinet 200 includes a plurality of energy storage modules 201 stacked along a first direction, and the information collector 2062 of each energy storage module 201 is aligned in the first direction. The power supply input terminal 20623 of one of the multiple energy storage modules 201 is connected to the power supply lead-out terminal, while the power supply input terminals 20623 of the remaining energy storage modules 201 are connected to the power supply output terminals 20624 of the upstream adjacent energy storage modules 201 through second external power supply line 2065, reducing the length of the second external power supply line 2065 and facilitating their layout in the energy storage cabinet 200. It can be understood that the upstream adjacent energy storage module 201 refers to the adjacent energy storage module 201 through which the power supply current flows first.

It should be noted that the construction of the information collector 2062 can be a printed circuit board (PCB) and electronic components electrically connected on it. The integrated output terminal 20621, the signal input terminal 20622, the power supply input terminal 20623, and the power supply output terminal 20624 can all be sockets on the printed circuit board. The power supply output terminal 20624 and the power supply input terminal 20623 are connected through the first internal conductive line in the printed circuit board, and the signal input terminal 20622 and the integrated output terminal 20621 are connected through the second internal conductive line in the printed circuit board. The integrated output terminal 20621 is connected in parallel with the first internal conductive line through the third internal conductive line. The integrated output terminal 20621 can transmit both power supply current and control signals to the driving fan 2061. In an embodiment, the first internal conductive line, the second internal conductive line and the third internal conductive line may be copper foil within the printed wiring board.

The multiple energy storage modules 201 within the energy storage cabinet 200 can be stacked along the height direction of the energy storage cabinet 200, and the heat dissipation end plates 206 with the driving fans 2061 and information collectors 2062 of each energy storage module 201 face the same direction and are aligned along the stacking direction. This arrangement benefits the layout of the second external power supply line within the energy storage cabinet 200, reducing the bending of the second external power supply line. At the same time, the number of second external power supply lines 2065 can be the same as the number of energy storage modules 201. Two ends of the second external power supply line 2065 are respectively connected to the power supply input terminal 20623 and the power supply output terminal 20624 of the adjacent energy storage module 201, allowing the first internal conductive lines in the adjacent energy storage module 201 to be connected and forming the main power supply circuit. At the same time, the integrated output terminal 20621 of each energy storage module 201 is also connected in parallel with the first internal conductive line, enabling the driving fans 2061 on each energy storage module 201 to be connected in parallel with the main power supply circuit.

In some embodiments of the present disclosure, the number of energy storage modules 201 in the energy storage cabinet 200 can be adjusted according to the energy storage demand. The energy storage module 201 closest to the high-voltage power distribution box 299 within the energy storage cabinet 200 can be designated as the most upstream energy storage module. The power supply input terminal 20623 of the most upstream energy storage module is connected to the power supply lead-out terminal, while the power supply input terminal 20623 of the remaining energy storage modules 201 are connected to the power supply output terminal 20624 of their upstream adjacent energy storage modules 201 through the second external power line 2065. The number of the second external power lines 2065 corresponds to the number of energy storage modules 201. This arrangement ensures that when there are fewer energy storage modules 201 within the energy storage cabinet 200, the redundancy and waste of the second external power supply line can be avoided, thereby reducing the cost of the energy storage cabinet 200 and the complexity of external line in the energy storage cabinet 200 and facilitating its assembly, inspection, and maintenance.

For example, the energy storage cabinet 200 contains a first energy storage module, a second energy storage module and a third energy storage module stacked in sequence from bottom to top. The first energy storage module, located at the bottom, is closest to the high-voltage power distribution box 299 and serves as the most upstream energy storage module. The power supply input terminal 20623 of the first energy storage module is connected to the power supply lead-out terminal. The power supply input terminal 20623 of the second energy storage module is connected to the power supply output terminal 20624 of the first energy storage module connected to its upstream through a second external power supply line 2065. Similarly, the power supply input terminal 20623 of the third energy storage module is connected to the power supply output terminal 20624 of the second energy storage module connected to its upstream through another second external power supply line 2065. The power supply current flows sequentially through the information collectors 2062 of the first, second, and third energy storage modules from the power supply lead-out terminal.

Furthermore, as shown in FIG. 52, among the multiple energy storage modules 201 within the energy storage cabinet 200, the power supply output terminal 20624 of one energy storage module 201 is close to the power supply input terminal 20623 of another adjacent energy storage module 201, which is beneficial to reducing the length of the second external power supply line 2065, facilitating the layout of the second external power supply line 2065, and preventing interference between multiple second external power supply lines 2065.

In some embodiments of the present disclosure, the information collector 2062 further includes a second fuse, which is connected in series in the circuit between the power supply input terminal 20623 and the power supply output terminal 20624. This provides overload protection for each information collector 2062 within the main power supply circuit. When the current between the power supply input terminal 20623 and the power supply output terminal 20624 abnormally rises to the second preset current threshold, the second fuse can disconnect the electrical connection between the power supply input terminal 20623 and the power supply output terminal 20624, thereby contributing to the service life and reliability of the second external power supply line 2065.

In some embodiments of the present disclosure, the second fuse is a self-recovery fuse. When a short circuit or overcurrent occurs in the circuit between the power supply input terminal 20623 and the power supply output terminal 20624, a large current flowing through the second fuse causes the second fuse to form a high-resistance state, thereby limiting and protecting the circuit between the power supply input terminal 20623 and the power supply output terminal 20624. After the fault is eliminated, the second fuse returns to a low-resistance state, allowing the circuit between the power supply input terminal 20623 and the power supply output 20624 to be conducted, thereby avoiding manual replacement of the second fuse and reducing the maintenance cost of the energy storage cabinet 200.

In some embodiments of the present disclosure, as shown in FIG. 50, FIG. 51, and FIG. 52, the information collector 2062 also includes a signal output terminal 20626. Among multiple energy storage modules 201, the signal input terminal 20622 of one information collector 2062 is connected to the signal lead-out terminal, while the signal input terminals 20622 of the remaining information collectors 2062 are connected to the signal output terminals 20626 of the upstream adjacent energy storage modules 201 through external signal lines 2066. This arrangement reduces the length of the external signal lines 2066 and facilitates the layout of the second external power supply lines 2065 within the energy storage cabinet 200. It can be understood that the upstream adjacent energy storage module 201 refers to the adjacent energy storage module 201 through which the control information flows first.

It can be understood that the number of energy storage modules 201 in the energy storage cabinet 200 can be adjusted according to the energy storage demand. The energy storage module 201 closest to the high-voltage power distribution box 299 within the energy storage cabinet 200 can be designated as the most upstream energy storage module. The signal input terminal 20622 of the most upstream energy storage module is connected to the signal lead-out terminal, while the signal input terminals 20622 of the remaining energy storage modules 201 are connected to the signal output terminals 20626 of their upstream adjacent energy storage modules 201 via the external signal lines 2066. The number of external signal lines 2066 corresponds to the number of energy storage modules 201. This arrangement ensures that when there are fewer energy storage modules 201 in the energy storage cabinet 200, the redundancy and waste of the external signal lines 2066 can be avoided, thereby reducing the cost of the energy storage cabinet 200 and the complexity of external lines in the energy storage cabinet 200 and facilitating its assembly, inspection, and maintenance.

For example, the energy storage cabinet 200 contains a first energy storage module, a second energy storage module and a third energy storage module stacked in sequence from bottom to top. The first energy storage module, located at the bottom, is closest to the high-voltage power distribution box 299 and serves as the most upstream energy storage module. The signal input terminal 20622 of the first energy storage module is connected to the signal lead-out terminal. The signal input terminal 20622 of the second energy storage module is connected to the signal output terminal 20626 of the first energy storage module connected to its upstream via an external signal line 2066. Similarly, the signal input terminal 20622 of the third energy storage module is connected to the signal output terminal 20626 of the upstream second energy storage module via another external signal line 2066. Control information can be transmitted from the signal lead-out terminal to the information collectors 2062 of the first, second, and third energy storage modules.

In some embodiments of the present disclosure, the control signal includes ID information and control information. When receiving and transmitting the control signal, the information collector 2062 of each energy storage module 201 can process the control signal to identify whether the ID information in the control signal matches its own. If the ID information matches, the control information corresponding to the ID information will be sent to the driving fan 2061 connected to it. If the ID information does not match, no response will be made.

For example, when the high-voltage power distribution box 299 needs to control the driving fan 2061 of the first energy storage module to increase the rotational speed by 5%, the high-voltage power distribution box 299 generates a first control signal. The first control signal includes the ID information of the information collector 2062 of the first energy storage module, as well as the control information to increase the rotational speed of the driving fan 2061 by 5%. The first control signal can be broadcast to the information collectors 2062 of the first, second, and third energy storage modules. The information collector 2062 of the first energy storage module recognizes that the ID information matches and sends the corresponding control information to the driving fan 2061 connected to its integrated output terminal 20621, thus increasing the rotational speed of the driving fan 2061 of the first energy storage module by 5%.

In some embodiments of the present disclosure, as shown in FIG. 50 and FIG. 51, the information collector 2062 also includes a first clamping groove 20627, which can be used for fixing the external signal line 2066, facilitating controlling the routing of the external signal line 2066.

In some embodiments of the present disclosure, as shown in FIG. 50 and FIG. 51, the information collector 2062 further includes a second clamping groove 20628, which can be used for fixing the power supply branch 2063, facilitating controlling the routing of the power supply branch 2063.

In some embodiments of the present disclosure, a switching power supply can be integrated into the high-voltage power distribution box 299, which can convert 220V AC mains electricity through ACDC conversion, enabling the power supply lead-out terminal to output 24V DC power.

In other embodiments of the present disclosure, a BMS (Battery Management System) mainboard can be integrated into the high-voltage power distribution box 299. The BMS mainboard can take samples from the battery cells of the energy storage module 201 and output 24V DC power through the power supply lead-out terminal.

In some embodiments of the present disclosure, as shown in FIG. 49, the high-voltage power distribution box 299 is provided on the left part of the energy storage cabinet 200 (i.e., the left side of the energy storage module 201. The high-voltage power distribution box 299 can route the main power supply line and main control line from below the energy storage modules 201. The main power supply line is equipped with a power supply lead-out terminal, and the main control line is equipped with a signal lead-out terminal.

In some embodiments of the present disclosure, as shown in FIG. 33 and FIG. 35, the energy storage cabinet 200 can be provided with a control switch 1003. The control switch 1003 is provided in the cabinet 60 and communicates with the control unit 1000. When the opening and closing door 62 is opened, the control switch 1003 is triggered to instruct the control unit 1000 to shut down the energy storage cabinet 200. When the opening and closing door 62 is opened while the energy storage cabinet 200 is still operating, it can easily lead to a risk of electric shock for operators due to misoperations. In this disclosure, by installing a control switch 1003, when the opening and closing door 62 is opened, the control switch 1003 is triggered and its state change is detected by the control unit 1000. In response, the control unit 1000 shuts down the energy storage cabinet 200. This prevents the situation where the energy storage cabinet 200 continues to operate after the opening and closing door 62 is opened, thereby enhancing the operational safety of the energy storage cabinet 200.

In some embodiments of the present disclosure, the energy storage cabinet 200 can further include: a smoke detection device, the smoke detection device can be configured as a smoke sensor. The smoke detection device is provided in the cabinet and communicates with the control unit 1000. When the smoke detection device detects smoke, the control unit 1000 shuts down the energy storage cabinet 200. When a fire occurs inside the energy storage cabinet 200, the smoke sensor will send a signal to the control unit 1000, which will send an alarm to the upper-level system and shut down the energy storage cabinet 200, effectively preventing fires from occurring within the energy storage cabinet 200.

In some embodiments of the present disclosure, as shown in FIG. 33 and FIG. 35, the energy storage cabinet 200 may also include: an audible and visual alarm device 1004, the audible and visual alarm device 1004 is provided outside the cabinet 60 and communicates with the control unit 1000. The control unit 1000 controls the audible and visual alarm device 1004 to issue alarm messages. The audible and visual alarm device 1004 can be an audible and visual alarm. When a fire occurs inside the energy storage cabinet 200, the control unit 1000 shuts down the energy storage cabinet 200. At the same time, the control unit 1000 controls the audible and visual alarm device 1004 to alarm, for example: the audible and visual alarm device 1004 emits an alarm sound and flashing red lights to alert the user that a fire has occurred in the energy storage cabinet 200.

In some embodiments of the present disclosure, as shown in FIG. 33 and FIG. 35, the energy storage cabinet 200 may also include: an emergency stop switch 1005, the emergency stop switch 1005 communicates with the control unit 1000. When the emergency stop switch 1005 is triggered, the control unit 1000 shuts down the energy storage cabinet 200. In case of emergency, when the emergency stop switch 1005 is pressed, the control unit 1000 will be triggered, enabling it to shut down the energy storage cabinet 200, without the need to open the opening and closing door 62.

In some embodiments of the present disclosure, the inner surface of the cabinet 60 is affixed with thermal insulation cotton, and the thickness of the thermal insulation cotton is 30mm to 50mm. Further, the thickness of the thermal insulation cotton can be set as 40mm. By setting up the thermal insulation cotton, the overall heat dissipation coefficient of the energy storage cabinet 200 can be reduced. Further, reinforcing plates 1006 can be installed on the opening and closing door 62 to protect the thermal insulation cotton and enhance the strength of the opening and closing door 62.

In some embodiments of the present disclosure, the cabinet 60 can be made of explosion-proof panels. For example, the entire structure of the cabinet 60 can be made of explosion-proof panels, or part of the structure of the cabinet 60 can be made of explosion-proof panels. Further, the top panel of the cabinet 60 is made of explosion-proof panels to protect personnel safety in extreme situations. In some embodiments, the explosion-proof panels can be replaced with ordinary sheet metal, or a top panel made of other process materials without explosion-proof functions.

In some embodiments of the present disclosure, the energy storage cabinet 200 may also include: caster wheels, the caster wheels are mounted at the lower end of the cabinet 60. The caster wheels are used for supporting the cabinet 60 of the energy storage cabinet 200, facilitating the movement of the cabinet 60 to the braking area. Further, the energy storage cabinet 200 may also include: a decorative cover 1007. The decorative cover 1007 is arranged around the lower end of the cabinet 60 to conceal the caster wheels. This arrangement can prevent the caster wheels from being exposed externally and improve the appearance consistency of the energy storage cabinet 200. It can also prevent objects from entering the bottom of the cabinet 60.

In the description of this specification, the terms "one embodiment," "some embodiments," "illustrative embodiments," "examples," "specific examples," or "some examples" are meant to indicate that the specific features, structures, materials, or characteristics described in connection with the embodiment or example are included in at least one embodiment or example of the present disclosure. These terms are not necessarily referring to the same embodiment or example in this specification. Moreover, the specific features, structures, materials, or characteristics described can be combined in any suitable manner in one or more embodiments or examples.

Although embodiments of the present disclosure have been shown and described, it is understood by those skilled in the art that various changes, modifications, substitutions, and alterations may be made without departing from the principles and spirit of the present disclosure, and the scope of the present disclosure is defined by the appended claims and their equivalents.

## Claims

1. An energy storage cabinet (200), comprising:
a cabinet (60), the cabinet (60) comprising a cabinet body (61) and an opening and closing door (62), the cabinet body (61) defining an installation cavity with one end open, a first space (40) and a second space (41) being formed in the installation cavity, the opening and closing door (62) being used for opening or closing the installation cavity;
a plurality of energy storage modules (201), the energy storage modules (201) being arranged in the first space (40), the energy storage modules (201) being stacked in a first direction of the energy storage cabinet (200), the first space (40) and the second space (41) being arranged side by side in a second direction perpendicular to the first direction; and
a control unit (1000), the control unit (1000) being arranged in the second space (41) and the control unit (1000) being electrically connected to the energy storage module (201).

2. The energy storage cabinet (200) according to claim 1, further comprising a control switch (1003), the control switch (1003) being arranged in the cabinet (60) and communicating with the control unit (1000), when the opening and closing door (62) is opened, the control switch (1003) being triggered to cause the control unit (1000) to shut down the energy storage cabinet (200).

3. The energy storage cabinet (200) according to claim 1 or 2, further comprising a smoke detection device, the smoke detection device being arranged in the cabinet (60) and communicating with the control unit (1000), when the smoke detection device detects smoke, the control unit (1000) being configured to control shut down of the energy storage cabinet (200).

4. The energy storage cabinet (200) according to any one of claims 1 to 3, further comprising an emergency stop switch (1005), the emergency stop switch (1005) communicating with the control unit (1000), when the emergency stop switch (1005) is triggered, the control unit (1000) being configured to shut down the energy storage cabinet (200).

5. The energy storage cabinet (200) according to any one of claims 1 to 4, further comprising an audible and visual alarm device (1004), the audible and visual alarm device (1004) being located on an exterior of the cabinet (60) and communicating with the control unit (1000), the control unit (1000) being configured to control the audible and visual alarm device (1004) to issue alarm messages.

6. The energy storage cabinet (200) according to any one of claims 1 to 5, wherein an inner surface of the cabinet (60) is affixed with thermal insulation cotton.

7. The energy storage cabinet (200) according to any one of claims 1 to 6, further comprising: caster wheels, the caster wheels being installed at a lower end of the cabinet (60).

8. The energy storage cabinet (200) according to any one of claims 1 to 7, wherein the second space (41) is suitable for guiding air into the first space (40).

9. The energy storage cabinet (200) according to claim 8, wherein the first space (40) communicates with the second space (41).

10. The energy storage cabinet (200) according to claim 9, wherein the energy storage cabinet is provided with a first connecting hole (44), the first connecting hole (44) connects the first space (40) and the second space (41).

11. The energy storage cabinet (200) according to claim 10, wherein there are a plurality of first connecting holes (44), the plurality of first connecting holes (44) are arranged along the first direction, and each energy storage module (201) corresponds to at least one first connecting hole (44).

12. The energy storage cabinet (200) according to claim 10, wherein a third space (42) is formed within the first space (40), and the third space (42) communicates with the second space (41) through the first connecting holes (44), and the third space (42) has a second connecting hole that is connected to the first space (40), and the air in the second space (41) is suitable for flowing into the first space (40) through the third space (42).

13. The energy storage cabinet (200) according to claim 12, wherein there are a plurality of second connecting holes, the plurality of second connecting holes arranged along the first direction, and each first connecting hole (44) corresponds to one of the second connecting holes.

14. The energy storage cabinet (200) according to claim 13, wherein a plurality of sub-spaces are formed within the third space (42), a plurality of sub-spaces, a plurality of first connecting holes (44) and a plurality of second connecting holes correspond one-to-one, each sub-space is connected to its corresponding first connecting hole (44) and second connecting hole.

15. The energy storage cabinet (200) according to claim 12, wherein the number of the second connecting holes is one and the one second connecting hole is located near the middle of the third space (42) along the first direction.

16. The energy storage cabinet (200) according to any one of claims 12 to 15, wherein a first channel (43) is formed within the installation cavity, the first channel (43) and the first space (40) are arranged along the first direction, and the first channel (43) is connected to the first space (40) and/or the third space (42).

17. The energy storage cabinet (200) according to claim 16, further comprising:
an air conditioner (50), the air conditioner (50) being installed within the cabinet (60), wherein the air conditioner (50) comprises an air outlet (51) and an air inlet (52), the air outlet (51) is connected to the second space (41) and/or the first channel (43), and the air inlet (52) is connected to the first space (40).

18. The energy storage cabinet (200) according to claim 17, wherein the cabinet body (61) forms a first opening that communicates with the first space (40), and the first opening is positioned opposite to the air inlet (52), the cabinet body (61) also forms a second opening that communicates with the second space (41), and the second opening is positioned opposite to the air outlet (51), and the first opening and the second opening are separated by a spacer.

19. The energy storage cabinet (200) according to any one of claims 1 to 18, further comprising a positive power line (1001) and a negative power line (1002), wherein one end of the positive power line (1001) is connected to the control unit (1000), and the other end of the positive power line (1001) is suitable for plugging into a connection terminal (202) of the energy storage module (201);
one end of the negative power line (1002) is connected to the control unit (1000), and the other end of the negative power line (1002) is suitable for plugging into the connection terminal (202) of the energy storage module (201).

20. The energy storage cabinet (200) according to any one of claims 1 to 19, wherein the energy storage module (201) comprises an energy storage unit (220), the energy storage unit (220) comprises a plurality of battery cells (208) arranged sequentially along a thickness direction of the battery cells (208), and a first air duct (210) extending along a third direction is formed between at least two adjacent battery cells (208), the third direction is orthogonal to both the first direction and the second direction, and the first air duct (210) is connected to the first space (40).

21. The energy storage cabinet (200) according to claim 20, wherein the energy storage module (201) further comprises:
a first side plate (211) and a second side plate (212), the energy storage unit (220) being disposed between the first side plate (211) and the second side plate (212);
a support beam (219), the support beam (219) extending along the thickness direction of the battery cell (208) and connecting the first side plate (211) and the second side plate (212), so that the first side plate (211) and the second side plate (212) clamp the energy storage unit (220), and at least one side of the energy storage unit (220) in a width direction of the battery cell (208) being provided with the support beam (219).

22. The energy storage cabinet (200) according to claim 21, wherein the energy storage module (201) further comprises a top cover (213) and a bottom cover (214), the top cover (213) and the bottom cover (214) are both connected to the first and second side plates, and the energy storage unit (220) is located between the top cover (213) and the bottom cover (214), and a second air duct (216) is formed between the top cover (213) and the energy storage unit (220) and/or between the bottom cover (214) and the energy storage unit (220) through a separation effect of the support beam (219), and the second air duct (216) is connected to the first space (40).

23. The energy storage cabinet (200) according to claim 22, wherein the support beam (219) is in contact with a surface of the energy storage unit (220) close to the top cover (213) and the top cover (213), and/or the support beam (219) is in contact with a surface of the energy storage unit (220) close to the bottom cover (214) and the bottom cover (214), so as to divide the second air duct (216) into a plurality of sub-air ducts (217), and the support beam (219) has an air passage (218) that connects two adjacent sub-air ducts (217).

24. The energy storage cabinet (200) according to claim 22, wherein the energy storage module (201) is provided with an air supply hole (215), which connects the first space (40) and the second air duct (216).

25. The energy storage cabinet (200) according to claim 20, wherein the energy storage module (201) further comprises a heat sink (209), the heat sink (209) defines the first air duct (210), the plurality of battery cells (208) form a plurality of battery cell groups, each battery cell group comprises at least one battery cell (208), and the heat sink (209) is disposed between two adjacent battery cell groups.

26. The energy storage cabinet (200) according to claim 22, wherein the energy storage module (201) further comprises a driving fan (2061), the driving fan (2061) is located at one end of the energy storage unit (220) and spaced apart from the energy storage unit (220) in a length direction of the battery cell (208), and the driving fan (2061) is used for driving air to flow along the first air duct (210) in the first air duct (210).

27. The energy storage cabinet (200) according to claim 26, wherein the energy storage module (201) further comprises a temperature detection component, the temperature detection component is used for detecting a temperature of the energy storage module (201), both the driving fan (2061) and the temperature detection component are suitable for connecting to a battery management system of the energy storage module (201), the battery management system is used for controlling an operating mode of the driving fan (2061) by receiving temperature information detected by the temperature detection component.

28. The energy storage cabinet (200) according to claim 26, wherein the energy storage module (201) further comprises a heat dissipation end plate (206), the driving fan (2061) is mounted on the dissipation end plate (206), the heat dissipation end plate (206) is fixedly connected to the first side plate (211) and/or the second side plate (212).

29. The energy storage cabinet (200) according to claim 28, wherein the heat dissipation end plate (206) is provided with a positive connection terminal (2029) and a negative connection terminal (2030), the positive connection terminal (2029) is connected to a total positive output pole of the energy storage unit (220), and the negative connection terminal (2030) is connected to a total negative output pole of the energy storage unit (220), in the second direction, the positive connection terminal (2029) and the negative connection terminal (2030) are arranged close to the same side of the heat dissipation end plate (206).

30. The energy storage cabinet (200) according to claim 29, wherein the heat dissipating end plate (206) defines a mounting groove (2063), and the positive connection terminal (2029) and the negative connection terminal (2030) are both located in the mounting groove (2063);
the heat dissipating end plate (206) further defines a fool-proof slot (203), the fool-proof slot (203) communicates with the mounting groove (2063), the fool-proof slot (203) is used for wiring;
the heat dissipating end plate (206) further defines a wiring slot (2064), the wiring slot (2064) communicates with the mounting groove (2063), and the fool-proof slot (203) and the wiring slot (2064) are respectively located on two sides of the mounting groove (2063).

31. The energy storage cabinet (200) according to claim 28, wherein the energy storage module (201) further comprises a ventilation panel (207), the ventilation panel (207) is located on a side of the driving fan (2061) away from the energy storage unit (220), and the ventilation panel (207) is provided with air outlet holes (20722).

32. The energy storage cabinet (200) according to claim 31, wherein the ventilation panel (207) comprises a panel frame (2071) and a ventilation grille (2072) fixed to the panel frame (2071), the ventilation grille (2072) comprises a plurality of air guide grilles (20721) arranged at intervals, two ends of each air guide grille (20721) are fixed to the panel frame (2071), and the air outlet holes (20722) are formed between two adjacent air guide grilles (20721).

33. The energy storage cabinet (200) according to claim 32, wherein a perforation ratio α of the ventilation grille (2072) satisfies the following formula: α ≥ (µV/v)/S1, where µ is 0.9, V is a exhaust air volume per unit time when the driving fan (2061) runs at full power, v is a maximum air speed of the driving fan (2061), and S1 is an effective air outlet area of the driving fan (2061).

34. The energy storage cabinet (200) according to claim 26, wherein the energy storage module (201) further comprises an end plate (2081), the end plate (2081) is disposed at the other end of the energy storage unit (220) and spaced apart from the energy storage unit (220), the end plate (2081) is connected to the top cover (213) and/or the bottom cover (214);
the end plate (2081) is provided with a first air inlet hole (2082) that communicates with the first air duct (210).

35. The energy storage cabinet (200) according to claim 20, wherein a length dimension of the battery cell (208) is E, E satisfies the relationship: 400mm≤E≤1500mm;
a width dimension of the battery cell (208) is F, F satisfies the relationship: 70mm≤F≤150mm;
a thickness dimension of the battery cell (208) is G, G satisfies the relationship: 10mm≤G≤25mm.

36. The energy storage cabinet (200) according to any one of claims 1 to 35, further comprising an electrical connection assembly (100), wherein the electrical connection assembly (100) is used for electrically connecting two of the energy storage modules (201), and the electrical connection assembly (100) is plugged into the energy storage modules (201).

37. The energy storage cabinet (200) according to claim 31, wherein the heat dissipation end plate (206) is provided with a first mounting portion (2069), and the ventilation panel (207) shields the driving fan (2061), the ventilation panel (207) is provided with a second mounting portion (2079) that corresponds and connects to the first mounting portion (2069).

38. The energy storage cabinet (200) according to claim 26, wherein the energy storage module further comprises:
an information collector (2062), wherein the information collector (2062) comprises an integrated output terminal (20621), a signal input terminal (20622), and a power supply input terminal (20623), the integrated output terminal (20621) is connected to the signal input terminal (20622) and the power supply input terminal (20623), the driving fan (2061) is connected to the integrated output terminal (20621), and the information collector (2062) supplies power and provides control signals to the driving fan (2061) through the integrated output terminal (20621);
a high-voltage power distribution box (299), wherein the high-voltage power distribution box (299) comprises a signal lead-out terminal and a power supply lead-out terminal, the signal lead-out terminal is connected to the signal input terminal (20622), and the high-voltage power distribution box provides the control signals to the signal input terminal (20622) through the signal lead-out terminal, the power supply lead-out terminal is connected to the power supply input terminal (20623), and the high-voltage power distribution box supplies power to the power supply input terminal (20623) through the power supply lead-out terminal.

39. The energy storage cabinet (200) according to claim 38, wherein the information collector (2062) of each energy storage module (201) is aligned in the first direction, and the power supply input terminals (20623) of the plurality of energy storage modules (201) are connected to the power supply lead-out terminal through a first external power supply line.

40. The energy storage cabinet (200) according to claim 39, wherein the first external power supply line comprises a plurality of power supply branches (2063), and the number of the power supply branches (2063) corresponds to the number of the energy storage modules (201), each power supply branch (2063) comprises a branch main-line (20631) and a branch sub-line (20634) connected in parallel with the branch main-line (20631), the branch main-lines (20631) of the plurality of power supply branches (2063) are connected sequentially, the branch sub-lines (20634) of the plurality of power supply branches (2063) are respectively connected to the corresponding power supply input terminals (20623).
